# FASCICULE DE BREVET EUROPEEN

(11) **EP 3 017 145 B1**
(45) Date de publication et mention de la délivrance du brevet: **27.02.2019**
(21) Numéro de dépôt: 14752946.5
(22) Date de dépôt: 02.07.2014
(51) Int. Cl.: F01C 9/00, F01C 17/02, F02B 75/36

(54) **MOTEUR A COMBUSTION INTERNE DEUX TEMPS À CHAMBRE SPHÉRIQUE**
ZWEITAKTVERBRENNUNGSMOTOR MIT EINER KUGELFÖRMIGEN KAMMER
TWO-STROKE INTERNAL COMBUSTION ENGINE WITH A SPHERICAL CHAMBER

(30) Priorité: 04.07.2013 FR 1301584
(43) Date de publication de la demande: 11.05.2016
(73) Titulaire: Bonnefous, Edouard, 94160 Saint-Mandé (FR)
(72) Inventeur: Bonnefous, Edouard, 94160 Saint-Mandé (FR)
(86) Numéro de dépôt international: PCT/IB2014/062804
(87) Numéro de publication internationale: WO 2015/001503

(56) Documents cités:
- US-A- 4 802 449
- US-A- 5 012 769
- US-A1- 2008 087 237

## Description

La présente invention concerne l'architecture cinématique et l'agencement d'un moteur thermique, alternatif, à combustion interne.

### ETAT DE L'ART ET AMELIORATIONS APPORTEES PAR L'INVENTION

La majorité des moteurs thermiques à combustion interne disposent de chambre de combustion et de travail du fluide dont le volume varie par le mouvement alternatif d'un piston dans un cylindre. Une rare exception éprouvée industriellement est le moteur Wankel à piston rotatif.

L'état de l'art recense d'autres architectures de moteur thermique ayant une chambre de combustion non conventionnelle, c'est-à-dire ne comportant pas de piston cylindrique en translation dans un cylindre et chambre plutôt compacte, telles que décrites dans les brevets :
- US 5 012 769 A du 7 mai 1991 (Cottingham Brent R [US])
- US 4 802 449 A du 7 février 1989 (Yang Ping [US])
- US 2008/087237 A1 du 17 avril 2008 (Dick Timber [US])

### Rapport surface sur volume

### / Pertes thermiques

La chambre de combustion au Point Mort Haut (PMH) d'un tel agencement classique piston-cylindre présente un ratio surface de paroi sur volume de chambre élevé, en comparaison du minimum géométrique possible offert par la sphère, à savoir environ la moitié, sans considérer les embrèvements ou bols des pistons qui augmentent encore ce ratio.

Les pertes thermiques aux parois de la chambre de combustion et cylindre, d'un moteur thermique à combustion interne classique, représentent environ un tiers du pouvoir calorifique du carburant (pour une cylindrée unitaire « automobile » d'environ 500 cm3). Ainsi, diminuer cette surface, toutes choses égales par ailleurs, permettrait de diminuer les pertes thermiques aux parois et donc d'améliorer le rendement du moteur. Le meilleur de l'état de l'art sur ce point est réalisé par les diesels à pistons opposés (en 2 temps), en diminuant le rapport surface/volume de la chambre de combustion.

### / Forces de pression

Un attelage mobile classique piston-bielle-manivelle, est dimensionné, entre autres, selon les forces d'inerties associées au régime maximum et selon les forces de pression de culasse maximum rencontrées. Cette force de pression de culasse est directement proportionnelle à la surface projetée du piston, selon l'axe cylindre ou dépend dans le même sens, du carré de l'alésage. Ce sont ces forces d'inertie et de pression qui fixent, en proportion approximative avec la course et en partie, la masse de l'attelage mobile et aussi en partie la masse de la culasse, du carter, des cylindres et du bas moteur.

Ainsi, diminuer cette surface projetée du piston, toutes choses égales par ailleurs, permettrait de diminuer les forces de pression et donc de diminuer la masse de l'attelage mobile et d'une partie importante du moteur.

Le moteur selon l'invention, par sa chambre de combustion de forme quasi sphérique au PMH, améliore ces deux points précédents. En effet, à volume donné, la surface des parois de la chambre au PMH et aux environs du PMH est inférieure, jusqu'à environ la moitié au PMH :
- ce qui diminue les pertes thermiques aux parois en fin de compression, lors de la combustion / explosion et au cours de la détente, ce qui augmente le rendement du moteur.
- Ce qui diminue la somme des forces engendrées par la pression sur les parois, comparée à la force de pression que subit une culasse classique plus celle d'un piston classique. Cette diminution est bien présente même si la chambre est formée par les parois de 3 ou 5 ou idéalement 4 faces de piston. Associée à un attelage mobile plus court à cylindrée donnée, cela va dans le sens de l'allègement des parties structurelles travaillantes du moteur et donc dans le sens de l'allègement du moteur complet.

### Diagramme de distribution à cycle de Miller-Atkinson

Le cycle de Miller-Atkinson est parfois mis en oeuvre dans les moteurs à 4 temps pour améliorer le rendement global. Ceci est réalisé selon le moteur : par un retard fermeture admission après le Point Mort Bas (PMB) en laissant refouler les gaz tout juste admis, ou par une avance fermeture admission avant le Point Mort Bas (PMB) en limitant l'admission des gaz, créant ainsi dans les deux cas une course de compression effective plus faible que la course de détente effective, ce qui permet de faire travailler davantage les gaz en fin de détente, grâce à leur pression de fin de détente encore importante (sauf au ralenti ou à très faible charge), améliorant alors le rendement.

Pour les moteurs 2 temps classiques à un seul piston, le cycle de Miller-Atkinson ne peut pas être mis en oeuvre, car, pour une configuration classique à balayage, les lumières d'admission et d'échappement sont fixes, ce qui impose toujours une course de détente inférieure ou égale à la course de compression. Aussi car l'échappement commence avant l'admission. C'est vrai également pour les 2 temps à balayage unidirectionnel ou équicourant : mono-piston à lumière et soupape ou même pour des configurations à pistons opposés.

Le moteur selon l'invention, dans sa version préférentielle à 2 temps, met en oeuvre le cycle de Miller-Atkinson par sa distribution « étagée ». En effet, les canaux d'admission comme d'échappement présentent 2 parties en série d'ouverture/fermeture, à savoir les lumières de la chambre, puis la glace à lumières. Ainsi, contrairement à un moteur 2 temps classique, un diagramme de distribution dissymétrique et optimisé peut être mise en oeuvre :
- Ouverture d'échappement retardée, toujours avant le PMB
- Angle plus important entre ouverture échappement et ouverture admission, pour laisser à la pression des gaz de la chambre, le temps de diminuer et d'être inférieure à celle d'admission.
- Angle plus faible entre fermetures admission et fermeture échappement, dans un sens ou dans l'autre
- Fermeture complète (admission et échappement) retardée, bien après le PMB, pour mettre en oeuvre le cycle de Miller-Atkinson, c'est-à-dire réaliser une course de détente effective supérieure à la course de compression effective.

### Exemple :

| Angles (PMB=180°) | 2 temps classique | 2 temps selon l'invention |
|---|---|---|
| Ouverture Echappement | 120° | 140° |
| Ouverture Admission | 140° | 170° |
| Fermeture Admission | 220° | 240° |
| Fermeture Echappement | 240° | 220° |

### Balayage équicourant ou unidirectionnel

En général, les moteurs deux temps classiques simples, à piston et lumières disposent d'un balayage perfectible, où la part de gaz frais et brûlés mélangés peut être importante.
Les moteurs deux temps à pistons opposés, disposent de lumières d'admission et d'échappement opposées à chaque extrémité du cylindre, permettant un balayage unidirectionnel ou équicourant.

Le moteur selon l'invention, par ses lumières situées dans les sommets de chambre, l'admission à un sommet et l'échappement au sommet opposé, met en oeuvre un tel balayage unidirectionnel ou équicourant des gaz frais et brûlés.

### Frottement du piston

Les frottements dans l'attelage mobile piston bielle manivelle d'un moteur classique sont importants. Particulièrement, en début de détente, l'obliquité de la bielle vient plaquer avec force le piston contre le cylindre, lors de son mouvement, générant ainsi du frottement. Aussi les paliers de vilebrequin et de bielle, même lubrifiés sont sujets à frottement.

Le moteur selon l'invention préférentielle présente 4 attelages mobiles, chacun entraînant le piston par un vilebrequin et une glissière-pivot, c'est-à-dire une cinématique à piston guidé. Il n'y a plus d'obliquité de bielle comme dans l'art intérieur. Ces frottements associés de poussée latérale du piston sont donc largement diminués, même si substitués par le glissement d'un sabot ou le roulement d'un galet dans la glissière, mais dont la force est plus faible. En effet, dans l'invention, deux pistons adjacents se frôlent en permanence sans se toucher, donc sans frotter. Ce sont les segments qui frottent pour assurer l'étanchéité.

### Allumage par laser

Pour initier l'explosion, les moteurs à allumage commandé utilisent des bougies qui provoquent un arc électrique. Le front de flamme part de l'étincelle de la bougie et se propage dans la chambre en transmettant une partie de sa chaleur aux parois. Le meilleur rendement de combustion est obtenu lorsque :
- le temps de parcours du front de flamme est minimum, c'est dire qu'indépendamment de la turbulence, il faut géométriquement une chambre petite ou compacte, idéalement sphérique.
- le transfert aux parois de la chaleur du front de flamme est retardé. Idéalement réalisé dans une chambre de combustion sphérique dont le point d'allumage est au centre.

Dans une chambre de combustion sphérique, comme dans le moteur selon l'invention, une bougie serait forcément placée en bord de sphère et non pas au centre, pour pouvoir être refroidie et ne pas présenter de point chaud.

Des études ont été faites en laboratoire mettant en oeuvre un allumage par rayon laser. Un allumage laser permet un allumage au centre de la sphère, par focalisation des rayons.

C'est donc dans une chambre de combustion sphérique, comme celle du moteur selon l'invention, que l'allumage par laser, laser focalisé sensiblement au centre de la chambre offre tout son potentiel.

De plus, la source laser peut être située sur l'ensemble châssis fixe et non pas sur l'ensemble piston mobile, évitant les flexibles électrique d'alimentation de la source laser. L'ensemble piston disposant d'une optique focalisatrice dont une face est apparente sur la face du piston, dans la chambre au PMH et l'autre face visible sur l'extérieur de l'ensemble piston et recevant le rayon laser au moment opportun du cycle.

### Caractère isochore de la loi de volume

Le régime maximum d'un moteur classique diesel est limité par le temps de combustion du carburant, temps déterminé, à un régime donné, par la loi de volume de la cinématique piston-bielle-manivelle.

Le moteur selon l'invention présente une loi de volume davantage isochore au PMH, par rapport à une cinématique bielle-manivelle classique de cylindrée et rapport volumétrique identique, ce qui, pour un moteur selon l'invention, avec allumage par compression, permet de tourner à un régime plus élevé que le moteur classique, tout en laissant le même temps au carburant pour être injecté, vaporisé et brûlé.

### Adaptation des régimes entre moteur et charge

L'adaptation de la plage de régime du moteur à la charge à entrainer nécessite très souvent l'emploi au moins d'un réducteur ou d'un multiplicateur. Celui-ci peut être compact et léger, quand c'est un train épicycloïdal par exemple, mais généralement il s'agit d'un couple d'engrenage roue-pignon, solution technique simple mais lourde et encombrante car toute la puissance passe par un point/ligne unique d'engrènement.

L'adaptation de la plage de régime du moteur selon l'invention à la charge à entrainer est de fait simplifiée car le réducteur est déjà présent dans l'invention et ce dernier peut opérer une réduction de la vitesse d'arbre moteur par 2,5 à 3 :1 et jusqu'à 1 :2 (il est alors multiplicateur) par rapport aux vilebrequins. Comme la puissance passe, en étant divisée, par 4 points/lignes d'engrènement (pour une invention préférentielle à N=4 vilebrequins), chaque dent transmet environ quatre fois moins de force, leur taille est donc réduite. Le réducteur présent dans le moteur selon l'invention, à couple et réduction identique est donc plus léger qu'un classique réducteur à roue-pignon.

Le moteur selon l'invention permet davantage, en adaptant le rapport de transmission de son réducteur, d'éviter l'emploi d'un étage de réduction supplémentaire. Il permet une meilleure adaptation au régime de la charge.

### Entrainements d'hélice pour avion

La motorisation aéronautique des petits et moyens avions à hélice est généralement réalisée par un ou plusieurs groupes de moteur accouplé à une hélice, soit en sortie directe sur le vilebrequin moteur, soit via un réducteur en prise sur le vilebrequin ou l'arbre de turbine d'un turbopropulseur. L'ajout d'un réducteur est une masse supplémentaire, mais qui permet de fixer des régimes d'hélice et de moteur optimum, maximisant la puissance spécifique du moteur. Très rarement est mise en l'oeuvre l'entrainement de deux hélices coaxiales contra rotatives à partir d'un même moteur à l'instar, par exemple, de l'avion de combat de la seconde guerre mondiale : Spitfire, Mark 19 et 22 ou bombardier stratégique de la guerre froide : Tupolev 95 « Bear », car ce choix technique est plus complexe, moins fiable et plus lourd.

La sortie motrice du moteur selon l'invention peut être réalisée via un double arbre-coaxial contrarotatif, relativement facilement et pour une masse et un encombrement additionnels très faibles, ce qui s'applique idéalement dans la propulsion d'avion à double hélices contra rotatives coaxiales dont le régime est généralement de 1500 tour/minute à 2500 tour/minute, à relier aux 2000 à 5000 tours/minute du moteur classique à pistons correspondant à une gamme courante de 80 à 500 chevaux.

Toutes choses égales par ailleurs avec un réducteur intégrant un ressort de torsion, pour atténuer les pics de couple moteur.

### Equilibrage

Le moteur selon l'invention, présente une cinématique équilibrée en statique, de façon directe et naturelle et ce dès le "monocylindre".

Dynamiquement, l'équilibrage est assuré pour tous les axes sauf uniquement en "basculement" (c'est à dire une variation de couple selon l'axe de l'arbre moteur). Mais pouvant être facilement atténué voire annulé par des balourds tournant aux vitesses des harmoniques.

### Appellations par analogie au classique bielle-manivelle.

L'invention décrit un moteur thermique, dont la forme de chambre est complexe. Par analogie avec le moteur classique, pour l'invention on nomme improprement cylindre, cette portion élémentaire de moteur comprenant un volume élémentaire de travail ou chambre, qui n'est pas cylindrique. Par abus de langage également, on désigne par monocylindre, bicylindre, trois cylindres... un moteur selon l'invention, constitué par respectivement une, deux, trois... portions élémentaires de moteurs.

De même, les positions au cours du cycle du moteur selon l'invention correspondant au volume minimum et au volume maximum sont, par analogie, nommées respectivement point mort haut et point mort bas, même si dans leur mouvement de louvoiement les pistons du moteur selon l'invention, n'ont plus de point mort.

### BREVE DESCRIPTION DES FIGURES

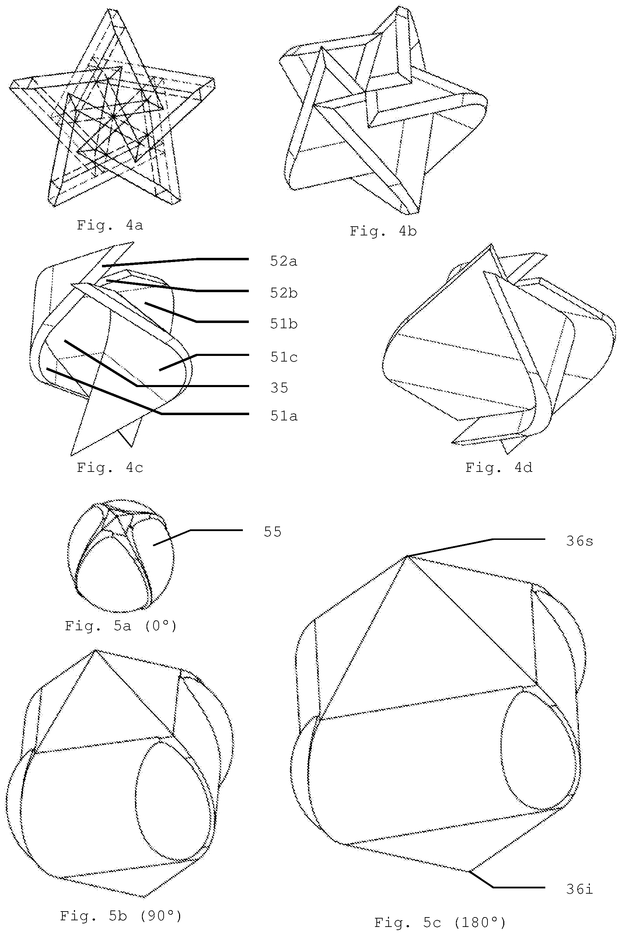

Les figures représentent un moteur selon l'invention, ici avec 4 ensembles pistons par cylindre (où N=4), sauf figures 4a, 4b et 4c où N=5, sans limiter l'invention, mais pour en simplifier la compréhension à la vue des figures.
La figure 1 est un schéma cinématique générique de l'invention en général, montrant pour un cylindre du moteur, un ensemble piston, entraîné par un arbre d'entrainement ou vilebrequin et ses contacts par rapport aux faces des autres ensembles pistons, vu selon l'axe Z du moteur, en coupe médiane.
La figure 2a est une réalisation cinématique particulière de la figure 1 où les ensembles pistons sont guidés entre eux par une glissière.
La figure 2b est une réalisation cinématique particulière de la figure 1 où l'ensemble piston comprend un piston et une face coupe-feu, en glissière et où ce piston est guidé en rotation par une glissière-pivot.
La figure 3 est une réalisation cinématique particulière de l'invention, issue de la figure 1 où l'ensemble piston est simplement un piston guidé en rotation par une glissière-pivot et muni d'un dispositif d'étanchéité.
La figure 4a est la vue avec arête cachées en pointillé de la figure 4b, vu selon l'axe du moteur.
La figure 4b est un schéma des 5 faces imbriquées simplifiées, formant la chambre d'un cylindre à 5 ensembles pistons, du moteur.
La figure 4c est une vue issue de la figure 4b, où on a enlevé 2 faces adjacentes.
La figure 4d diffère de la figure 4b en présentant 4 faces au total au lieu de 5, selon un autre point de vue.
Les figures 5a, 5b et 5c, présentent le volume de la chambre d'un cylindre à 4 ensembles pistons du moteur, à différents angles de vilebrequin.
Les figures 6a et 6b, sont deux vues orthogonales d'un même schéma cinématique du dispositif de synchronisation du moteur, comportant un arbre contrarotatif.
Les figures 7a, 7b et 7c présentent plusieurs variantes de la liaison glissière pivot, qui oriente l'ensemble piston.
La figure 7d montre un grand graphique et un plus petit, illustrant les trajectoires précises des points caractéristiques d'un piston.
Les figures 8a et 8b décrivent schématiquement différents profils possibles de la face d'un ensemble piston.
La figure 9 détaille la face d'un ensemble piston, vue de face, vue orthogonale aux vues des figures 8a et 8b.
Les figures 10a, 10b, 10c, 10d, 10e, 10f, 11a, 11b et 11c montrent différentes vues, coupes, détails et éclatés d'un ensemble piston du moteur selon une réalisation particulière, à piston segmenté avec un segment d'arête.
Les figures 12a, 12b, 12c, 13a et 13b, montrent différentes vues, coupes, éclatés et détails d'un ensemble piston du moteur selon une autre réalisation particulière, piston muni d'une face coupe-feu, avec le dispositif anti-accélération.
Les figures 14a, 14b et 14c, illustrent la réalisation particulière à injecteur pompe.
Les figures 15a, 15b, 15c et 15d illustrent schématiquement le mécanisme de distribution, ici l'échappement, à différents angles de vilebrequin au cours d'un cycle.
La figure 16 est une vue en coupe, au moment de l'admission, montrant le remplissage d'un cylindre vu partiellement.
La figure 17 présente le diagramme de distribution et la courbe de volume d'un cylindre, d'un exemple de moteur selon l'invention.
Les figures 18a et 18b sont la coupe médiane, perpendiculaire à son axe Z d'un même moteur réalisé particulièrement avec des ensembles pistons à face coupe-feu, à deux instants particuliers du cycle : au point mort haut et à 60° de rotation de vilebrequin.
Les figures 18c et 18d sont la coupe médiane, perpendiculaire à son axe Z d'un même moteur réalisé particulièrement avec des ensembles pistons à piston segmenté avec un segment d'arête, à deux instants particuliers du cycle : à 130° de rotation de vilebrequin et à 180° au point mort bas.
Les figures 19a, 19b et 19c montrent selon différentes angles de vue, l'assemblage partiel d'un cylindre du moteur, comportant deux ensembles pistons adjacents sur quatre, avec les deux vilebrequins correspondants.
Les figures 20a et 20b, sont la représentation de face et isométrique d'un même cylindre partiel du moteur, comportant les quatre glissières et attelages mobiles qui comprennent piston et vilebrequin.
La figure 21 présente en vue isométrique les éléments fixes d'un cylindre du moteur selon l'invention.
La figure 22 est la vue des éléments assemblés qui composent les figures 20a, 20b et 21, sans les collecteurs.
Les figures 23a et 23b montrent une perspective en vue isométrique d'un moteur monocylindre.
Les figures 24a et 24b, illustrent en coupe brisée par l'axe du moteur, un monocylindre complet à deux instants différents du cycle.
La figure 25 illustre sur une coupe d'un cylindre au point mort haut, une réalisation particulière du moteur utilisant un allumage par rayon laser.
La figure 26 schématise un moteur monocylindre avec sa suralimentation.
La figure 27 schématise un moteur bicylindre avec un agencement particulier de son échappement.
La figure 28 schématise un moteur trois cylindres suralimenté et avec des tubulures particulières.
La figure 29 schématise un moteur trois cylindres suralimenté et avec un agencement particulier de ses tubulures d'échappement.
La figure 30 schématise un moteur quatre cylindres suralimenté et avec un agencement particulier de ses collecteurs et tubulures d'admission et d'échappement et de deux turbocompresseurs.
La figure 31 présente un dispositif d'équilibrage des harmoniques 2 et 3 du moteur.

### LES FIGURES DECRIVENT L'INVENTION ET SON FONCTIONNEMENT

### Schémas cinématiques

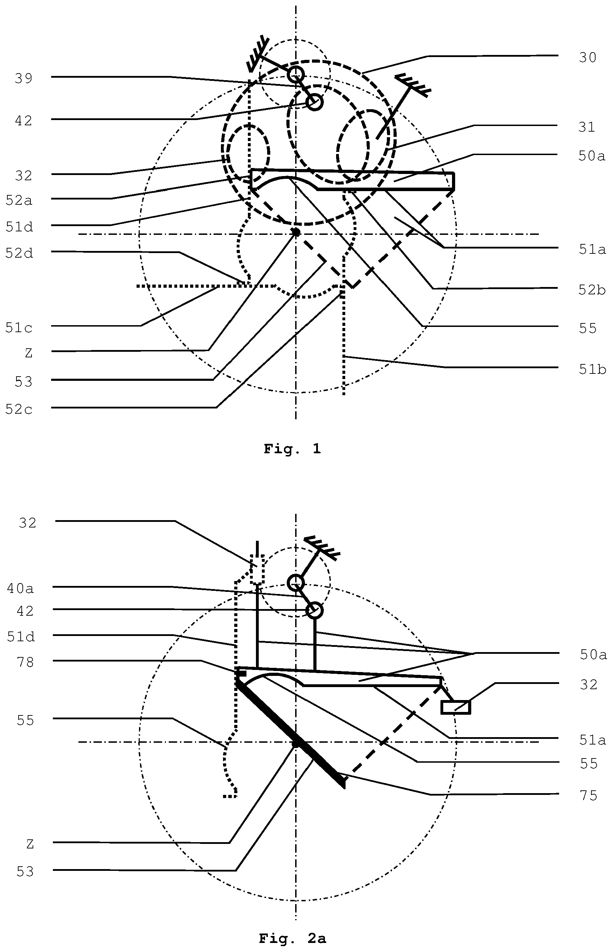

La figure 1 est un schéma cinématique générique de l'invention en général, montrant pour un cylindre du moteur, un 1^{er} ensemble piston avec sa face de cylindre (51a) et sa surface de glissement (52a), entraîné par un arbre d'entrainement (39) ou 1^{er} vilebrequin (40a), via et faisant partie d'un mécanisme cyclique d'entrainement et d'orientation (30) du 1^{er} ensemble piston, ici générique, ainsi que les contacts qui contraignent ce 1^{er} ensemble piston par rapport aux faces de cylindre (51b, 51c, 51d) et surface de glissement (52b, 52c, 52d) des autres ensembles pistons adjacents, partiellement représentées.

La surface de glissement (52a) du 1^{er} ensemble piston glisse contre la face de cylindre (51d) du 4^{ème} ensemble piston.

La surface de glissement (52b) du 2^{er} ensemble piston glisse contre la face de cylindre (51a) du 1^{er} ensemble piston.

Le 1^{er} arbre d'entrainement (39) ou vilebrequin (40a), réalise dans cette version générique, des rotations cycliques, monotones d'un ou deux tours par cycle, selon la complexité et le dessein du mécanisme cyclique d'entrainement et d'orientation (30). Pour des rotations alternatives ou dites semi-rotatives, l'invention serait donc limitée à un monocylindre.

Au cours d'un cycle le volume de travail atteint au moins un minimum (PMH) et au moins un maximum (PMB). Ceci laisse la possibilité, certes techniquement fort peu réalisable car complexifiant le dispositif de distribution et le mécanisme cyclique d'entrainement et d'orientation (30), d'un moteur 4 temps avec volumes balayés différents au cours de la compression et de la détente, réalisant un cycle de Miller vrai.

Le mécanisme cyclique d'entrainement et d'orientation (30) ici représenté schématiquement n'est pas limitatif de l'invention et il peut être de plusieurs type :
- à pignon crémaillère, solution complexe avec un pignon intermédiaire en rotation semi-rotative, pour pousser l'ensemble piston en translation alternative, pignon entrainé via une bielle par l'arbre d'entrainement en rotation continue et monotone.
- manivelle et bielle pour pousser l'ensemble piston monté en glissière, dans un mouvement de translation alternative.

Le mécanisme cyclique d'entrainement et d'orientation (30) du 1^{er} ensemble piston, avec les contacts de glissement des surfaces de glissement d'un ensemble piston sur la face de cylindre d'un ensemble piston adjacent et entourant, impose à tout moment du cycle, de façon cinématique, que l'arête frontière (53) des N ensembles pistons coupe l'axe Z du moteur, ce qui est également imposé par la répétition de révolution des composants du moteur autour de son axe Z.

La figure 2a est une réalisation cinématique particulière de l'invention, illustrée à partir la figure 1 où les ensembles pistons sont guidés entre eux par une glissière (32). C'est une réalisation cinématiquement possible, mais techniquement encombrante et complexe, donc non préférentielle et non développée davantage.

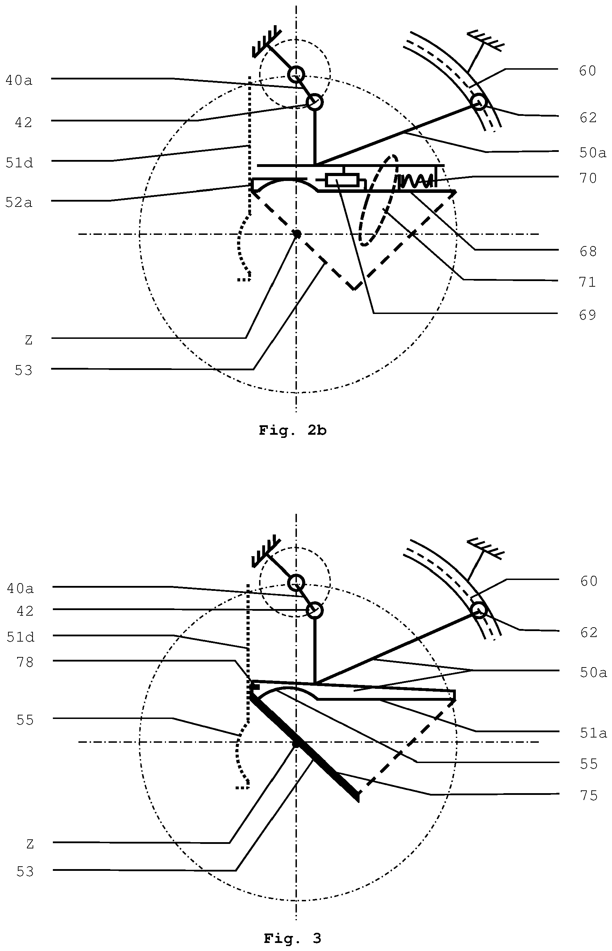

La figure 2b est une réalisation cinématique particulière de la figure 1 où l'ensemble piston comprend un piston et une face coupe-feu. Le piston (50a) est entraîné directement par le vilebrequin (40a) via le pivot de maneton (42) et guidé en rotation par une glissière pivot (62, 60). La face coupe-feu (68) qui comprend la face de cylindre et la surface de glissement (52a) peut se translater via une liaison glissière (69) par rapport au piston et est poussée dans cette translation par un système de ressort (70) pour maintenir un plaquage de la surface de glissement (52a) contre la face de cylindre (51d) du piston adjacent et entourant. Aussi, un dispositif anti-accélération (71) non détaillé vient assister le système de ressort (70), pour que la force de plaquage ne varie pas selon les forces inertielles auxquelles la face coupe-feu (68) est soumise.

La figure 3 est une réalisation cinématique particulière et préférentielle de l'invention, car la plus simple, issue de la figure 1 où l'ensemble piston est simplement un piston (50a) entraîné directement par le vilebrequin (40a) via le pivot de maneton (42) et guidé en rotation par une glissière-pivot (62, 60) et muni d'un dispositif d'étanchéité (78) au niveau de l'arête frontière (53).

Dans tous les modes de réalisation de l'invention, le sens de rotation des vilebrequins est indéterminé. Le choix du sens de rotation dépend principalement du compromis entre ; premièrement l'optimisation dynamique, c'est-à-dire des forces inertielles et de pression dans les liaisons, en particulier la glissière pivot et ; deuxièmement, de l'efficacité du diagramme de distribution obtenu, via la forme possible des lumières.

### Imbrication des faces de cylindre des ensembles pistons et forme et volume de la chambre d'un cylindre

Les figures 4a, 4b, 4c et 4d, illustrent schématiquement l'imbrication des N faces de cylindre (51a, 51b, 51c) des N ensembles pistons d'un cylindre du moteurs, ces N faces emprisonnant un volume variable au cours d'un cycle, appelé chambre (35) d'un cylindre. En pratique, N peut être difficilement égal à 5 ou plus, peut être égal à 3 mais avec un potentiel moindre, et peut-être égal à 4 préférentiellement et c'est ce nombre qui sera retenu pour toutes les figures sauf les 4a, 4b et 4c qui illustrent l'agencement des 5 faces d'un cylindre d'une réalisation à 5 ensembles pistons, du moteur.

La figure 4c, en ne représentant pas 2 faces de cylindre adjacentes sur les 5, dévoile la chambre du cylindre (35), dont les faces de cylindre (51a, 51b, 51c) ne comportent pas de calotte sphérique.

On distingue les contacts entre face où la surface de glissement (52b) glisse contre la face de cylindre (51a)

Les figures 5a, 5b et 5c, présentent le volume de la chambre d'un cylindre d'un moteur selon l'invention disposant d'un mécanisme d'entrainement et d'orientation du type présenté aux figures 2a, 2b et 3, à différents angles de vilebrequin au cours du cycle, respectivement à :
- 0° à volume minimum, également nommé point mort haut par analogie aux moteur traditionnel à piston bielle manivelle. La surface de ce volume de chambre correspond alors aux surfaces portions de combustion des faces de cylindres au dispositif d'étanchéité près.
- 90° à mi-course, à volume et forme intermédiaire,
- 180° à volume maximum, nommé point mort bas par analogie.

Les figures 5a, 5b et 5c montrent également les 2 sommets de chambre (36s, 36i), ainsi que les calottes sphériques (55) des faces de cylindre des ensembles pistons.

### Entrainement des vilebrequins et arbre moteur

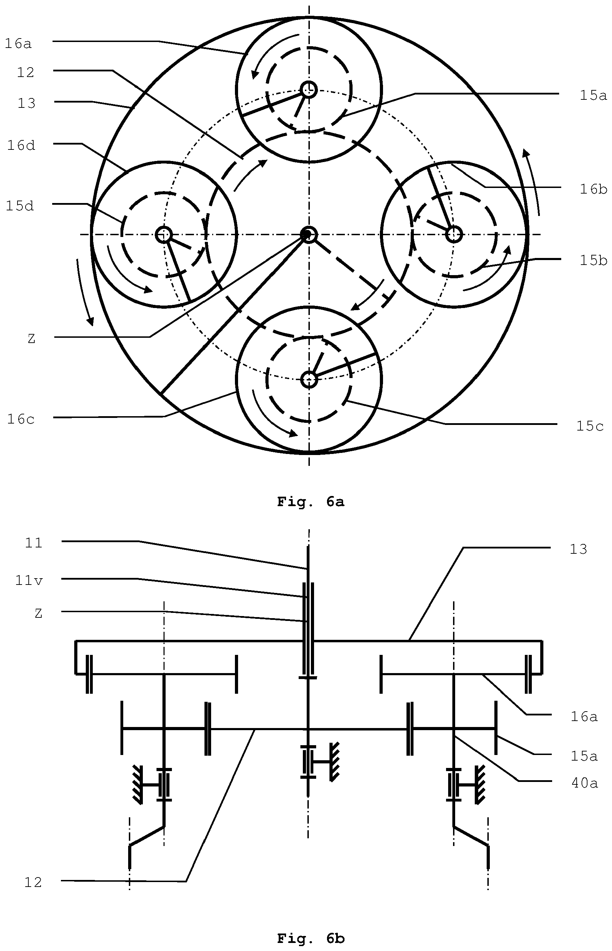

Les figures 6a et 6b, représentent le schéma cinématique du dispositif de synchronisation du moteur, ici réalisé par un engrènement des 4 pignons satellites (15a, 15b, 15c et 15d) des 4 vilebrequins sur une roue (12) centrale solidaire de l'arbre de sortie (11) du moteur, coaxial avec l'axe z du moteur.

Dans le fonctionnement d'une réalisation préférentielle du moteur selon l'invention, imposé par ce dispositif ici engrenant, les vilebrequins effectuent des rotations continues d'un tour par cycle.

Aussi, une réalisation toute particulière de ce dispositif de synchronisation est obtenue en rajoutant un second arbre contrarotatif du premier (11v), coaxial et entourant ce dernier, solidaire d'une couronne (13) engrenant intérieurement avec N autres satellites supplémentaires (16a, 16b, 16c et 16d) coaxiaux des premiers. Techniquement, ces double satellites pourraient être confondus identiques en présentant deux engrènement diamétralement opposés, l'un intérieur avec la couronne (13), l'autre extérieur avec la roue (12), mais alors les vitesses de l'arbre de sortie (11) et de l'arbre contrarotatif (11v) seraient assez différentes.

Cet agencement à arbre contrarotatif s'applique tout particulièrement à la propulsion à hélice d'aéronef, chaque arbre entrainant une hélice, chacune tournant en sens inverse de l'autre.

La figure n'est pas restrictive de l'invention, en effet, les arbres de sortie (11 et 11v) peuvent être munis, dans leur liaison avec la roue (12) et la couronne (13), d'amortisseur de couple ou de ressorts de torsion, pour atténuer les fluctuations de couple moteur. Aussi, roue (12) et couronne (13) pourraient être inversées avec la permutation de la position des satellites (15 et 16) sur le même arbre.

### Liaison glissière-pivot et forme de glissière particulière

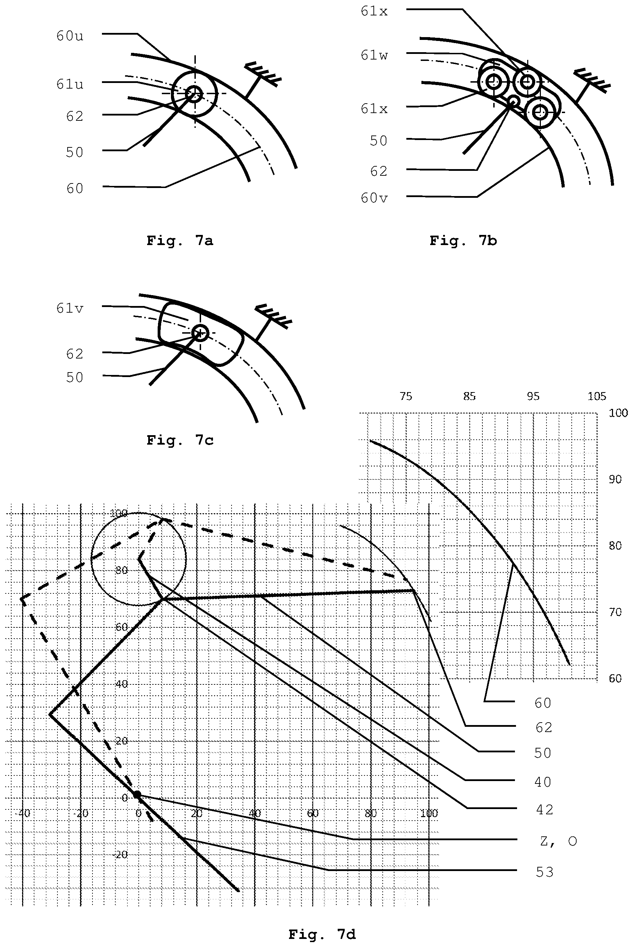

Les figures 7a, 7b et 7c présentent plusieurs variantes de la liaison dite glissière pivot (62), qui oriente l'ensemble piston ou le piston (50) au moyen d'un élément mobile (61) dans une glissière fixe (60u) et pivotant sur ce dernier.

La figure 7a montre la réalisation la plus simple où c'est un galet (61u) qui roule dans la glissière (60u).

La figure 7b montre une réalisation avec un sabot roulant (61w), muni de rouleaux (61x). L'avantage de cette solution est que les points de contact de roulement ne changent pas de flanc de glissière (60v), par rapport au galet roulant (61u) simple.

La figure 7c montre une réalisation avec un sabot glissant (61v), plus simple, plus compacte, mais frottant davantage que les deux précédentes.

Ces 3 illustrations figure 7a, 7b et 7c ne sont pas limitatives, car l'invention peut retenir aussi des éléments glissants ou roulants et glissières montés en double, doublés à l'identique selon une translation dans l'axe Z du moteur, qui est l'axe de projection des trois vues. Egalement, même si plus encombrante, l'inversion est techniquement possible : La rainure est un rail courbe et fixe qui supporte, de part et d'autre sur ses 2 faces, le contact roulant des galets du sabot roulant.

Aussi, un sabot hybride est possible, glissant contre un premier flanc de glissière (60v) et roulant contre le second flanc de glissière au moyen de rouleau (61x).

La figure 7d montre un grand graphique et un plus petit, agrandissement partiel du premier, illustrant les trajectoires précises des points caractéristiques d'un piston, selon une réalisation préférentielle de l'invention comprenant un ensemble piston composé d'un piston segmenté et un mécanisme d'entraînement par vilebrequin (40) en rotation continue et un mécanisme d'orientation de piston par glissière pivot.

Les segments noirs épais et continus illustrent, pour un angle de vilebrequin du cycle, la position des deux pivots et de l'arête frontière (53) du piston (50).

Les segments noirs épais et discontinus illustrent la même chose à un angle de vilebrequin différent.

La trajectoire de glissière (60) obtenue par calcul est un exemple de résolution illustrée, pour un moteur dont l'axe Z, axe normal à cette vue, est à l'origine du graphique gradué en millimètre (mmm) et dont l'axe des 4 vilebrequins (40) est à a*84 mm de ce dernier. Les manetons de vilebrequins sont excentrés de a*16,3 mm ; la distance orthogonale entre le pivot du piston (50) et son arête frontière est de a*56,1 mm ; la distance entre le pivot (42) du piston et le pivot de glissière (62) est de a*86,7 mm.

La trajectoire de glissière (60) est une courbe la plus régulière possible, passant sensiblement au plus près de 5 points de coordonnées :
1. (X= a*69,4 ; Y= a*95,8)
2. (X= a*77,2 ; Y= a*91,8)
3. (X= a*85,0 ; Y= a*85,3)
4. (X= a*92,8 ; Y= a*76,0)
5. (X= a*100,7; Y= a*62,2)

Lorsque le facteur d'échelle a=1, ces dimensions et coordonnées correspondant à un moteur de cylindrée volumétrique d'environ 500 cm3, pour un angle de profil de face de piston (54) en « V » de 90°, et pouvant être adaptées pour d'autres tailles de moteur selon l'invention via ce facteur d'échelle. Aussi, chaque dimension et coordonnée peut très légèrement varier.

En retour inverse de ce calcul, dans la réalité, le moteur selon l'invention, en imposant les géométries et positions des pièces et celle toute particulière de cette trajectoire de glissière (60) déterminée et par le fait que l'arête frontière (53) du piston coupe l'axe Z du moteur aux deux sommets de chambre, ces conditions assurent cinématiquement que à tout moment du cycle l'amplitude de variation de la course de travail en translation de la segmentation, c'est-à-dire son mouvement translatoire relatif entre le piston et l'arête frontière est inférieure à 0,3 mm (pour a=1).

En réalité, c'est l'arête frontière, qui située sur le segment d'arête, sera plaquée depuis le piston pour combler ce petit écart de position, variant au cours d'un cycle.

### Constitution des ensembles piston : préféré à piston segmenté ou alors non préféré à face coupe-feu

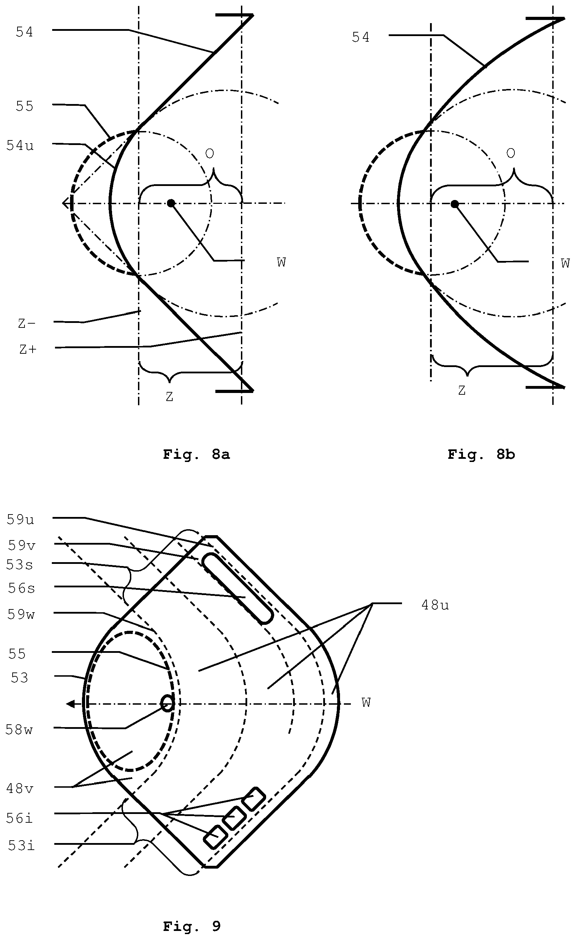

Les figures 8a et 8b décrivent schématiquement différents profils de face de piston (54) possibles de la face de cylindre (51) d'un ensemble piston, vus selon un axe de glissement W, axe qui est la direction de translation rectiligne générant par balayage d'un de ces profils, la portion de glissement (48u) de la face de cylindre. Le profil est globalement concave, partiellement fermé sur le point O, dont la position évolue au cours d'un cycle, avec l'axe Z du moteur, le piston s'éloignant et se rapprochant.

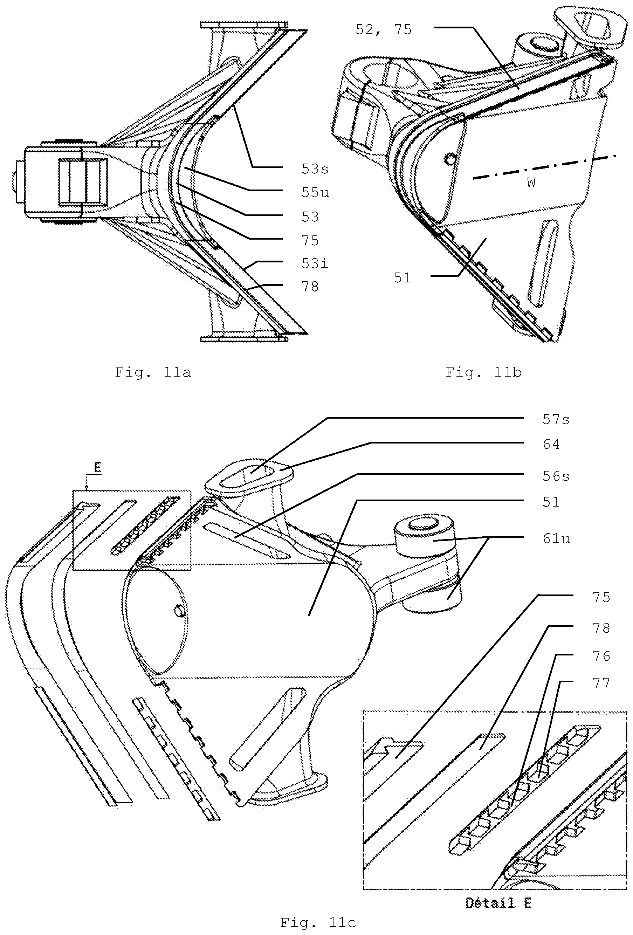

La position de l'axe Z du moteur, en extrême notée (Z-) correspond au point mort haut alors que l'extrême noté (Z+) correspond au point mort bas. Aussi les figures 8a et 8b montrent la calotte sphérique (55) et l'arrondi du profil (54u) sans montrer le renflement (55u) de la face de cylindre dans sa réalisation préférentielle, comme en figure 11a.

L'invention n'impose pas la symétrie à ces profils. L'arête frontière (53) n'est pas forcément rectiligne sur ses zones où passe le sommet de chambre (53s, 53i) indiqués en figure 9.

La figure 8a présente un profil dit en forme de « V » à pointe arrondie.

La figure 9, selon un mode particulier de réalisation de l'invention, détaille schématiquement la face de cylindre d'un ensemble piston, vue de face, avec : l'arête frontière (53), la calotte dite calotte sphérique (55), l'orifice (58w) par où débouche l'injecteur ou la bougie d'allumage et les lumières d'admission (56s) et d'échappement (56i), qui peuvent être à ouvertures multiples avec une grille, mais qui respectent un alignement par rapport à l'arête frontière (59v) de l'ensemble piston adjacent entouré, glissant sur cette face de cylindre et qui vient découvrir les lumières au cours d'un cycle, mettant en communication les transferts (57) avec la chambre (35), comme illustré à l'ouverture ou à la fermeture des lumières (59v), au point mort haut (59w) et au point mort bas (59u). L'utilisation de lumières (56s et 56i) pour la distribution, associée à un mécanisme d'entrainement et d'orientation comportant un vilebrequin en rotation continue et monotone, comme illustré sur les figures 2a, 2b et 3, impose dans ce mode particulier et préférentiel de l'invention d'être un moteur thermique à cycle deux temps. Le dispositif d'étanchéité n'est pas représenté.

La face de cylindre se subdivise en deux portions :
- la portion de glissement (48u) qui supporte le glissement de la surface de glissement de l'ensemble piston adjacent entouré,
- la portion de combustion (48v), sur laquelle il n'y a pas de glissement et qui confine la chambre (35) au moment de la combustion proche du point mort haut.

La séparation entre ces deux portions est la position de l'arête frontière de la face adjacente au point mort haut (59w).

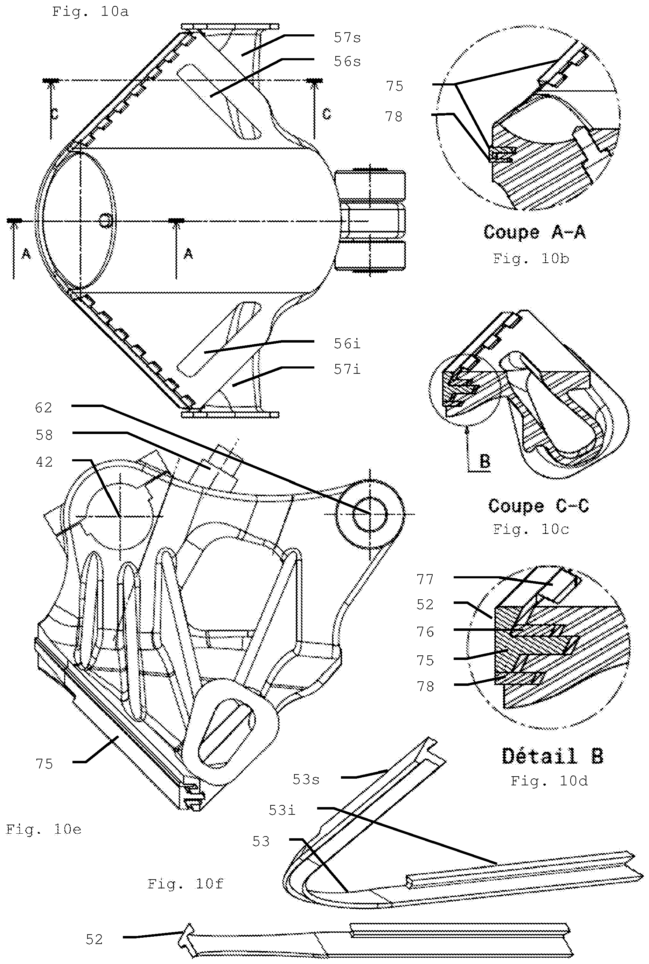

Les figures 10a, 10b, 10c, 10d, 10e, 10f, 11a, 11b et 11c montrent différentes vues, coupes et éclatés d'un ensemble piston, composé d'un piston (50) avec sa segmentation, selon une réalisation particulière et préférée de l'ensemble piston de l'invention dit à piston segmenté, avec segment d'arête (75).

L'ensemble piston est muni de galets roulants (61u) doubles, ce qui implique également des glissières doubles. Les figures 10a et 10e sont des vues en correspondance, de face et de dessus selon l'axe Z du moteur. Les figures 10b, 10c et 10d détaillent la segmentation composée du segment d'arête (75), du segment secondaire (78), du joint chicane (76) et de ses créneaux (77) qui s'emboitent dans les créneaux correspondants aménagés dans le piston. Les deux segments (75, 78) sont libres de se translater légèrement dans le piston selon l'axe de glissement W visible en figure 11b, mais sont maintenus dans ce mouvement d'un côté par la pression d'un dispositif de ressort non représenté, situé dans le fond des gorges du piston, idéalement des ressorts à lame ondulée et de l'autre côté par le contact contre la face du piston adjacent et entourant, non représenté. Les joints chicanes (76) se translatent dans la direction de leur créneau, au mieux simplement perpendiculaire à la direction de portion d'arête frontière (53) proche, et ils sont plaqués dans le creux ici rectiligne du segment d'arête (75) par un dispositif de ressort non représenté. Ces contraintes de mouvement relatifs imposent un joint chicane (76) rectiligne. Le segment secondaire (78), assurant une fonction d'étanchéité ou de raclage, matérialise, avec le segment d'arête (75) la surface de glissement (52), quasi non interrompue, pour limiter les fuites de gaz lorsque cette surface de glissement (52) passe sur les lumières (56s et 56i) de la portion de glissement de la face de cylindre du piston adjacent et entourant non représenté.

Tous ces positionnements, contacts et maintiens en pression permettent de fermer la chambre de manière topologique.

Sur la figure 10a, on distingue les deux transferts (57s et 57i) et les lumières d'admission (56s) et d'échappement (56i). Cette représentation n'est pas limitative et le transfert d'échappement (57i) peut comporter une ou plusieurs ailettes de refroidissement, il peut être un élément rapporté, fixé sur le piston, voire issu de la même matière.

La figure 10e montre le pivot du maneton de vilebrequin (42) et le pivot de glissière (62) du galet. Le piston est ici renforcé par 4 contreforts et évidé, pour plus de réalisme.

La figure 10f représente le segment d'arête (75) et illustre, outre son épaisseur, le fait qu'il soit plan. Il comprend l'arête frontière (53) et ses portions (53s, 53i) où se déplacent les sommets supérieurs et inférieurs de la chambre. Sur ces portions, l'arête frontière (53), dans sa réalisation concrète, comporte un petit chanfrein ou congé ou autre usinage supprimant le tranchant de l'arête, de faible dimension, environ 0,2 mm ou moins pour le chanfrein, pour permettre un fonctionnement isostatique, c'est-à-dire une imbrication des faces de cylindre (51) et surfaces de glissement (52) entre elles pour former les deux sommets, malgré une dispersion dimensionnelle des pièces. Concrètement, chaque sommet supérieur (36s) et inférieur (36i) comporte alors un très petit passage de section inférieure à 0,1 mm², engendrant un « blow-by » ou fuite de gaz, de débit assez faible n'affectant pas la compression du moteur.

Les figures 11a et 11b montrent le renflement (55u) de la face de cylindre (51), qui protège les segments (75, 78) des gaz chauds en les éloignant de la chambre, qui frôle dans la toucher la face de cylindre du piston adjacent et entourant non représenté, alors que c'est la surface de glissement (52) qui glisse contre cette dernière.

On distingue sur l'éclaté de la figure 11c les transferts d'admission (57s) et d'échappement et leur communication avec les lumières (56s) de la face de cylindre (51) du piston et leur seconde ouverture au niveau du plat du transfert (64).

Pour assurer une bonne étanchéité avec la glace rotative (22), lors du fonctionnement, ce plat de transfert (64), peut être lié sur le transfert (57), par l'intermédiaire d'un soufflet élastique, permettant quelques dixièmes de millimètres de compression et ainsi absorber les dispersions géométriques entre les N transferts (57) des N pistons (50), ou les dilatations thermiques, par rapport à une même glace rotative (22).

L'encart du détail E de la figure 11c montre la segmentation : le segment d'arête (75), le segment d'étanchéité (78) et le joint chicane (76) et ses créneaux (77), correspondants à ceux aménagés sur le piston (50).

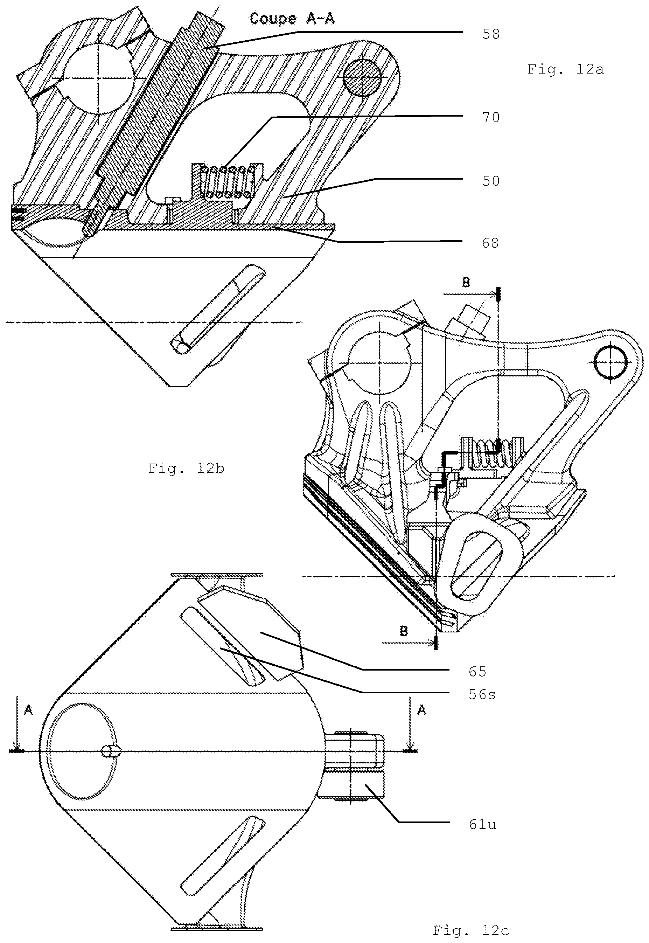

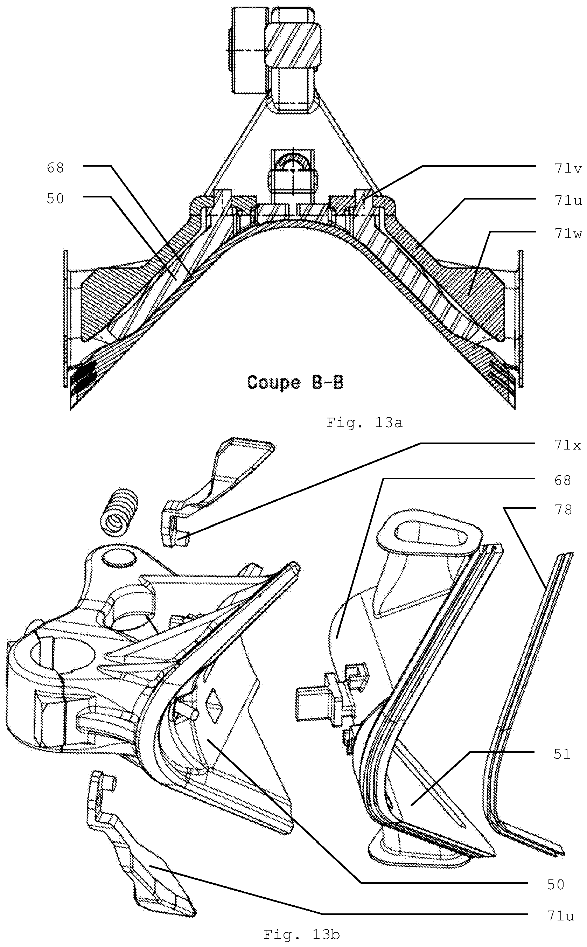

Les figures 12a, 12b, 12c, 13a et 13b, montrent différentes vues, coupes, éclatés et détails d'un ensemble piston du moteur selon une réalisation particulière non préférentielle car complexe, composé d'un piston (50) muni d'une face coupe-feu (68), avec le dispositif anti-accélération et équipée ici d'un simple galet roulant (61u). L'ensemble piston est dit à face coupe-feu.

La figure 12a est la coupe de la figure 12b, vue selon l'axe Z du moteur et passant par le centre O du cylindre, coupe A-A indiquée sur la vue de face, figure 12c. On y distingue l'injecteur ou bougie (58), débouchant dans la chambre, traversant la face coupe-feu (68) pouvant glisser sur le piston (50) et maintenue en pression par le ressort (70), contre la face coupe-feu de l'ensemble piston adjacent et entourant non représenté.

La figure 12c montre l'obturateur supérieur (65), équipement selon une réalisation particulière non préférentielle, disposé sur la face de cylindre (51) et permettant de fermer la lumière (56s) en la masquant, pour obstruer le transfert, à certains moments du cycle.

La coupe brisée B-B, qu'illustre la figure 13a montre le système anti-accélération, doublement composé d'un levier (71u), pivotant sur le piston (50) au pivot (71v), équipé d'une masselotte (71w) et entrainant la face coupe-feu (68) dans sa translation par rapport au piston (50) via une liaison d'entrainement (71x), visible sur l'éclaté de la figure 13b, qui montre également le piston (50), les deux leviers (71u), la face coupe-feu (68), qui comprend les transferts et deux segments secondaires (78).

### Injection directe par injecteur pompe

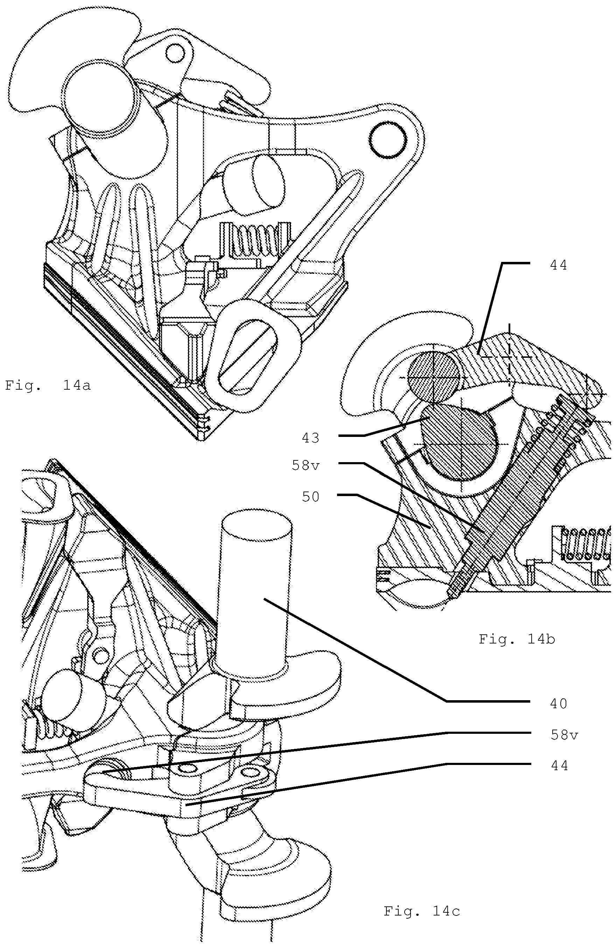

Les figures 14a, 14b et 14c, illustrent, une réalisation particulière de l'ensemble piston de l'invention dit à injecteur pompe (58v) où celui-ci est ici activé par un levier (44) à rouleau, qu'attaque une came (43) faisant partie du maneton du vilebrequin (40). Par analogie, le maneton de vilebrequin (40) se comporte comme un arbre à came pour une culasse qu'est le piston.

La figure 14b est la coupe médiane passant par le centre O du cylindre, en vue partielle de la figure 14a, vue selon l'axe Z du moteur d'un ensemble piston équipé d'injecteur-pompe (58v), alors que la figure 14c en est une vue isométrique montrant le vilebrequin (40) et le levier (44).

Ces trois figures 14a, 14b et 14c ne réservent pas l'agencement de cet injecteur pompe (58v) seulement à un ensemble piston à face coupe-feu comme représenté, mais l'injecteur-pompe peut aussi être aménagé sur un ensemble piston à piston segmenté ou autre. Cette solution d'injecteur-pompe se destine à l'injection directe de carburant type diesel, pour un allumage par compression, mais sans limiter l'invention qui peut utiliser une injection directe classique surtout pour des moteurs à allumage commandé, utilisant de l'essence. Dans ce cas, l'injecteur dispose de son amenée flexible d'essence sous pression et de sa commande électrique, flexible également. Dans ce cas encore, l'orifice par lequel débouche l'injecteur peut être placé sur la portion de glissement de la face de cylindre, pour permettre, en début de compression, une injection dont le spray soit large et vise le centre de la chambre à ce moment du cycle. L'invention peut aussi, selon un mode non préféré, retenir une injection indirecte située par exemple dans le collecteur d'admission, pour un moteur à allumage commandé.

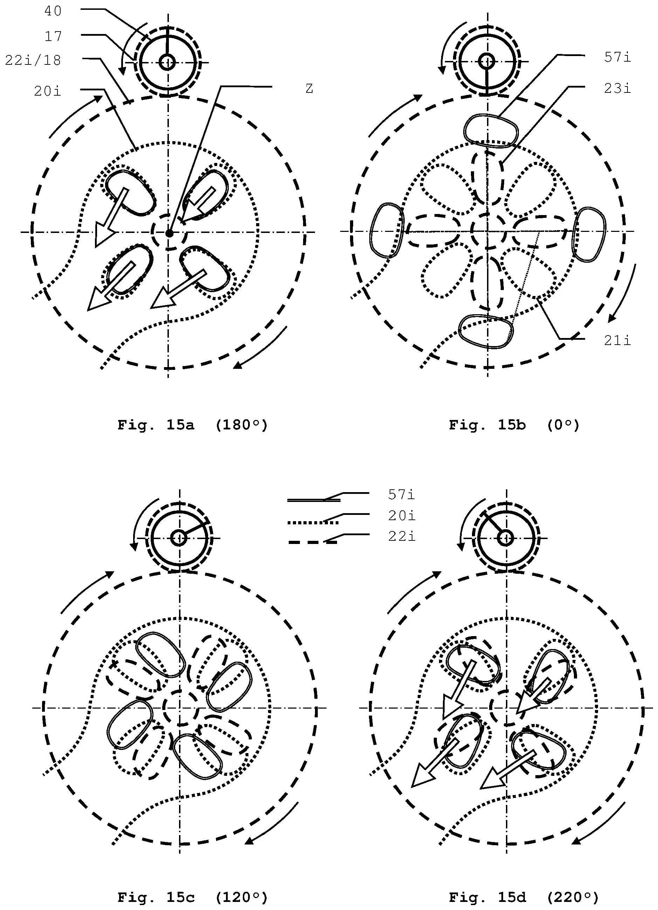

Les figures 15a, 15b, 15c et 15d illustrent schématiquement une réalisation particulière et préférentielle du mécanisme de distribution de l'invention, ici l'échappement, à différents angles de vilebrequin (40) au cours d'un cycle. L'admission fonctionne sur la même architecture, avec des flèches de sens opposé bien-sûr et des calages angulaires et dessins de lumières différents.

La glace rotative (22i), est entrainée via sa roue dentée (18), par l'engrènement du pignon d'entrainement de la glace rotative (17), solidaire du vilebrequin (40). La vitesse de la glace rotative (22i) est de en moyenne un quart de tour par cycle ou pour un tour de vilebrequin (40), car ce mécanisme de distribution s'applique à un moteur à cycle deux temps. La vitesse de la glace rotative est d'un quart en moyenne, car on pourrait ne pas limiter l'invention à des roue (18) et pignon (17) à primitifs circulaires, mais retenir des primitifs de denture non circulaires, pour optimiser davantage le diagramme ici d'échappement.

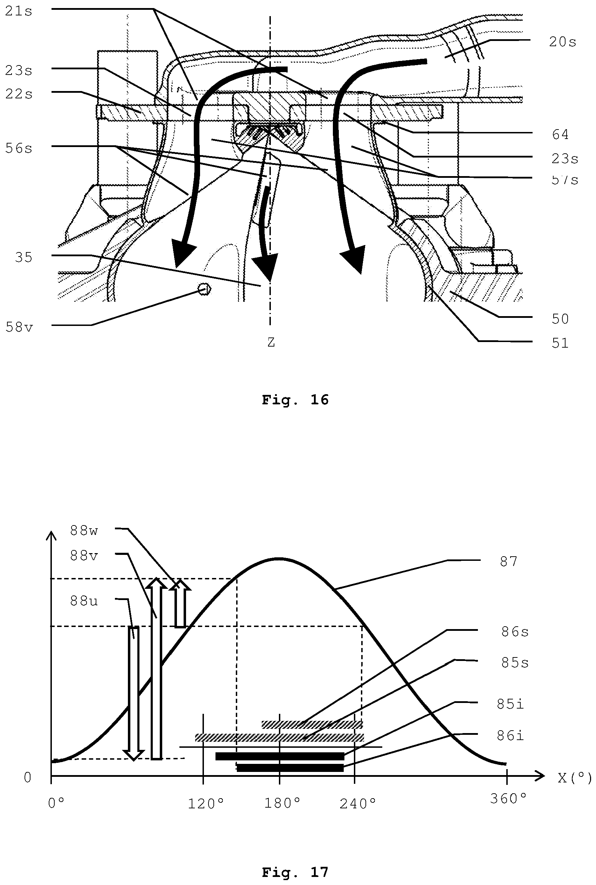

La glace rotative (22i) fait donc tourner ses quatre lumières (23i), qui sur une face passent devant les quatre lumières fixes (21i) du collecteur d'échappement (20i), et qui peuvent, sur l'autre face, croiser les quatre lumières des transferts d'échappement (57i), qui ont un mouvement de louvoiement, propre au piston qui les supporte. Ainsi toutes ces lumières, selon leur forme déterminée précisément, forme optimale qui n'est pas celle illustrée par ces quatre figures 15a, 15b, 15c et 15d, mais qui s'en rapproche assez pour illustrer le fonctionnement, ouvrent ou ferment l'échappement à des moments précis du cycle du moteur, conformément au diagramme de distribution de la figure 17.

La figure 15a, à un angle vilebrequin de 180°, où son maneton est le plus éloigné de l'axe Z du moteur, c'est-à-dire au point mort bas, illustre l'échappement avec des lumières en recouvrement maximum ou quasi.

La figure 15b, à un angle vilebrequin de 0°, où son maneton est le plus rapproché de l'axe Z du moteur, c'est-à-dire au point mort haut, illustre une fermeture complète de l'échappement avec des lumières ne se recouvrant pas.

La figure 15c, à un angle vilebrequin de 120°, c'est-à-dire à un moment proche de l'ouverture de l'échappement, montre une fermeture complète car les lumières (23i) de la glace rotative ne communiquent pas avec les lumières des transferts d'échappement (57i).

La figure 15d, à un angle vilebrequin de 220°, c'est-à-dire à un moment proche de la fermeture de l'échappement, montre une ouverture partielle, car les lumières (23i) de la glace rotative sont à moitié en regard des lumières des transferts d'échappement (57i) et partiellement en regard des lumières (21i) du collecteur (20i) fixe.

Ces quatre figures 15a, 15b, 15c et 15d, ne limitent pas le mécanisme de distribution de l'invention. En effet, l'entrainement de la glace rotative (22i) peut être réalisé via un pignon intermédiaire et équipé d'un système de déphasage angulaire.

La figure 16, même si elle illustre l'admission, complète les quatre figures précédentes car elle montre par une vue en coupe du cylindre selon un plan passant par l'axe Z du moteur, l'agencement des lumières et conduits entre eux. La glace rotative (22s), plane est en contact permanent, sur ses deux faces entre le plan du collecteur d'admission (20s) comprenant ses lumières (21s) et les plats (64) des transferts (57s). On voit comment l'air admis dans le collecteur (20s), puis dans les transferts (57s) débouche dans le cylindre par les lumières d'admission (56s), dont deux sont en coupe parmi les trois représentées sur quatre de ce cylindre.

Cette figure 16 n'est pas limitative de l'invention car elle n'illustre pas l'utilisation d'une glace supplémentaire (24) qui serait intercalée entre le collecteur (20s) et la glace rotative (22s), doublement plaquée par ses faces planes et parallèles contre la face plane de ces deux derniers. Aussi, cette glace supplémentaire (24), munie de N lumières réparties dont la forme s'agencerait avec les lumières de la glace rotative et du collecteur, pour modifier le diagramme de distribution en ajustant par rotation selon l'axe Z du moteur, la position angulaire de cette glace supplémentaire (24), ce qui est plus simple que d'opérer un déphasage de la glace rotative (22).

Ces quatre figures 15a, 15b, 15c et 15d et la figure 16, illustrent le système de distribution en réalisation préférentielle, du moteur selon l'invention. En effet, le dispositif de distribution, sans la glace rotative (22), fonctionnerait certes, avec des surfaces d'ouverture plus faible et un diagramme de distribution plus limité. Mais la nécessité de la glace rotative réside aussi dans le fait qu'elle ferme les collecteurs (20) en dehors des phases d'admission et d'échappement évitant les pertes de pression et mauvaises communications des gaz.

La figure 17 présente le diagramme de distribution du moteur en version préférentielle, d'une réalisation particulière de l'invention à cycle deux temps. L'abscisse X indique l'angle des vilebrequins en degrés.

La barre (85s) représente la plage angulaire d'ouverture d'admission entre chambre (35) et transfert (57s).

La barre (86s) représente la plage angulaire d'ouverture d'admission entre transfert (57s) et collecteur (20s).

La barre (85i) représente la plage angulaire d'ouverture d'échappement entre chambre (35) et transfert (57i).

La barre (86i) représente la plage angulaire d'ouverture d'échappement entre transfert (57i) et collecteur (20i).

Pour avoir admission ou échappement, il faut l'ouverture des 2 barres : ouverture entre chambre (35) et transfert (57) et ouverture entre transfert (57) et collecteur (20).

Les valeurs angulaires des plages d'ouverture sont ici pour un fonctionnement réaliste, sans être optimales.

La courbe (87) représente le volume d'un cylindre, repéré en ordonnée en fonction de X.

On remarque ici, que les plages d'ouverture entre chambre et transfert sont symétrique autour du point mort bas (180°), mais différents entre admission et échappement, du fait même de l'agencement des faces de piston entre eux et de leurs lumières et du fait de la cinématique du moteur. Au contraire, le diagramme d'ouverture entre transfert et collecteur est asymétrique, grâce à la liberté de forme que procurent les lumières des deux glaces rotatives, des collecteurs et des plats de transferts (64). Cette asymétrie ou liberté du diagramme permet de mettre en oeuvre efficacement le cycle de Miller-Atkinson, caractérisé par une course, ou ici un volume de détente effective (88v) supérieur au volume de compression effectif (88u), la différence des deux étant le sur-volume de détente (88w), pouvant atteindre de 0 % jusqu'à +80 % du volume de compression effectif (88u).

Cette asymétrie et liberté dans le diagramme de distribution permet également de laisser plus de temps pour permettre la baisse de pression entre l'ouverture de l'échappement et l'ouverture de l'admission, pour éviter ainsi un reflux des gaz d'échappement à l'ouverture de l'admission dans cette dernière. Aussi, le temps angulaire nécessaire au remplissage sous pression d'admission du cylindre après la fermeture de l'échappement et avant la fermeture de l'admission peut être optimisé.

Au besoin, dans une certaine mesure, au cours du fonctionnement du moteur selon l'invention, ces plages angulaires d'admission et d'échappement peuvent être modifiées, via des déphasages des glaces rotatives (22) ou via une glace supplémentaire (24) (non représentée), réglable angulairement autour de l'axe Z du moteur, et disposée entre un collecteur (20s / 20i) et la glace rotative (22s /22i) correspondantes.

### Fonctionnement du moteur

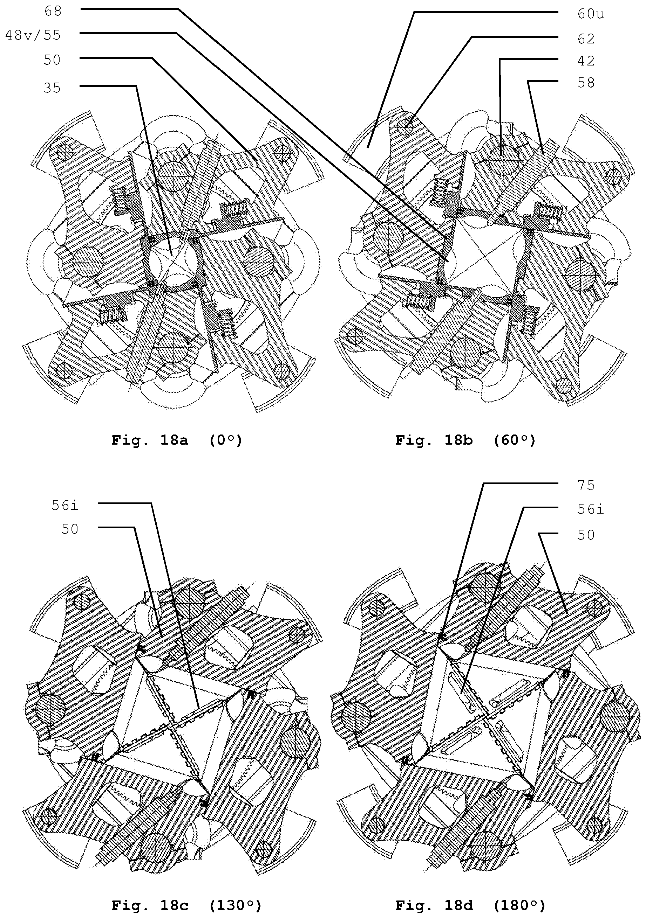

Les quatre figures 18a, 18b, 18c et 18d, illustrent le fonctionnement du moteur selon deux modes particuliers de réalisation de l'invention, par une coupe d'un cylindre, perpendiculaire à l'axe Z du moteur, passant par son centre O, à différents moment du cycle. Elles montrent les ensembles pistons, dans un mode de réalisation particulier, composés des pistons (50) et face coupe-feu (68) pour les figures 18a et 18b, les injecteurs et/ou bougies (58), les manetons de vilebrequins (42) et les glissières (60u) et leur pivot (62), ainsi que la chambre (35) de volume et forme variable. Les figures 18c et 18d présentent un ensemble piston, réalisé selon un mode particulier du type à piston segmenté.

La figure 18a illustre le point mort haut, pour un angle de vilebrequin de 0°, où le volume de chambre (35) est minimum et ici confiné dans un volume quasi sphérique, en tout cas très compact, présentant une surface de paroi minimum, grâce aux quatre calottes sphériques (55) aménages sur les portions de combustion (48v) des faces de cylindre (51).

La figure 18b illustre un instant intermédiaire du cycle, pour un angle de vilebrequin de 60°, où la chambre (35) a un volume plus important que le minimum et une forme toujours compacte.

La figure 18c illustre un instant intermédiaire du cycle, pour un angle de vilebrequin de 130°, avec au fond, proche du sommet de chambre, une ouverture partielle des quatre lumières des faces de cylindre des pistons (56i : arbitrairement d'échappement).

La figure 18d illustre le point mort bas, pour un angle de vilebrequin de 180°, où le volume de chambre (35) est maximum, avec une ouverture complète des quatre lumières du fond (56i).

Une autre façon de comprendre le fonctionnement et l'étanchéité du moteur, est de voir que les pistons (50) se frôlent sans se toucher, à tout moment du cycle, avec un écartement très faible et variant très peu au cours du cycle par la forme et le positionnement judicieux de la trajectoire de glissière entre autres dimensions. Ce sont les segments (75) ou les faces coupe-feu (68) qui ferment le volume de la chambre avec les faces de cylindre et assurent l'étanchéité, sur toutes les arêtes frontière, d'un sommet de chambre à l'autre.

Ces quatre figures 18a, 18b, 18c et 18d ne limitent pas l'invention, en effet d'autres agencements de bougies et injecteurs direct sont possibles, en passant par une bougie et un injecteur sur un même piston, ou aussi un injecteur ne débouchant pas par la calotte sphérique ou la portion de combustion, mais débouchant sur la portion de glissement dans le cas d'un moteur à allumage commandé, pour permettre une injection en début de compression, répartissant le spray au centre de la chambre, avec une préférence pour les configurations avec une répartition équilibrée autour de l'axe Z du moteur.

Ces quatre figures 18a, 18b, 18c et 18d montrent les injecteurs et bougies, mais ne montrent pas leurs amenées électriques et de carburant. Cette omission ne limite pas l'invention. En effet, ces amenées peuvent être des fils ou tuyaux, souple et déformables élastiquement, voire des conduites télescopiques articulées.

### Vue d'ensemble d'un moteur monocylindre

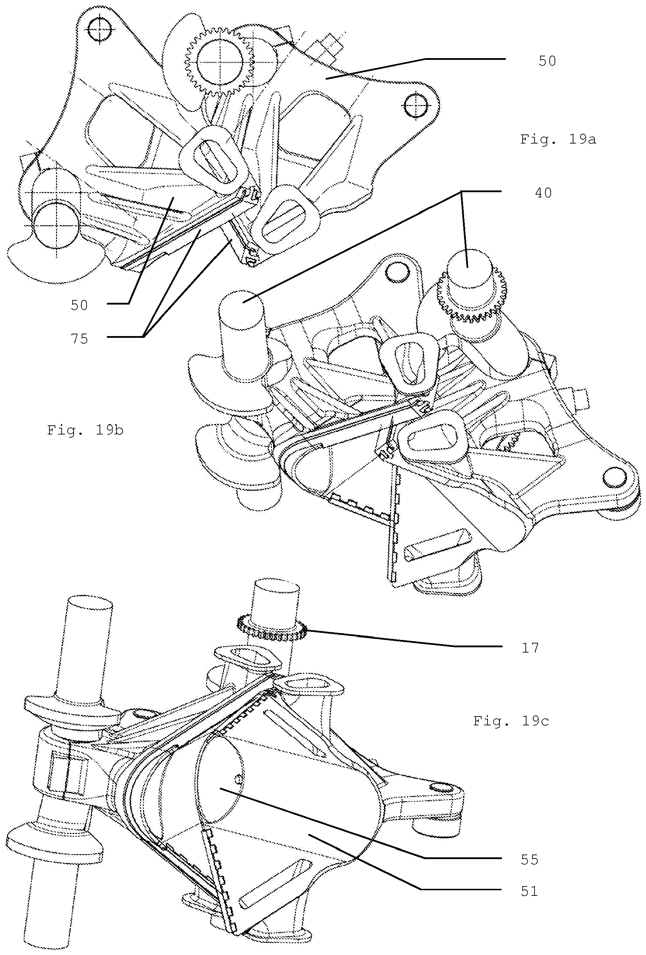

L'ensemble des figures de la figure 19a à la figure 23b, montrent un moteur monocylindre, selon une réalisation particulière de l'invention, qui se complète par ses éléments le constituant, au fur et à mesure des figures et dont les ensembles piston sont une réalisation préférentielle du type à piston segmenté avec un segment d'arête.

Les figures 19a, 19b et 19c, selon différents angles de vue, selon l'axe Z du moteur pour la figure 19a et isométrique pour les deux autres, montrent l'assemblage partiel d'un cylindre du moteur, comportant deux ensembles pistons adjacents, sur quatre, avec leur deux piston (50) et les deux vilebrequins (40) correspondants, orientés à 90°, c'est à dire à une position du cycle à mi-course. On note l'imbrication d'un piston dans l'autre, avec un contact réalisé sur la face de cylindre (51), par le segment d'arête (75).

La figure 19c par son angle de vue permet de montrer la chambre (55). Un vilebrequin comporte un pignon (17), d'entrainement d'une glace rotative. On voit que la calotte sphérique (55) creusée dans la face de cylindre (51) sur le piston, permet d'obtenir un rapport Surface / Volume de la chambre, faible, proche de celui de la sphère, lorsque le volume de chambre est minimum (PMH).

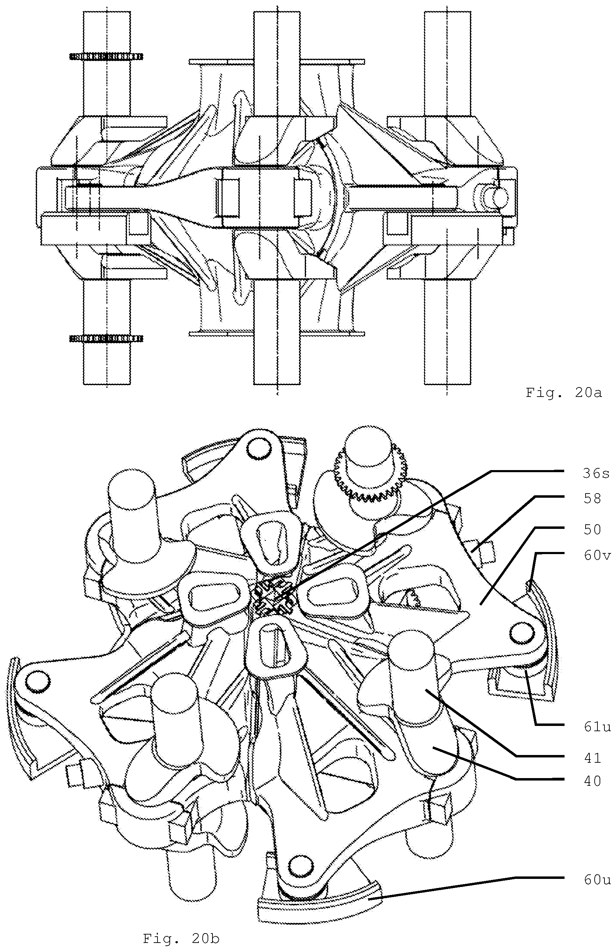

Les figures 20a et 20b, montrent, au point mort bas du cycle, un même cylindre, partiel mais avec les quatre glissières fixes et leurs flancs (60u, 60v), dans lesquels roulent les galets (61u), et quatre attelages mobiles, chacun comprenant un piston (50) et un vilebrequin (40) dont les tourillons (41) sont visibles. On remarque également le sommet supérieur (36s), de la chambre, vu par l'extérieur de celle-ci.

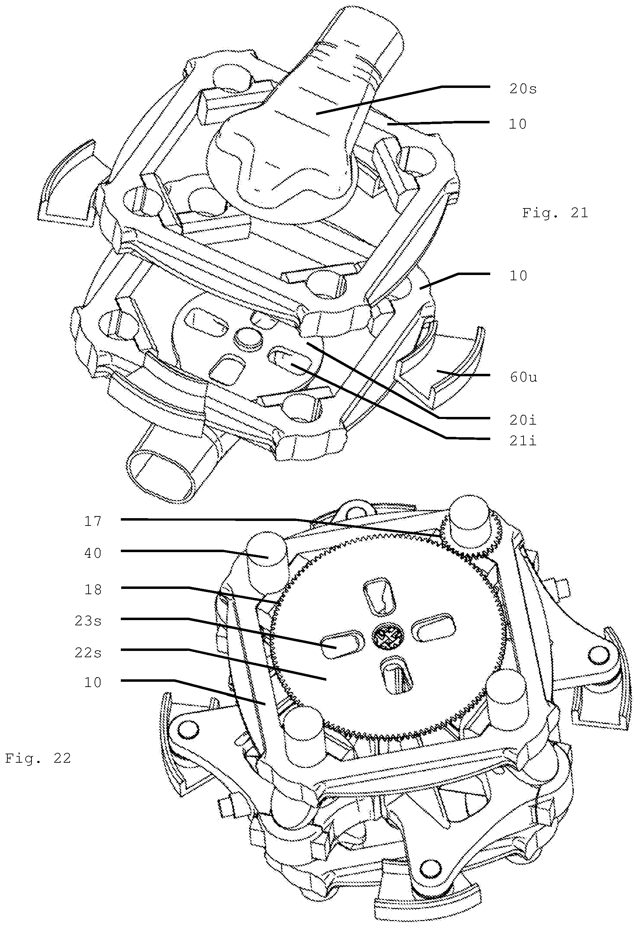

La figure 21 présente, pour un cylindre, ses éléments fixes, liés à l'ensemble châssis, à savoir ici 4 glissières (60u), le collecteur supérieur (20s) et le collecteur inférieur (20i), dont on aperçoit les 4 lumières (21i), le cadre porte-vilebrequin (10) qui prend la forme de deux cadres, éléments structuraux car reprenant les forces transmises par les vilebrequins au niveau de leur 2 fois 4 paliers de tourillons.

La figure n'est pas limitative de l'invention :
- elle pourrait comporter 2 fois quatre glissières (60u) si les pistons étaient à double galet ou élément glissant.
- Les éléments fixes ne sont pas représentés reliés entre eux ce qui n'est pas le cas dans la réalité mais simplificateur pour l'explication et la représentation. Dans la réalité, un carter lierait tous ces éléments entre eux et serait également démontable, comme le suggère le dessin du cadre porte-vilebrequin (10) par les fentes au niveau des paliers pour tourillons des vilebrequins, même si en réalité ces fentes ne permettent pas un montage du moteur car orientées vers l'intérieur.

Un carter du moteur selon l'invention peut être en 2 parties, dont le plan de découpe est médian, perpendiculaire à l'axe Z pour un monocylindre ou passant par l'axe Z du moteur et les axes de 2 vilebrequins opposés, ou passant par l'axe Z et entre les axes des vilebrequins pour un multicylindre, ou autre.

La figure 22 représente un cylindre presque complet. On note, par rapport aux figures 20b et 21, le rajout la glace rotative supérieure (22s) avec ses quatre lumières (23s), entrainée via sa roue dentée (18) par le pignon d'entrainement de la glace rotative (17).

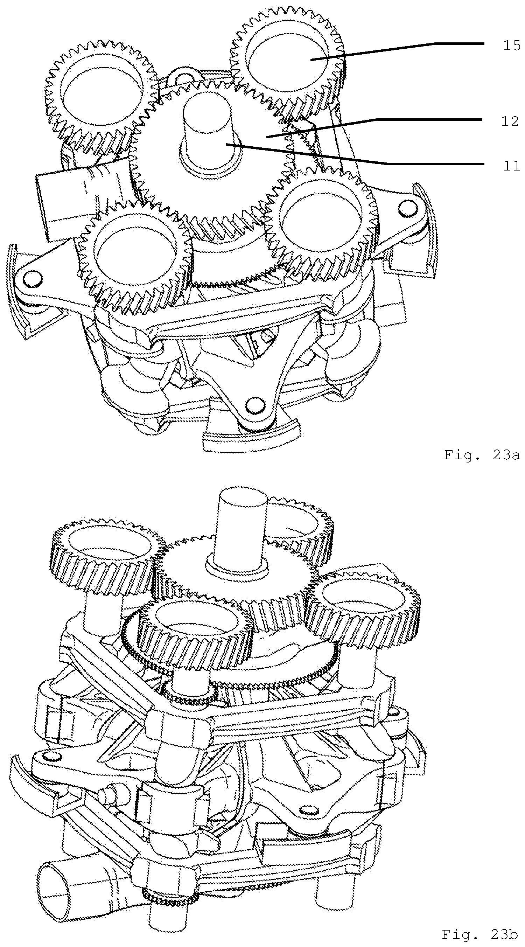

Les figures 23a et 23b montrent un assemblage complet des éléments qui composent un moteur monocylindre selon l'invention. Bien-sûr ces deux figures 23a et 23b ne limitent pas l'invention, pour le monocylindre de laquelle elles montrent les éléments principaux. N'apparait pas la visserie, les carters enveloppes, les amenées de courant et d'essence dans les injecteurs et/ou bougies...

Par rapport aux 7 figures précédentes, apparait le dispositif de synchronisation et l'arbre de sortie (11) du moteur, qui via sa roue (12), engrène les quatre satellites (15), chacun faisant tourner un vilebrequin.

Ces deux figures montrent également la compacité du moteur monocylindre.

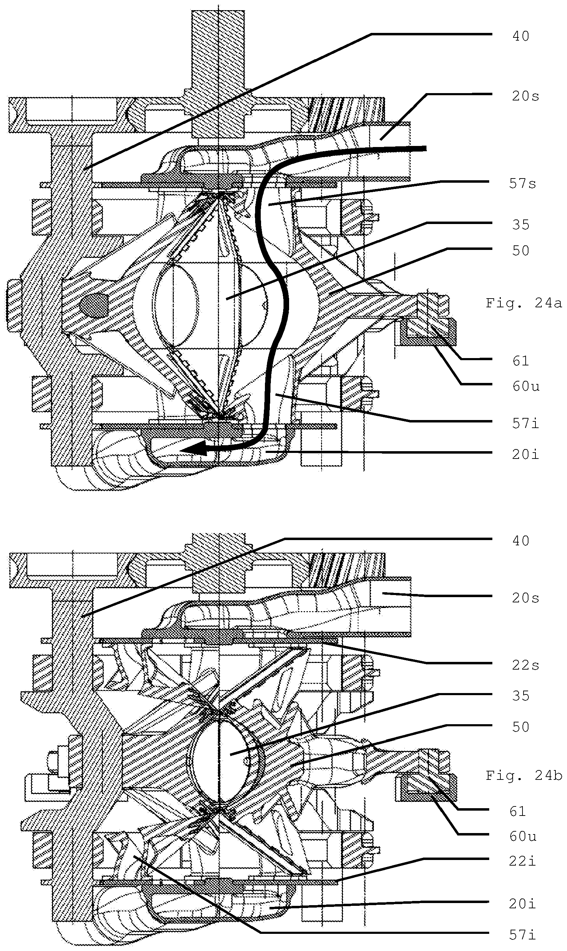

Les figures 24a et 24b, illustrent en coupe, le monocylindre complet des deux figures 23a et 23b précédentes, réalisation particulière de l'invention, à deux instants différents du cycle, respectivement au point mort bas et au point mort haut. Elles complètent la figure 16 sur la distribution.

La coupe est brisée verticalement par l'axe Z du moteur. Ainsi, à gauche, le plan de coupe, coupe un vilebrequin (40) et à droite, il coupe un galet roulant (61) dans sa glissière (60u).

La figure 24a, par la flèche noire épaisse représentant le trajet des gaz, montre l'admission des gaz frais dans la chambre (35) par le collecteur d'admission (20s) et les transferts supérieurs (57s), et l'échappement des gaz brûlés de la chambre (35) par les transferts (57i) et le collecteur inférieurs (20i), ce qui caractérise une chambre dite à balayage équicourant ou unidirectionnel.

La figure 24b permet d'apprécier la compacité de la chambre (35), sa forme quasi-sphérique au point mort haut. Aussi on remarque que les glaces rotatives (22s et 22i) ferment les lumières des collecteurs et les transferts (57i, 57s) des pistons (50).

Ces deux figures 24a et 24b ne limitent pas l'invention. En effet, comme elles sont plaquées contre les collecteurs d'admission (20s) et d'échappement (20i), une des deux glaces rotatives (22s ou 22i) peut comporter un mécanisme de maintien en pression et en contact des plats de transfert (64) des pistons et de compensation des dilatations différentielles. Ce mécanisme de maintien ferait comme épaissir l'une des deux glaces rotatives.

Ces quatre figures 23a, 23b, 24a et 24b, ne représentent pas la liaison pivot qui maintient l'arbre de sortie (11) à un élément fixe du moteur, pour des raisons de simplification et de clarté. Cette liaison est dans la réalité bien-sûr indispensable, comme présenté à la figure 6b.

### Allumage laser

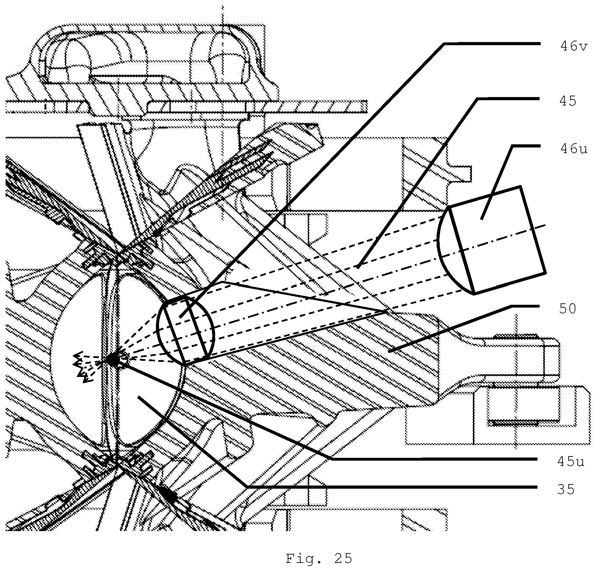

La figure 25 illustre sur une coupe d'un cylindre au point mort haut, une réalisation particulière du moteur selon l'invention, utilisant un allumage par rayon laser. Ici, le rayon laser est émis par un premier sous-dispositif optique (46u), fixe, comprenant donc la source laser et dirigeant ses rayons (45) vers un second dispositif optique (46v), dont la fixation au piston (50) mobile maintient bien-sûr l'étanchéité de la chambre (35) et dont une face optique débouche dans la chambre et focalisant le rayon en un point (45u) situé au plus près du centre de la chambre (35), à un moment du cycle qui précède légèrement le point mort haut. L'alignement optique idéal des deux sous-dispositifs optiques (46u, 46v) étant obtenu vers ce moment du cycle, quand à lieu l'allumage de la source laser.

Dans un mode de fonctionnement particulier du moteur selon l'invention, en charge partielle, où la chambre conserverait au moins 40% de gaz résiduels issus du cycle précédent, le point de focalisation (45u) pourrait être situé toujours au plus proche de l'axe Z du moteur, mais plus haut dans la chambre (35), côté admission donc, pour être sûr d'enflammer les gaz frais admis.

### Agencements du moteur suralimenté et multicylindres

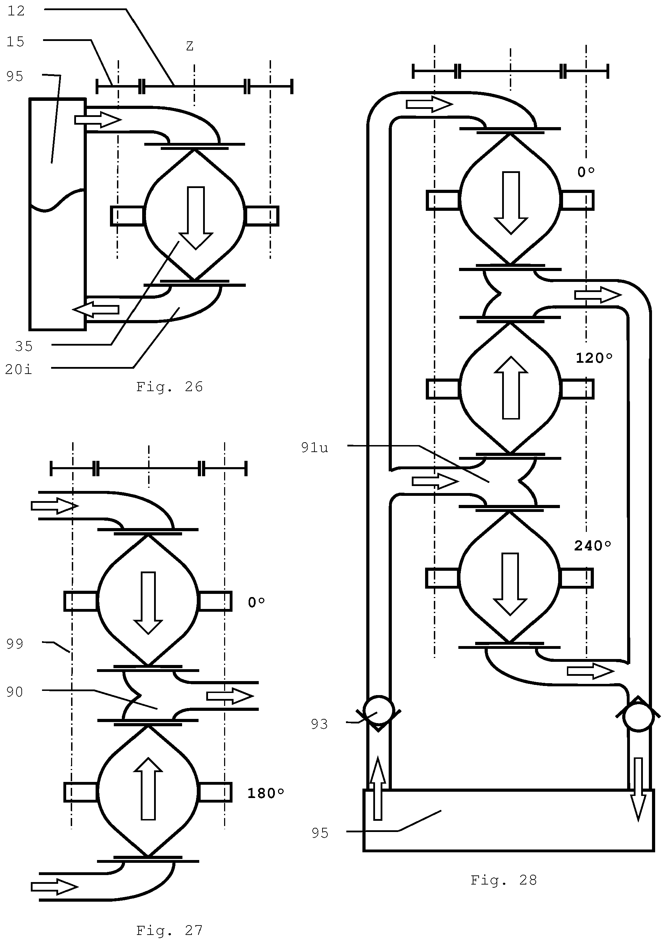

L'ensemble des figures de la figure 26 à la figure 30, montre des agencements possibles et particuliers du moteur selon l'invention, du monocylindre au quatre cylindres avec différents dispositifs de suralimentation possible, sans être exhaustif.

Le dispositif de suralimentation est classiquement composé côté admission d'au moins un compresseur, par exemple non exhaustif du type centrifuge ou volumétrique à rotors à lobes engrenant ou palettes ou axial... et/ou côté échappement d'au moins une machine de détente, par exemple non exhaustif du type turbine, axiale, centripète, machine volumétrique, à piston... Ces machines de détente et de compression entraînant ou étant entrainée par une liaison mécanique avec l'arbre du moteur (compound mécanique), en prise directe ou via réducteur à rapport de réduction fixe ou via transmission à variation continue ou entre elles en prise directe comme dans le turbocompresseur classique ou au moins par un moteur ou générateur électrique (compound électrique).

La figure 26 schématise un moteur monocylindre avec sa suralimentation. Ici la représentation du monocylindre est simplifiée à l'extrême, symbolisée par ce losange ayant 2 coins carrés situés sur l'axe Z du moteur et les deux autres coins arrondis, pour symboliser la chambre en coupe, et deux pistons symbolisés par les deux carrés latéraux. La chambre est balayée par les gaz dans le sens de la flèche : les gaz frais sont admis par le haut, les gaz brûlés s'échappent par le bas. Les pistons sont reliés aux lignes de vilebrequin, dont 2 sont symbolisés par leur axe (99) indiqué figure 27, et entraînés via leur satellite (15) qui engrène sur la roue (12) liée à l'arbre de sortie. Les collecteurs d'admission et d'échappement (20i) sont symbolisés et connectés au dispositif de suralimentation (95), ici générique, via des flèches.

Ces symboles sont repris pour les figures suivantes, de la figure 27 à la figure 30 où ils y représentent les mêmes éléments.

La figure 27 schématise un moteur bicylindre sans suralimentation représentée et avec un agencement particulier de son échappement. Les indications 0° et 180° indiquent le phasage relatif des angles des manetons d'un même vilebrequin pour un cycle ici deux temps sur 360° de rotation de vilebrequin. Les deux cylindres sont donc en opposition de phase.

A la lecture du sens des flèches dans leur chambre, le cylindre supérieur échappe vers le bas alors que le cylindre inférieur échappe vers le haut, leurs collecteurs d'échappement ont alors été fusionnés dans un unique collecteur dit collecteur d'échappement 2 en 1 (90).

La figure 28 schématise un moteur à trois cylindres, déphasés entre eux d'un tiers de cycle à la lecture des indications d'angles : 0°, 120° et 240°, moteur suralimenté et avec des tubulures particulières. On y retrouve un collecteur d'échappement 2 en 1 et sur le même principe, un collecteur d'admission 1 en 2 (91u). Apparaissent des valves anti-retour (93) à l'admission, comme à l'échappement, qui doivent, si le moteur fonctionne en cycle de Miller-Atkinson, permettre un pompage au démarrage du moteur, pour alimenter les chambres en gaz frais, sans avoir à utiliser de compresseur volumétrique ni de compresseur électrique, absents du dispositif de suralimentation (95), qui ne comporterait alors qu'une turbo-compression classique, libre de rotation, à un ou plusieurs étages en série ou en parallèle...

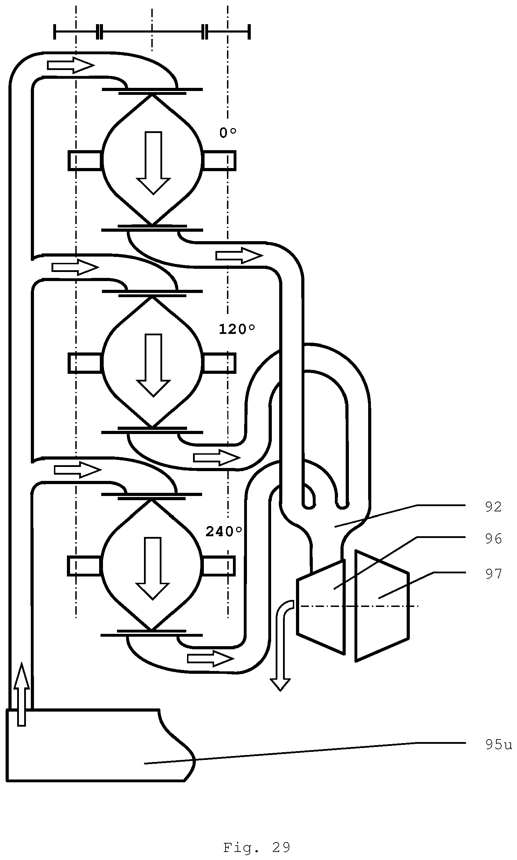

La figure 29 schématise un moteur à trois cylindres suralimenté où les tubulures d'échappement sont agencées pour former une tubulure dite tubulure d'échappement 3 en 1 (92) où chacune des trois tubulures du collecteur d'échappement au raccord avant la turbine (96), présente la même longueur ou le même volume, pour permettre un accord ou une régulation entre les 3 cylindres, les ondes de pression d'échappement en entrée de la turbine (96).

Cette turbine (96) entrainant un compresseur (97), faisant alors partie du dispositif de suralimentation, alors partiellement représenté côté admission (95u). L'admission est en râteau, sans originalité.

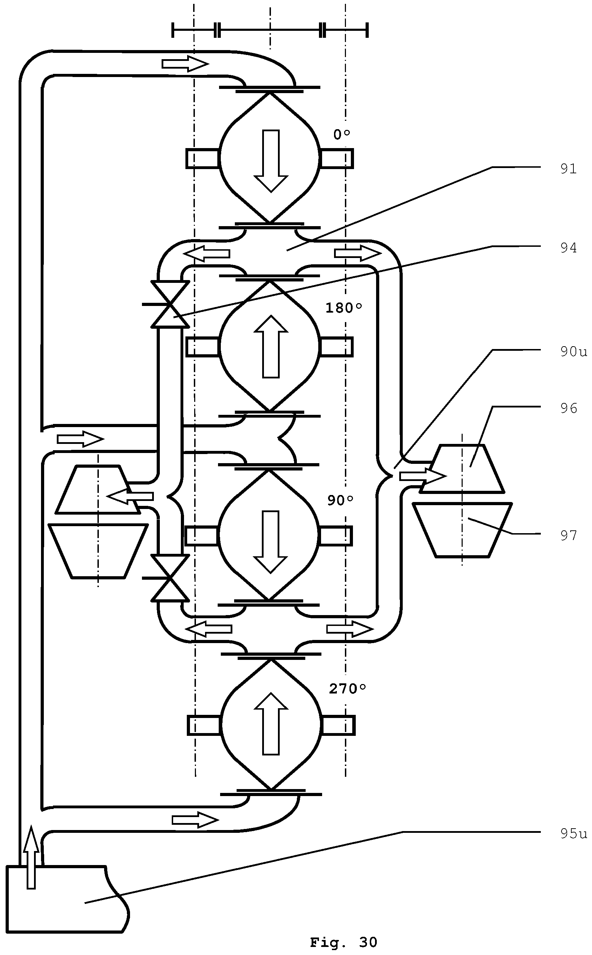

La figure 30 schématise un moteur à quatre cylindres suralimenté. Ici, les cylindres adjacents fonctionnent en opposition de phase à 0°/180° et 90°/270° de phasage et leurs échappements sont groupés par paires, deux à deux par des collecteurs dits collecteurs d'échappement 2 en 2 (91). Les échappements sont ensuite regroupés par des tubulures dites tubulures d'échappement 2 en 1 (90u), chacune alimentant une turbine (96). Aussi ces tubulures disposent de vannes (94) dont la fermeture d'un même côté, c'est-à-dire des deux branches d'une tubulure d'échappement 2 en 1 (90u) alimentant une même turbine (96), permet, lors des fonctionnements à charge moyenne ou partielle du moteur, de concentrer les gaz d'échappement sur la moitié des turbos-compresseurs, pour en conserver l'efficacité.

L'admission est classique, en râteau avec juste un collecteur d'admission 1 en 2 au centre, provenant du système de suralimentation partiellement représenté (95u).

### Equilibrage dynamique anti basculement

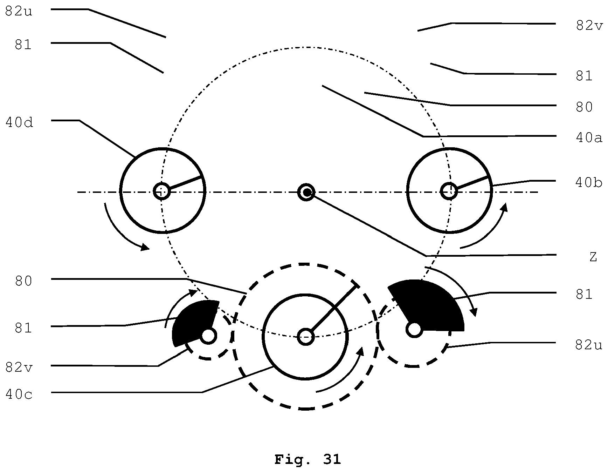

La figure 31 présente un dispositif d'équilibrage des harmoniques 2 et 3 du couple de basculement du moteur selon l'invention, selon son axe Z. En effet, par son agencement en répétition circulaire de N ensembles pistons louvoyant et N vilebrequins, autour d'un axe Z, le moteur est équilibré selon son axe Z en statique, mais présente en dynamique un couple dit de basculement selon son axe Z, due à l'inertie des attelages mobiles en mouvement en plus de la fluctuation du couple moteur sur l'arbre de sortie. Pour équilibrer totalement ce basculement inertiel du moteur, il faut donc annuler ou atténuer les harmoniques 2, 3, 4,... (variable selon N) de rotation selon l'axe Z, naturellement générées par le mouvement de louvoiement des pistons. L'harmonique 1 ou fondamental pouvant être classiquement équilibrée par des contrepoids sur les vilebrequins ou par simple annulation à partir de deux cylindres.

Cette figure 31 montre l'annulation de l'harmonique 2, par un agencement, ici de deux balourds (81), diamétralement opposés par rapport à l'axe Z du moteur, tournant dans le même sens, mais en opposition de phase, par engrènement via le pignon d'entrainement de balourd d'harmonique 2 (82u), avec les deux roues entrainant le balourd (80), chacune solidaire d'un des deux vilebrequin (40a et 40c) diamétralement opposés. Par le rapport double des périmètres primitifs de la roue entrainant le balourd (80) sur celui du pignon d'entrainement de balourd d'harmonique 2 (82u), le balourd tourne ainsi à une vitesse double des vilebrequins, ce qui correspond à l'harmonique 2. Cette vitesse est double, en moyenne par demi-cycle, mais pourrait fluctuer avec un pignon d'entrainement de balourd d'harmonique 2 (82u) au primitif non circulaire, pour ajuster davantage l'atténuation des vibrations en faisant éventuellement l'économie de balourds d'harmoniques supérieurs.

Pour l'annulation de l'harmonique 3, c'est le même principe avec une paire de pignons d'entrainement de balourd (82v) d'harmonique 3, tournant 3 fois plus vite que les deux mêmes vilebrequins qui les entrainent.

Cette figure 31 n'est qu'un exemple illustré d'une réalisation particulière de l'invention, qui ne limite pas les réalisations possibles d'un tel dispositif d'équilibrage de l'invention, dispositif non indispensable surtout à partir de trois cylindres et au-delà. Au lieu d'une paire de balourds diamétralement opposés, l'invention peut disposer de quatre balourds équitablement répartis autour de l'axe Z du moteur, pour un même harmonique, et entrainés par quatre comme par deux vilebrequins.

### Acyclisme

Chaque mécanisme cyclique d'entrainement et d'orientation (30) comporte au moins un arbre d'entrainement (39) en rotation continue et monotone. Ici la rotation continue et monotone, se comprend comme dans tout moteur thermique alternatif : selon la charge, le régime, le nombre de cylindres... en régime dit constant, les vilebrequins et l'arbre de sortie tournent avec de l'acyclisme.

### Dispositif de lubrification / refroidissement

Il n'est pas excessivement plus spécifique que sur un autre moteur conventionnel ou moteur à piston rotatif Wankel, si ce n'est qu'un refroidissement exclusivement liquide à l'huile est plus simple qu'un refroidissement à l'eau, car l'huile ou le circuit d'huile est déjà présent pour la lubrification.

Selon un mode particulier de réalisation de l'invention, l'huile est amenée classiquement par les paliers de manetons de vilebrequins, près des surfaces de la chambre via différents canaux dans le piston.

Pour la version d'ensemble piston à face coupe-feu, les conduits de refroidissement autour de la chambre de combustion peuvent être aménagés au plus près dans la face coupe-feu ou sinon dans l'interface de glissement/frottement entre la face et le piston ou dans le piston.

L'huile peut-être ensuite évacuée préférentiellement par centrifugation depuis les bords de l'ensemble piston vers le carter/châssis, idéalement selon un plan d'éjection, perpendiculaire à l'axe Z du moteur, ne coupant pas les lumières de face des ensembles pistons, pour ne pas y introduire de lubrifiant.

Les transferts d'échappement peuvent comporter des ailettes de refroidissement.

### RESUME DE L'INVENTION

A cet effet, l'objet principal est un moteur thermique, à combustion interne, alternatif, disposant d'un ensemble châssis, fixe, comportant au moins un ensemble élémentaire appelé cylindre, de centre O déterminé sur un axe Z du moteur, le cylindre comprenant :
- un nombre entier N, N supérieur ou égal à 3, d'attelages mobiles également répartis en révolution autour de l'axe Z du moteur, chaque attelage mobile comprenant au moins les éléments suivants :
   o Un ensemble piston, comprenant au moins :
      - une face de cylindre (51), surface globalement réglée et globalement concave selon un axe de glissement W repéré par rapport à l'ensemble piston, axe autour duquel elle est incurvée, cet axe étant perpendiculaire à l'axe Z du moteur ;
      - une surface de glissement (52) dont l'intersection avec un bord de la face de cylindre (51) est une ligne d'arête, dite arête frontière (53) et
      - un dispositif d'étanchéité comprenant la surface de glissement (52).
   ∘ Un mécanisme cyclique d'entraînement et d'orientation (30), comprenant au moins un arbre d'entrainement (39), en rotation cyclique et monotone, qui entraine et positionne l'ensemble piston par rapport à l'ensemble châssis, selon un mouvement dans un plan P perpendiculaire à l'axe Z du moteur.
- Cylindre dans lequel la surface de glissement (52) de l'ensemble piston de rang M, glisse avec contact sur une portion de glissement (48u) de la face de cylindre (51) de l'ensemble piston de rang M-1, dit ensemble piston adjacent et entourant, de l'ensemble piston de rang M dit adjacent et entouré, et la surface de glissement du premier ensemble piston (52a) glisse avec contact sur une portion de glissement de la face de cylindre (51d) de l'ensemble piston de rang N, M étant un nombre entier prenant les valeurs de 1 à N, les N faces de cylindre (51a, 51b, 51c,...) des N ensembles pistons, délimitant à elles seules, au dispositif d'étanchéité près, entre elles, autour du centre O du cylindre, un volume de travail dit chambre (35),
   o A tout instant d'un cycle, toutes les N arêtes frontière (53) des N ensembles pistons, se croisent en un sommet supérieur (36s) et un sommet inférieur (36i) situés sur l'axe Z du moteur, de part et d'autre du centre O du cylindre,
   o Au cours d'un cycle le volume de la chambre (35) atteint au moins un minimum au moment du cycle appelé point mort haut et au moins un maximum au moment du cycle appelé point mort bas,
   o Au point mort haut, le volume de la chambre (35) est cerné par les N portions, nommées portions de combustion (48v), des faces de cylindre (51a, 51b, 51c,...) des N ensembles pistons, ces portions de combustion (48v) étant adjacentes aux portions de glissement (48u),
- Cylindre comprenant un dispositif de distribution, assurant au cours d'un cycle, l'échappement, l'admission et le confinement des gaz dans la chambre (35),
Le moteur comprenant également au moins un dispositif de synchronisation, synchronisant en fréquence et phase les N arbres d'entrainement (39) des N mécanismes cycliques d'entraînement et d'orientation (30), selon leur répartition en révolution autour de l'axe Z du moteur, pour un même cylindre et dispositif de synchronisation agissant pour chaque cylindre du moteur.

Dans une réalisation particulière de l'invention, on a, pour le mécanisme cyclique d'entraînement et d'orientation (30) :
- L'arbre d'entrainement (39) en rotation cyclique est une portion à une manivelle d'un unique vilebrequin (40), dont les tourillons (41) pivotent dans le cadre porte-vilebrequin (10), selon un axe parallèle à l'axe Z du moteur et dont le maneton (42), d'axe parallèle aux tourillons (41), pivote dans l'ensemble piston, constituant un mécanisme d'entraînement de l'ensemble piston,
- Il relie cinématiquement chaque ensemble piston à l'ensemble piston adjacent et entourant, par une liaison glissière (32) de trajectoire qui est sensiblement une génératrice de la portion de glissement (48u) de la face de cylindre (51) de l'ensemble piston entourant.

Dans une réalisation préférentielle de l'invention, s'opposant au cas précédent, on a, pour le mécanisme cyclique d'entraînement et d'orientation :
- L'arbre d'entrainement (39) en rotation cyclique est une portion à une manivelle d'un unique vilebrequin (40), dont les tourillons (41) pivotent dans le cadre porte-vilebrequin (10), selon un axe parallèle à l'axe Z du moteur et réalise une rotation continue et monotone, d'un tour par cycle et dont le maneton (42), d'axe parallèle aux tourillons (41), pivote dans l'ensemble piston, constituant un mécanisme d'entraînement de l'ensemble piston ;
- Il comprend un mécanisme d'orientation (31) de l'ensemble piston le reliant à l'ensemble châssis.

Dans une réalisation préférentielle de l'invention, sur base du cas précédent, le mécanisme d'orientation (31) de l'ensemble piston est une liaison cinématique dite par glissière pivot, définie par une liaison glissière entre une glissière (60u) de trajectoire de glissière (60) déterminée, fixe, matériellement liée à l'ensemble châssis et entre un élément mobile (61), mobile le long de ladite glissière (60u) et pivotant via une liaison pivot dite pivot de glissière (62) sur l'ensemble piston selon un axe parallèle à l'axe Z du moteur, ladite trajectoire de glissière (60) étant courbe et plane, dans un plan perpendiculaire à l'axe Z du moteur.

Dans une réalisation préférentielle de l'invention, particularisant davantage le cas précédent, l'élément mobile (61) fait partie du groupe constitué par :
- un galet roulant (61u), roulant dans la glissière (60u) matériellement en forme de rainure, selon le sens du contact sur l'un ou l'autre des flancs de glissière (60v) de cette rainure, dont l'espacement maintient le galet roulant (61u) avec un jeu minimum, galet ayant pour axe le pivot de glissière (62).
- un sabot glissant (61v), glissant dans la glissière (60u) matériellement en forme de rainure, contre les flancs de glissière (60v) de cette rainure, dont l'espacement maintient ledit sabot avec un jeu minimum, et pivotant selon le pivot de glissière (62) sur l'ensemble piston.
- un sabot roulant (61w), si muni de rouleaux (61x), roulant dans la glissière (60u) matériellement en forme de rainure, contre les flancs de glissière (60v) de cette rainure, dont l'espacement maintient ledit sabot roulant (61w) avec un jeu minimum, et pivotant selon le pivot de glissière (62) sur l'ensemble piston.
- un sabot glissant et roulant, combinaison des deux points précédents, muni de rouleaux (61x) positionnés pour n'assurer le contact de roulement que d'un seul côté contre un seul flanc de glissière (60v), et assurer de l'autre côté contre l'autre flanc de glissière, un glissement.

Dans une réalisation particulière de l'invention, sur base des deux cas précédents, on a, pour l'axe Z du moteur, pris pour origine de coordonnées (x=0 mm ; y=0 mm) :
- où l'axe des 4 vilebrequins (40) est à une distance sensiblement de a*84 mm de l'axe Z du moteur. Les axes de vilebrequin sont situés deux sur l'axe des X et deux sur l'axe des Y, axes dans lesquels sont exprimées les coordonnées des points ci-après
- où les manetons de vilebrequins sont excentrés de sensiblement a*16,3 mm
- la distance orthogonale entre l'axe du pivot du piston (50) avec le maneton (42) et son arête frontière (53) est de sensiblement a*56,1 mm
- la distance entre le pivot du piston (50) avec le maneton (42) et le pivot de glissière (62) est de sensiblement a*86,7 mm.
- la trajectoire de glissière (60) est une courbe la plus régulière possible, passant sensiblement au plus près de 5 points de coordonnées :
   1. (X= a*69,4 ; Y= a*95,8)
   2. (X= a*77,2 ; Y= a*91,8)
   3. (X= a*85,0 ; Y= a*85,3)
   4. (X= a*92,8 ; Y= a*76,0)
   5. (X= a*100,7; Y= a*62,2)

Dans une réalisation préférentielle de l'invention, sur base de tous les cas précédents, pour chaque cylindre, le dispositif de distribution est constitué par un dispositif d'admission et un dispositif d'échappement, distincts, tels que :
- Chaque dispositif d'admission ou d'échappement comprend au moins :
   ∘ un collecteur d'admission (20s) ou d'échappement (20i), rigidement lié à l'ensemble châssis, disposant d'une face plane, perpendiculaire à l'axe Z du moteur, du côté du centre O du cylindre ;
   ∘ une glace rotative (22), plane, fine et perpendiculaire à l'axe Z du moteur, à une distance quasi fixe du centre O, entraînée en rotation selon l'axe Z du moteur, dans un sens ou dans l'autre, à une vitesse de rotation moyenne d'un N-ième de tour par cycles au moyen d'un mécanisme d'entraînement de glace rotative (22), et ayant, de ses deux faces planes perpendiculaire à l'axe Z du moteur donc, une première face plane glissant contre la face plane du collecteur (20) ;
- Pour chaque dispositif d'admission ou d'échappement, le collecteur (20) et la glace rotative (22) comprennent chacun N lumières (21, 23) de forme déterminée, réparties en répétition régulière de révolution autour de l'axe Z du moteur, permettant d'ouvrir et de fermer le passage de la glace rotative (22) au collecteur (20), via leurs lumières 21, 23), selon le moment du cycle,
- Chaque dispositif d'admission ou d'échappement comprenant dans chaque ensemble piston deux conduits de transfert (57) : un transfert d'échappement (57i) et un transfert d'admission (57s), dont l'extrémité la plus éloignée du centre O du cylindre comprend un bord plan, dit plat de transfert (64), perpendiculaire à l'axe Z du moteur, glissant sur la seconde face plane de la glace rotative (22), les transferts (57) étant mis en communication durant une période déterminée au cours du cycle, à un moment proche du point mort bas :
   ∘du même côté du transfert (57), transfert mis en communication donc, avec l'ouverture d'une des N lumières de la glace rotative (22),
   ∘ de l'autre côté du transfert (57), durant une seconde période déterminée au cours du cycle, transfert (57) mis en communication donc, avec la chambre (35), via une lumière d'admission (56s) ou une lumière d'échappement (56i), judicieusement dessinée et placée sur la portion de glissement (48u) de la face de cylindre (51) de l'ensemble piston, par le passage et le positionnement devant cette lumière de la surface de glissement (52) de l'ensemble piston adjacent glissant sur cette portion de glissement (48u) de la face de cylindre (51).

Dans une réalisation particulière, basée sur le cas précédent, le mécanisme d'entraînement de glace rotative (22) est un engrenage dont une roue dentée a pour axe de rotation l'axe Z du moteur et est solidaire de la glace rotative (22), dite roue dentée de la glace rotative (18) et, engrenant avec cette roue ; directement ou via un pignon intermédiaire avec un phasage éventuellement réglable au moyen d'un déphaseur disposé dans ledit mécanisme d'entraînement de glace rotative (22) ; le pignon denté solidaire du vilebrequin (40) et coaxial, dit pignon d'entrainement de la glace rotative (17).

Dans une réalisation particulière de l'invention, sur base des deux cas précédents, au moins un dispositif d'admission ou d'échappement comporte une seconde glace fine et plane, dite glace supplémentaire (24), fixe mais réglable, intercalée doublement glissante selon deux plans perpendiculaire à l'axe Z du moteur, entre la glace rotative (22) et le collecteur (20), telle que, par la variation de sa position angulaire autour de l'axe Z du moteur et la forme particulière de ses N lumières (25), réparties en répétition régulière de révolution autour de l'axe Z du moteur, les instants d'ouverture et/ou de fermeture des passages des transferts (57) au collecteur (20) puissent être avancés ou retardés dans le cycle du moteur, créant ainsi une distribution variable.

Dans une réalisation toute particulière de l'invention, sur base des trois cas précédents, la face de cylindre (51) de l'ensemble piston est munie, pour les lumières d'admission (56s) et/ou d'échappement (56i), d'un dispositif d'obturation de lumière, comprenant au moins une plaque dit obturateur de lumière (65) qui ferme le transfert (57) adjacent à cette lumière, durant toute la phase où le transfert (57) n'est pas en communication avec la chambre (35).

Dans une réalisation toute particulière de l'invention, sur base des quatre cas précédents, le dispositif de distribution, par la forme déterminée des lumières des dispositifs d'admission et d'échappement, met en oeuvre le cycle de Miller-Atkinson, autrement dit un diagramme de distribution où le volume de détente effective (88v) est supérieur au volume de compression effective (88u).

Dans une réalisation particulière, pour n'importe quelle configuration précédente, le dispositif de synchronisation des N mécanismes cycliques d'entrainement et d'orientation est constitué par un arbre de sortie (11) d'axe l'axe Z du moteur, comprenant au moins une roue (12) (ou pignon) dentée d'axe l'axe Z du moteur, engrenant avec N pignons (ou roues) dentés dit satellites (15), chacun étant rigidement lié ou issu de matière des arbres d'entrainement (39) ou vilebrequin (40) et coaxial.

Dans ce dernier cas, on a, coaxial à l'arbre de sortie (11), un second arbre de sortie dit arbre contrarotatif (11v), c'est-à-dire tournant en sens inverse de l'arbre de sortie (11) et l'entourant, donc pivotant selon l'axe Z du moteur, comprend une couronne (13), dentée, engrenant intérieurement, avec N autres pignons satellites dit satellites supplémentaires (16), chacun étant rigidement liés ou issu de matière des arbres d'entraînement (39) ou vilebrequin (40) et coaxial.

Dans une réalisation particulière, pour n'importe quelle configuration précédente, la face de cylindre (51) d'au moins un des N ensemble pistons dispose d'une portion de glissement (48u) ayant une forme qui est une partie de la surface générée par le balayage selon une translation rectiligne d'axe de glissement W d'un profil de face de piston (54), contenu dans un plan, globalement concave autour du centre O du cylindre.

Dans une réalisation basée sur ce dernier cas, le profil de face de piston (54) est en forme de « V » à la pointe arrondie, générant une portion de glissement (48u) de la face de cylindre (51) qui est une partie d'une surface réglée comprenant deux surfaces planes, que raccorde, en continuité de tangence, un secteur de cylindre d'axe parallèle à l'axe de glissement W.

Dans une réalisation particulière, pour n'importe quelle configuration précédente, la face de cylindre (51) d'au moins un des N ensemble pistons dispose d'une portion de combustion (48v) qui comprend, sur sa zone centrale et jusqu'à proche de sa périphérie, une portion d'une calotte sensiblement sphérique ou ovoïde, dite calotte sphérique (55), concave autour du centre O du cylindre, qui appliquée N fois sur les N ensembles pistons forme au point mort haut, une chambre (35) de forme globalement sphérique ou ovoïde ayant pour axe principal de révolution l'axe Z du moteur et de centre le centre O du cylindre,

Dans une réalisation particulière, pour n'importe quelle configuration précédente, la face de cylindre (51) d'au moins un des N ensemble pistons dispose d'une portion de combustion (48v) qui comprend, sur sa zone périphérique adjacente à l'arête frontière (53), c'est à dire sur sa zone centrale où ne se déplacent pas les sommets de chambre (36s et 36i), un renflement (55u), forme dont la surface qui frôle sans la toucher la face de cylindre (51) de l'ensemble piston adjacent et entourant, s'éloigne légèrement de l'arête frontière (53), en la masquant partiellement.

Dans une réalisation préférentielle, pour n'importe quel cas précédent, l'ensemble piston se compose :
- D'un piston (50), comprenant :
   o Les demi-pivots extérieurs du pivot du maneton (42) de vilebrequin (40) et du pivot de glissière (62) de l'élément mobile (61), pivots d'axes parallèles à l'axe Z du moteur,
   ∘ presque toute la surface de la face de cylindre (51) de l'ensemble piston,
   ∘ Chaque transfert (57) d'admission (57s) et d'échappement (57i), fixé sur le piston (50) ou solidaire.
- Du dispositif d'étanchéité comprenant donc la surface de glissement (52) de l'ensemble piston, l'arête frontière (53) de l'ensemble piston et l'extrémité de la face de cylindre (51) du piston donc, adjacente à l'arête frontière (53) au moins sur les portions d'arête supérieure et inférieure (53s et 53i) où se déplacent des sommets supérieur et inférieur de chambre (36s et 36i), lié au piston par une liaison cinématique de type glissière, permettant la translation de la surface de glissement (52), de l'arête frontière (53) et de la portion de face de cylindre (51) n'étant pas liée au piston, translation selon l'axe de glissement W.

Dans une réalisation particulière, basée sur la réalisation précédente, le dispositif d'étanchéité est composé :
- d'un segment d'arête (75) comprenant :
   ∘ toute l'arête frontière (53) de l'ensemble piston,
   ∘ une partie de la surface de glissement (52) adjacente à toute la longueur de l'arête frontière (53)
   ∘ la bordure de la face de cylindre (51) de l'ensemble piston, adjacente aux portions d'arête supérieure (53s) et inférieure (53i) de l'arête frontière (53),
   ledit segment d'arête (75) est lié cinématiquement au piston (50), par le maintien dans une gorge du piston (50), créant une liaison cinématique de type glissière autorisant uniquement la translation rectiligne d'axe de glissement W par rapport au piston (50) et plaquant ce dernier sur la face de cylindre (51) de l'autre piston en regard, c'est-à-dire du piston (50) de l'ensemble piston adjacent et entourant, au moyen d'un dispositif de ressort
- de deux joints chicane (76), un supérieur (76s) et un inférieur (76i), chacun disposé le long ou sensiblement parallèle aux portions d'arête supérieure (53s) et portion d'arête inférieure (53i) de l'arête frontière (53), chaque portion supportant la trajectoire d'un des sommets de chambre, supérieur (36s) ou inférieur (36i), où chaque joint chicane (76) :
   ∘ est délimité sur une zone allongée et se confond dans la face de cylindre (51),
   ∘ est en contact en coin avec le segment d'arête (75), en lui permettant une translation linéaire selon une direction parallèle à la portion d'arête supérieure (53s) ou inférieure (53i),
   ∘ est plaqué contre ce segment d'arête (75), au moyen d'un dispositif de ressort,
   ∘ dispose, sur sa longueur, de créneaux (77) en reliefs, correspondant et s'emboitant avec un jeu minimum avec des créneaux réalisés dans le piston (50), autorisant un mouvement de translation, de direction l'emboitement.

Dans une réalisation toute particulière, basée sur la réalisation précédente, le dispositif d'étanchéité comprend également un ou plusieurs segment(s) secondaire(s) (78), tel(s) que :
∘ sa forme correspond sensiblement au décalage du segment d'arête (75) sur la surface de glissement (52)
∘ il comprend une partie de la surface de glissement (52), non adjacente à l'arête frontière (53), mais proche tout le long de l'arête frontière (53)
∘ il(s) est(sont) en contact(en contact par bloc), avec le segment d'arête (75), au moins au niveau des portions d'arête supérieure (53s) et inférieure (53i), matérialisant avec ce segment d'arête (75) la surface de glissement (52)
∘ il est lié cinématiquement au piston (50), par le maintien dans une gorge du piston, créant une liaison cinématique de type glissière autorisant uniquement la translation d'axe de glissement W par rapport au piston (50) et plaquant cedit segment secondaire (78) sur la face de cylindre (51) de l'autre piston en regard, c'est-à-dire du piston (50) de l'ensemble piston adjacent et entourant, au moyen d'un dispositif de ressort.

Dans une réalisation particulière, basée sur n'importe laquelle des réalisations précédentes, sauf les trois dernières, l'ensemble piston se compose de :
- Un piston (50), comprenant Les demi-pivots extérieurs du pivot du maneton (42) de vilebrequin (40) et du pivot de glissière (62) de l'élément mobile (61), ces pivots étant d'axes parallèles à l'axe Z du moteur
- Une face coupe-feu (68), comprenant la face de cylindre (51), la surface de glissement (52), l'arête frontière (53) et les transferts (57), et pouvant effectuer par rapport au piston (50) un mouvement guidé de translation rectiligne via une liaison glissière (69) d'axe parallèle à l'axe de glissement W, de faible amplitude, par glissement ou roulement, la surface de glissement (52), comprenant au moins une rainure sensiblement translatée de l'arête frontière (53), rainure accueillant un segment secondaire (78), d'étanchéité et/ou racleur, avec ses moyens de maintien en pression selon l'axe de glissement W ;
- Un dispositif de maintien en pression de la face coupe-feu (68) de l'ensemble piston numéro N, de sa surface de glissement (52), sur la face de cylindre (51) de la face coupe-feu (68) de l'ensemble piston numéro N-1, adjacent et entourant, constitué par un ou plusieurs ressorts (70), travaillant sensiblement dans l'axe de glissement W entre le piston (50) et la face coupe-feu (68) ;
- Un dispositif anti-accélération (71) permettant d'annuler quasi complètement la force d'inertie subie par la face coupe-feu (68) au cours de son mouvement cyclique de louvoiement, dispositif lequel constitué d'au moins un levier anti-accélération (71u) tel que :
   ∘ Comprenant une masselotte (71w) en son extrémité, amenant son centre de gravité au droit selon la direction de l'axe Z du moteur, du centre de gravité de la face coupe-feu (68) ;
   ∘ Pivotant selon un axe perpendiculaire à l'axe de glissement W par rapport au piston (50) ;
   ∘ Entrainant, par son extrémité opposée, par une liaison d'entrainement (71x), la face coupe-feu (68) dans son mouvement de translation relative selon l'axe de glissement W, avec un bras de levier multiplicateur d'effort, d'un rapport multiplicateur égal aux rapports de masse de la masse de la face coupe-feu (68) divisé par la masse du(des) levier(s) anti-accélération (71u) munis de leur(sa) masselotte (71w).

Dans une réalisation particulière, basée sur n'importe lequel des cas précédents, comportant un nombre K de cylindres, K supérieur ou égal à 2, où les K fois N arbres d'entrainement (39) ou portions de vilebrequins (40) de chacun des N attelages mobiles des K cylindres, sont orientées parallèles à l'axe Z du moteur pour être N fois coaxiaux, et sont entrainées synchrones et déphasées du nombre K de cylindre et forment donc un nombre N d'arbres d'entrainement identiques ou de vilebrequins (40) identiques, pour chacun selon un axe dit ligne de vilebrequin (99), vilebrequins comportant alors K manetons (42) déphasés de 360°/K si le moteur est en fonctionnement à 2 temps ou 720°/K si le moteur est en fonctionnement à 4 temps.

Dans une réalisation particulière, basée sur le cas précédent, deux collecteurs (20) de même type (admission ou échappement) de cylindres adjacents sont jumelés 2 à 2, car adjacents également car ces deux cylindres ont des directions opposées selon l'axe Z du moteur, de flux de balayage des gaz dans leur chambre (35) autour du moment du point mort bas et disposent d'au moins une tubulure d'admission ou d'échappement. Ces collecteurs jumelés sont nommés collecteur d'admission 1 en 2 (91u), collecteur d'échappement 2 en 1 (90) et collecteur d'échappement 2 en 2 (91).

Une réalisation particulière, basée sur n'importe quelle configuration précédente, comprend au moins un injecteur direct ou bougie d'allumage (58), porté par un piston (50) ou un ensemble piston et monté étanche, la tête d'injecteur ou de la bougie d'allumage débouchant dans la chambre (35) par un orifice (58w) au niveau de la face de cylindre (51) de l'ensemble piston, débouchant systématiquement sur la portion de combustion de la face de cylindre (51) pour une bougie et un injecteur de moteur à allumage par compression.

Dans une réalisation particulière, basée sur le cas précédent, l'injecteur direct (58) est du type injecteur pompe (58v), commandé par un dispositif de commande d'injection, et entraîné par le vilebrequin (40) ou l'arbre d'entrainement (39) du même ensemble piston où cedit vilebrequin (40) comporte une came (43) sur son maneton (42) et se comporte comme un arbre à came en tête, pour une culasse dont le rôle est ici tenu par le piston (50) ou l'ensemble piston qui comporte alors un mécanisme d'actionnement de la compression de l'injecteur pompe (58v), mécanisme d'actionnement pouvant consister en un levier d'injecteur (44).

Dans une réalisation particulière, basée sur n'importe lequel des cas précédents, au moins un cylindre dispose d'au moins un système d'allumage par laser, en focalisant son rayon laser (45) dans la chambre (35) par le moyen d'un dispositif optique laissant passer la longueur d'onde dudit laser, dont une face est située sur la portion de combustion de la face de cylindre (51) d'un ensemble piston,
Système d'allumage par laser caractérisé par un ou plusieurs éléments du groupe suivant :
- Le point de focalisation du rayon laser (45u), c'est-à-dire le point d'allumage est situé proche du centre de la chambre (35), c'est-à-dire le centre O du cylindre, au moment de l'allumage par impulsion laser, moment un peu en avance par rapport au point mort haut
- Le dispositif optique est constitué par deux sous-dispositifs optiques, le second sous-dispositif optique (46v), fixé sur le piston (50) ou ensemble piston et le premier sous-dispositif optique (46u) situé sur l'ensemble châssis, fixe et comprenant la source laser. Le rayon laser cheminant depuis le premier sous-dispositif optique (46u) fixe puis à travers le second sous dispositif optique (46v) mobile, les deux sous-dispositifs étant séparés par le vide qui sépare l'ensemble piston de l'ensemble châssis ou carter du moteur, les deux sous-dispositifs optiques étant positionnés alignés l'un par rapport à l'autre de façon optiquement acceptable au moment du cycle ou se réalise l'impulsion laser.
- Le dispositif optique ainsi que la source laser sont situés sur l'ensemble piston. L'alimentation électrique de la source laser est souple et chemine de l'ensemble châssis fixe à l'ensemble piston mobile.

Une réalisation particulière, basée sur n'importe lequel des cas précédents, comporte au moins un dispositif d'équilibrage dynamique, composé d'au moins deux balourds (81) disposés en répartition circulaire équilibrée autour de l'axe Z du moteur, pivotant selon des axes parallèles à l'axe Z du moteur, chacun entraîné en rotation par engrènement avec un arbre d'entrainement (39) ou vilebrequin (40), via une roue entrainant le balourd (80) solidaire du vilebrequin et via un pignon d'entrainement de balourd (82u ou 82v, selon l'harmonique) lié au balourd (81), à une vitesse moyenne, de même fréquence que l'harmonique du couple inertiel de basculement selon l'axe Z du moteur devant être atténué.

Une réalisation particulière, basée sur n'importe lequel des cas précédents, est munie d'un dispositif de suralimentation (95) comprenant un ou plusieurs éléments, combinés ou non ou identiques et redondés du groupe suivant :
- Un compresseur volumétrique à l'admission donc, entraîné mécaniquement avec un rapport fixe par l'arbre de sortie du moteur (11)
- Un compresseur volumétrique ou centrifuge entraîné électriquement
- Un carter de compression, lié à l'ensemble châssis et emprisonnant, pour chaque cylindre, le volume autour des ensembles pistons, dans lequel passent les gaz d'admission avant le collecteur d'admission (20s) et où s'opère une compression lorsque le volume de chambre (35) augmente.
- Un turbocompresseur simple, le compresseur (97) comprimant les gaz du circuit d'admission, la turbine (96) détendant les gaz d'échappement.
- Un turbocompresseur, dont l'arbre mécanique est directement lié à un moteur-générateur électrique.
- Un turbocompresseur, dont l'arbre est lié mécaniquement par un réducteur à l'arbre de sortie du moteur.
- Une turbine compound mécanique, c'est-à-dire liée mécaniquement à l'arbre de sortie du moteur.
- Un échappement sans turbine, en particulier pour un moteur selon l'invention, monocylindre.
- Un radiateur d'air de suralimentation, refroidissant les gaz admis dans le moteur après un étage de compression.
- Une boucle de recirculation des gaz d'échappement, qui prélève une fraction des gaz d'échappement pour la réintroduire dans les gaz d'admission,
- Un radiateur des gaz d'échappement en recirculation, refroidissant la fraction des gaz admis provenant des gaz d'échappement.
- Des vannes (94) pour fermer au moins une branche d'échappement en amont d'une turbine d'un circuit d'échappement comportant plusieurs turbines en parallèle.

Une réalisation particulière, basée sur le cas précédents, est telle que comportant au moins deux cylindres et dont le dispositif de suralimentation (95) comprend au moins un turbocompresseur et des valves anti-retour (93) dans le circuit d'admission et le circuit d'échappement et ne comprend pas de compresseur volumétrique.

Dans une réalisation particulière, basée sur n'importe lequel des cas précédents, chaque ensemble piston est refroidi par l'huile de lubrification, circulant sous pression, via au moins un canal aménagé dans le vilebrequin (40), arrivant au niveau du palier de maneton (42) et cheminant ensuite par plusieurs canaux, à l'intérieur du piston (50), jusqu'au voisinage des parois chaudes que sont les portions de combustion (48v) et portions de glissement (48u) de la face de cylindre (51) de l'ensemble piston ainsi que le transfert d'échappement (57i) puis ensuite, l'huile étant éjectée dans l'espace entourant les ensembles pistons et les vilebrequins (40), enfermé à l'intérieur d'un carter moteur lié à l'ensemble châssis.

Dans une réalisation particulière, dispositif du groupe :
- Un véhicule terrestre ou marin ou aérien,
- groupe moto-propulsif comportant une hélice en prise directe ou un rotor,
- groupe moto-propulsif comportant deux hélices contrarotatives coaxiales en prise directe,
- Une chaine de traction hybride, série ou parallèle, dont le moteur thermique est hybridé électrique ou pneumatique ou hydraulique,
- Un dispositif de cogénération composé d'au moins un deuxième moteur thermodynamique à cycle de Rankine,
- Un générateur de puissance électrique,
Dispositif, tel que équipé d'un moteur thermique selon n'importe laquelle des particularités précédentes.

### NOMENCLATURE DU MOTEUR

Des pièces sont qualifiées de supérieure et inférieure, pour faciliter la représentation. Cela ne fixe aucune orientation du moteur. Par convention : s = Supérieure = admission / i = Inférieure = échappement, pour un monocylindre. Un multicylindre peut comporter des inversions.

Les suffixes a, b, c, d,... désignent les N différents éléments des groupes cinématiques, préférentiellement au nombre de 4. Les suffixes u, v, w, x désignent un élément proche.

| | |
|---|---|
| N° | Désignation des éléments et ensembles / Remarques |
| 10 | Cadre porte-vilebrequin / représenté par 2 cadres disjoints mais liés à l'ensemble châssis |
| | |
| 11 | Arbre de sortie |
| 11v | Arbre contrarotatif |
| 12 | Roue |
| 13 | Couronne |
| 15, 15a, 15b, 15c, 15d,... | Satellite, 1^{er}, 2^{ème}, 3^{ème}, 4^{ème},... satellites / Roue ou pignon |
| 16, 16a, 16b, 16c, 16d,... | satellite supplémentaire, 1^{er}, 2^{ème}, 3^{ème} , 4^{ème},... satellite supplémentaire |
| | |
| 17 | Pignon d'entrainement de la glace rotative |
| 18 | Roue dentée de la glace rotative |
| | |
| 20, 20s et 20i | Collecteurs, d'admission et d'échappement / fixes |
| 21, 21s et 21i | Lumière(s) du collecteur, supérieur et inférieur |
| | |
| 22, 22s et 22i | Glace rotative, supérieure et inférieure |
| 23, 23s et 23i | Lumière(s) de la glace rotative, supérieure(s) (d'admission) ou inférieure(s) (d'échappement) |
| | |
| 24 | Glace supplémentaire |
| 25 | Lumière(s) de la glace supplémentaire |
| | |
| 30 | mécanisme cyclique d'entraînement et d'orientation / d'ensemble piston |
| 31 | mécanisme d'orientation / d'ensemble piston |
| 32 | Liaison glissière |
| 35 | Chambre / Volume de travail |
| 36s et 36i | Sommets supérieur et inférieur / de la chambre |
| | |
| 39 | Arbre d'entrainement |
| 40, 40a, 40b, 40c, 40d,... | Vilebrequin, 1^{er}, 2^{ème}, 3^{ème}, 4^{ème},... vilebrequins |
| 41 | Tourillon |
| 42 | Maneton / Axe du pivot de |
| 43 | Came / d'injecteur pompe |
| 44 | Levier d'injecteur / ou ici culbuteur à rouleau |
| | |
| 45, 45u | Rayon laser, point de focalisation / d'allumage |
| 46u | Premier sous-dispositif optique |
| 46v | second sous-dispositif optique / du dispositif optique d'allumage laser |
| | |
| 48u | Portion de glissement / Portion de la face de cylindre, supportant le glissement |
| 48v | Portion de combustion / Portion de la face de cylindre, voyant la combustion |
| 50, 50a, 50b, 50c, 50d,... | Piston, 1^{er}, 2^{ème}, 3^{ème} , 4^{ème},... pistons |
| 51 | Face de cylindre / d'ensemble piston ou de piston |
| 51a, 51b, 51c, 51d, ... | Face de cylindre du 1^{er}, 2^{ème}, 3^{ème}, 4^{ème},... ensemble piston / ou piston |
| 52, | surface de glissement / d'ensemble piston, |
| 52a, | surface de glissement du 1^{er} ensemble piston, |
| 52b, ... | surface de glissement du 2^{ème} ensemble piston,... |
| 52d, ... | surface de glissement du 4^{ème} ou Nième ensemble piston, ... |
| 53, 53s et 53i | Arête frontière d'ensemble piston, portions d'arête supérieure et inférieure / où se déplacent les sommets supérieur et inférieur |
| 54, 54u | Profil de face de piston, arrondi du profil |
| 55 | Calotte sphérique |
| 55u | Renflement |
| 56s et 56i | Lumières d'admission et lumières d'échappement |
| 57, 57s et 57i | Transfert, transfert d'admission et transfert d'échappement / canal de |
| 58, | Injecteur direct ou bougie d'allumage, |
| 58v, | Injecteur pompe |
| 58w | orifice / associé débouchant dans la chambre |
| 59u, 59v et 59w | Position de l'arête frontière de la face adjacente de l'ensemble piston adjacent entouré : au point mort bas, à fermeture ou ouverture de la lumière et au point mort haut |
| | |
| 60 | Trajectoire de glissière |
| 60u, 60v | Glissière, flanc de glissière / ou de rainure |
| 61, 61u, 61v, 61w, 61x | Elément mobile, galet roulant, sabot glissant, sabot roulant, rouleau de sabot roulant |
| 62 | Pivot de glissière / entre l'élément mobile dans la glissière et le piston |
| | |
| 64 | Plat de transfert |
| 65 | Obturateur de lumière / ici supérieur |
| | |
| 68 | Face coupe-feu |
| 69 | Liaison glissière / entre face coupe-feu et piston, d'axe de glissement W |
| 70 | Ressort / de maintien en pression |
| 71 | Dispositif anti-accélération |
| 71u | Levier(s) anti-accélération |
| 71v | Pivot du levier |
| 71w | Masselotte / du levier |
| 71x | Liaison d'entrainement / de la face coupe-feu par le levier |
| | |
| 75 | Segment d'arête / coupe-feu |
| 76, 76s, 76i | Joint chicane, supérieur et inférieur |
| 77 | Créneaux / du joint chicane |
| 78 | Segment secondaire / d'étanchéité ou racleur |
| | |
| 80 | Roue entrainant le balourd / dentée |
| 81 | Balourd |
| 82u | Pignon d'entrainement de balourd d'harmonique 2 |
| 82v | Pignon d'entrainement de balourd d'harmonique 3 |
| | |
| 85s, 86s | Plage angulaire d'ouverture d'admission entre chambre et transfert, plage angulaire d'ouverture d'admission entre transfert et collecteur |
| 85i, 86i | Plage angulaire d'ouverture d'échappement entre chambre et transfert, plage angulaire d'ouverture d'échappement entre transfert et collecteur |
| 87 | Courbe du volume de chambre |
| 88u | Volume de compression effective / Course |
| 88v | Volume de détente effective / Course |
| 88w | Sur-volume de détente |
| | |
| 90 | Collecteur d'échappement 2 en 1 |
| 90u | Tubulure d'échappement 2 en 1 |
| 91 | Collecteur d'échappement 2 en 2 |
| 91u | Collecteur d'admission 1 en 2 |
| 92 | Tubulures 3 en 1 / de même longueur |
| 93 | Valve anti-retour / d'admission ou d'échappement |
| 94 | Vanne |
| 95, 95u | Dispositif de suralimentation, partiel / schématisés |
| 96 | Turbine / de turbocompresseur |
| 97 | Compresseur / de turbocompresseur |
| 99 | Ligne de vilebrequin |
| | |
| O | Centre du cylindre |
| Z, Z-, Z+ | Axe Z du moteur, 2 positions de l'axe Z / variables durant le cycle, par rapport au piston |
| W | axe de glissement W |
| - | Ensemble châssis / Elément fixe auquel est relié les autres éléments fixes, non représenté |
| - | Ensemble piston / 2 différents types explicités |

## Revendications

1. Moteur thermique, à combustion interne, alternatif, disposant d'un ensemble châssis, fixe, **caractérisé en ce qu'**il comporte au moins un ensemble élémentaire appelé cylindre, de centre O déterminé sur un axe Z du moteur, le cylindre comprenant :
• un nombre entier N, N supérieur ou égal à 3, d'attelages mobiles également répartis en révolution autour de l'axe Z du moteur, chaque attelage mobile comprenant au moins les éléments suivants :
∘ Un ensemble piston, comprenant au moins :
▪ une face de cylindre (51), surface globalement réglée et globalement concave selon un axe de glissement W repéré par rapport à l'ensemble piston, axe autour duquel elle est incurvée, cet axe étant perpendiculaire à l'axe Z du moteur.
▪ une surface de glissement (52) dont l'intersection avec un bord de la face de cylindre (51) est une ligne d'arête, dite arête frontière (53) et
▪ un dispositif d'étanchéité comprenant la surface de glissement (52).
∘ Un mécanisme cyclique d'entraînement et d'orientation (30), comprenant au moins un arbre d'entrainement (39), en rotation cyclique et monotone, qui entraine et positionne l'ensemble piston par rapport à l'ensemble châssis, selon un mouvement dans un plan P perpendiculaire à l'axe Z du moteur, et dans ledit cylindre la surface de glissement (52) l'ensemble piston de rang M, glisse avec contact sur une portion de glissement (48u) de la face de cylindre (51) de l'ensemble piston de rang M-1, dit ensemble piston adjacent et entourant, de l'ensemble piston de rang M dit adjacent et entouré, et la surface de glissement du premier ensemble piston (52a) glisse avec contact sur une portion de glissement de la face de cylindre (51d) de l'ensemble piston de rang M, M étant un nombre entier prenant les valeurs de 1 à N, les N faces de cylindre (51a, 51b, 51c,...) des N ensembles pistons, délimitant à elles seules, au dispositif d'étanchéité près, entre elles, autour du centre O du cylindre, un volume de travail dit chambre (35),
o A tout instant d'un cycle, toutes les N arêtes frontière (53) des N ensembles pistons, se croisent en un sommet supérieur (36s) et un sommet inférieur (36i) situés sur l'axe Z du moteur, de part et d'autre du centre O du cylindre,
o Au cours d'un cycle le volume de la chambre (35) atteint au moins un minimum au moment du cycle appelé point mort haut et au moins un maximum au moment du cycle appelé point mort bas,
∘ Au point mort haut, le volume de la chambre (35) est cerné par les N portions, nommées portions de combustion (48v), des faces de cylindre (51a, 51b, 51c,...) des N ensembles pistons, ces portions de combustion (48v) étant adjacentes aux portions de glissement (48u),
• Cylindre comprenant un dispositif de distribution, assurant au cours d'un cycle, l'échappement, l'admission et le confinement des gaz dans la chambre (35),
Le moteur comprenant également au moins un dispositif de synchronisation, synchronisant en fréquence et phase les N arbres d'entrainement (39) des N mécanismes cycliques d'entraînement et d'orientation (30), selon leur répartition en révolution autour de l'axe Z du moteur, pour un même cylindre et dispositif de synchronisation agissant pour chaque cylindre du moteur.

2. Moteur thermique, selon la revendication 1, **caractérisé en ce que** pour le mécanisme cyclique d'entraînement et d'orientation :
• L'arbre d'entrainement (39) en rotation cyclique est une portion à une manivelle d'un unique vilebrequin (40), dont les tourillons (41) pivotent dans le cadre porte-vilebrequin (10), selon un axe parallèle à l'axe Z du moteur et réalise une rotation continue et monotone, d'un tour par cycle et dont le maneton (42), d'axe parallèle aux tourillons (41), pivote dans l'ensemble piston, constituant un mécanisme d'entraînement de l'ensemble piston ;
• Il comprend un mécanisme d'orientation (31) de l'ensemble piston le reliant à l'ensemble châssis.

3. Moteur thermique, selon la revendication 2, **caractérisé en ce que** le mécanisme d'orientation (31) de l'ensemble piston est une liaison cinématique dite par glissière pivot, définie par une liaison glissière entre une glissière (60u) de trajectoire de glissière (60) déterminée, fixe, matériellement liée à l'ensemble châssis et entre un élément mobile (61), mobile le long de ladite glissière (60u) et pivotant via une liaison pivot dite pivot de glissière (62) sur l'ensemble piston selon un axe parallèle à l'axe Z du moteur, ladite trajectoire de glissière (60) étant courbe et plane, dans un plan perpendiculaire à l'axe Z du moteur. L'élément mobile (61) fait partie du groupe constitué par :
• un galet roulant (61u), roulant dans la glissière (60u) matériellement en forme de rainure, selon le sens du contact sur l'un ou l'autre des flancs de glissière (60v) de cette rainure, dont l'espacement maintient le galet roulant (61u) avec un jeu minimum, galet ayant pour axe le pivot de glissière (62),
• un sabot glissant (61v), glissant dans la glissière (60u) matériellement en forme de rainure, contre les flancs de glissière (60v) de cette rainure, dont l'espacement maintient ledit sabot avec un jeu minimum, et pivotant selon le pivot de glissière (62) sur l'ensemble piston.
• un sabot roulant (61w), si muni de rouleaux (61x), roulant dans la glissière (60u) matériellement en forme de rainure, contre les flancs de glissière (60v) de cette rainure, dont l'espacement maintient ledit sabot roulant (61w) avec un jeu minimum, et pivotant selon le pivot de glissière (62) sur l'ensemble piston.
• un sabot glissant et roulant, combinaison des deux points précédents, muni de rouleaux (61x) positionnés pour n'assurer le contact de roulement que d'un seul côté contre un seul flanc de glissière (60v), et assurer de l'autre côté contre l'autre flanc de glissière, un glissement.

4. Moteur thermique, selon l'une quelconque des revendications précédentes, **caractérisé en ce que** pour chaque cylindre, le dispositif de distribution est constitué par un dispositif d'admission et un dispositif d'échappement, distincts, tels que :
• Chaque dispositif d'admission ou d'échappement comprend au moins :
∘ un collecteur d'admission (20s) ou d'échappement (20i), rigidement lié à l'ensemble châssis, disposant d'une face plane, perpendiculaire à l'axe Z du moteur, du côté du centre O du cylindre ;
∘ une glace rotative (22), plane, fine et perpendiculaire à l'axe Z du moteur, à une distance quasi fixe du centre O, entraînée en rotation selon l'axe Z du moteur, dans un sens ou dans l'autre, à une vitesse de rotation moyenne d'un N-ième de tour par cycles au moyen d'un mécanisme d'entraînement de glace rotative (22), et ayant, de ses deux faces planes perpendiculaire à l'axe Z du moteur donc, une première face plane glissant contre la face plane du collecteur (20) ;
• Pour chaque dispositif d'admission ou d'échappement, le collecteur (20) et la glace rotative (22) comprennent chacun N lumières (21, 23) de forme déterminée, réparties en répétition régulière de révolution autour de l'axe Z du moteur, permettant d'ouvrir et de fermer le passage de la glace rotative (22) au collecteur (20), via leurs lumières 21, 23), selon le moment du cycle,
• Chaque dispositif d'admission ou d'échappement comprenant dans chaque ensemble piston deux conduits de transfert (57) : un transfert d'échappement (57i) et un transfert d'admission (57s), dont l'extrémité la plus éloignée du centre O du cylindre comprend un bord plan, dit plat de transfert (64), perpendiculaire à l'axe Z du moteur, glissant sur la seconde face plane de la glace rotative (22), les transferts (57) étant mis en communication durant une période déterminée au cours du cycle, à un moment proche du point mort bas :
∘ du même côté du transfert (57), transfert mis en communication donc, avec l'ouverture d'une des N lumières de la glace rotative (22) ;
∘ de l'autre côté du transfert (57), durant une seconde période déterminée au cours du cycle, transfert (57) mis en communication donc, avec la chambre (35), via une lumière d'admission (56s) ou une lumière d'échappement (56i), judicieusement dessinée et placée sur la portion de glissement (48u) de la face de cylindre (51) de l'ensemble piston, par le passage et le positionnement devant cette lumière de la surface de glissement (52) de l'ensemble piston adjacent glissant sur cette portion de glissement (48u) de la face de cylindre (51).

5. Moteur thermique, selon la revendication 4, **caractérisé en ce que** le mécanisme d'entraînement de glace rotative (22) est un engrenage dont une roue dentée a pour axe de rotation l'axe Z du moteur et est solidaire de la glace rotative (22), dite roue dentée de la glace rotative (18) et, engrenant avec cette roue ; directement ou via un pignon intermédiaire avec un phasage éventuellement réglable au moyen d'un déphaseur disposé dans ledit mécanisme d'entraînement de glace rotative (22) ; le pignon denté solidaire du vilebrequin (40) et coaxial, dit pignon d'entrainement de la glace rotative (17).

6. Moteur thermique, selon l'une quelconque des revendications 4 ou 5, **caractérisé en ce que** au moins un dispositif d'admission ou d'échappement comporte une seconde glace fine et plane, dite glace supplémentaire (24), fixe mais réglable, intercalée doublement glissante selon deux plans perpendiculaire à l'axe Z du moteur, entre la glace rotative (22) et le collecteur (20), telle que, par la variation de sa position angulaire autour de l'axe Z du moteur et la forme particulière de ses N lumières (25), réparties en répétition régulière de révolution autour de l'axe Z du moteur, les instants d'ouverture et/ou de fermeture des passages des transferts (57) au collecteur (20) puissent être avancés ou retardés dans le cycle du moteur, créant ainsi une distribution variable.

7. Moteur thermique, selon l'une quelconque des revendications 4 à 6, **caractérisé en ce que** le dispositif de distribution, par la forme déterminée des lumières des dispositifs d'admission et d'échappement, met en oeuvre le cycle de Miller-Atkinson, autrement dit un diagramme de distribution où le volume de détente effective (88v) est supérieur au volume de compression effective (88u).

8. Moteur thermique, selon l'une quelconque des revendications précédentes, **caractérisé en ce que** le dispositif de synchronisation des N mécanismes cycliques d'entrainement et d'orientation est constitué par un arbre de sortie (11) d'axe l'axe Z du moteur, comprenant au moins une roue (12) (pignon) dentée d'axe l'axe Z du moteur, engrenant avec N pignons (roues) dentés dit satellites (15), chacun étant rigidement lié ou issu de matière des arbres d'entrainement (39) ou vilebrequin (40) et coaxial.

9. Moteur thermique, selon la revendication 8, **caractérisé en ce que**, coaxial à l'arbre de sortie (11), un second arbre de sortie dit arbre contrarotatif (11v), c'est-à-dire tournant en sens inverse de l'arbre de sortie (11) et l'entourant, donc pivotant selon l'axe Z du moteur, comprend une couronne (13), dentée, engrenant intérieurement, avec N autres pignons satellites dit satellites supplémentaires (16), chacun étant rigidement liés ou issu de matière des arbres d'entraînement (39) ou vilebrequin (40) et coaxial.

10. Moteur thermique, selon l'une quelconque des revendications précédentes, **caractérisé en ce que** la face de cylindre (51) d'au moins un des N ensemble pistons dispose d'une portion de glissement (48u) ayant une forme qui est une partie de la surface générée par le balayage selon une translation rectiligne d'axe de glissement W d'un profil de face de piston (54), contenu dans un plan, globalement concave autour du centre O du cylindre.

11. Moteur thermique, selon la revendication 10, **caractérisé en ce que** le profil de face de piston (54) est en forme de « V » à la pointe arrondie, générant une portion de glissement (48u) de la face de cylindre (51) qui est une partie d'une surface réglée comprenant deux surfaces planes, que raccorde, en continuité de tangence, un secteur de cylindre d'axe parallèle à l'axe de glissement W.

12. Moteur thermique, selon l'une quelconque des revendications précédentes, **caractérisé en ce que** la face de cylindre (51) d'au moins un des N ensemble pistons dispose d'une portion de combustion (48v) qui comprend, sur sa zone centrale et jusqu'à proche de sa périphérie, une portion d'une calotte sensiblement sphérique ou ovoïde, dite calotte sphérique (55), concave autour du centre O du cylindre, qui appliquée N fois sur les N ensembles pistons forme au point mort haut, une chambre (35) de forme globalement sphérique ou ovoïde ayant pour axe principal de révolution l'axe Z du moteur et de centre le centre O du cylindre.

13. Moteur thermique, selon l'une quelconque des revendications précédentes, **caractérisé en ce que** l'ensemble piston se compose :
• D'un piston (50), comprenant :
∘ Les demi-pivots extérieurs du pivot du maneton (42) de vilebrequin (40) et du pivot de glissière (62) de l'élément mobile (61), pivots d'axes parallèles à l'axe Z du moteur,
∘ presque toute la surface de la face de cylindre (51) de l'ensemble piston,
∘ Chaque transfert (57) d'admission (57s) et d'échappement (57i), fixé sur le piston (50) ou solidaire,
• Du dispositif d'étanchéité comprenant donc la surface de glissement (52) de l'ensemble piston, l'arête frontière (53) de l'ensemble piston et l'extrémité de la face de cylindre (51) du piston donc, adjacente à l'arête frontière (53) au moins sur les portions d'arête supérieure et inférieure (53s et 53i) où se déplacent des sommets supérieur et inférieur de chambre (36s et 36i), lié au piston par une liaison cinématique de type glissière, permettant la translation de la surface de glissement (52), de l'arête frontière (53) et de la portion de face de cylindre (51) n'étant pas liée au piston, translation selon l'axe de glissement W.

14. Moteur thermique, selon la revendication 13, **caractérisé en ce que** le dispositif d'étanchéité est composé :
• d'un segment d'arête (75) comprenant :
∘ toute l'arête frontière (53) de l'ensemble piston,
∘ une partie de la surface de glissement (52) adjacente à toute la longueur de l'arête frontière (53),
∘ la bordure de la face de cylindre (51) de l'ensemble piston, adjacente aux portions d'arête supérieure (53s) et inférieure (53i) de l'arête frontière (53),
ledit segment d'arête (75) est lié cinématiquement au piston (50), par le maintien dans une gorge du piston (50), créant une liaison cinématique de type glissière autorisant uniquement la translation rectiligne d'axe de glissement W par rapport au piston (50) et plaquant ce dernier sur la face de cylindre (51) de l'autre piston en regard, c'est-à-dire du piston (50) de l'ensemble piston adjacent et entourant, au moyen d'un dispositif de ressort,
• de deux joints chicane (76), un supérieur (76s) et un inférieur (76i), chacun disposé le long ou sensiblement parallèle aux portions d'arête supérieure (53s) et portion d'arête inférieure (53i) de l'arête frontière (53), chaque portion supportant la trajectoire d'un des sommets de chambre, supérieur (36s) ou inférieur (36i), où chaque joint chicane (76) :
∘ est délimité sur une zone allongée et se confond dans la face de cylindre (51),
∘ est en contact en coin avec le segment d'arête (75), en lui permettant une translation linéaire selon une direction parallèle à la portion d'arête supérieure (53s) ou inférieure (53i),
∘ est plaqué contre ce segment d'arête (75), au moyen d'un dispositif de ressort,
∘ dispose, sur sa longueur, de créneaux (77) en reliefs, correspondant et s'emboitant avec un jeu minimum avec des créneaux réalisés dans le piston (50), autorisant un mouvement de translation, de direction l'emboitement.

15. Moteur thermique, selon la revendication 14, **caractérisé en ce que** le dispositif d'étanchéité comprend également un ou plusieurs segment(s) secondaire(s) (78), tel(s) que :
∘ sa forme correspond sensiblement au décalage du segment d'arête (75) sur la surface de glissement (52),
∘ il comprend une partie de la surface de glissement (52), non adjacente à l'arête frontière (53), mais proche tout le long de l'arête frontière (53),
∘ il (s) est(sont) en contact(en contact par bloc), avec le segment d'arête (75), au moins au niveau des portions d'arête supérieure (53s) et inférieure (53i), matérialisant avec ce segment d'arête (75) la surface de glissement (52),
∘ il est lié cinématiquement au piston (50), par le maintien dans une gorge du piston, créant une liaison cinématique de type glissière autorisant uniquement la translation d'axe de glissement W par rapport au piston (50) et plaquant cedit segment secondaire (78) sur la face de cylindre (51) de l'autre piston en regard, c'est-à-dire du piston (50) de l'ensemble piston adjacent et entourant, au moyen d'un dispositif de ressort.

16. Moteur thermique, selon l'une quelconque des revendications précédentes, **caractérisé en ce que** comportant un nombre K de cylindres, K supérieur ou égal à 2, où les K fois N arbres d'entrainement (39) ou portions de vilebrequins (40) de chacun des N attelages mobiles des K cylindres, sont orientées parallèles à l'axe Z du moteur pour être N fois coaxiaux, et sont entrainées synchrones et déphasées du nombre K de cylindre et forment donc un nombre N d'arbres d'entrainement identiques ou de vilebrequins (40) identiques, pour chacun selon un axe dit ligne de vilebrequin (99), vilebrequins comportant alors K manetons (42) déphasés de 360°/K si le moteur est en fonctionnement à 2 temps ou 720°/K si le moteur est en fonctionnement à 4 temps.

17. Moteur thermique, selon l'une quelconque des revendications précédentes, **caractérisé en ce qu'**il comprend au moins un injecteur direct ou bougie d'allumage (58), porté par un piston (50) ou un ensemble piston et monté étanche, la tête d'injecteur ou de la bougie d'allumage débouchant dans la chambre (35) par un orifice (58w) au niveau de la face de cylindre (51) de l'ensemble piston, débouchant systématiquement sur la portion de combustion de la face de cylindre (51) pour une bougie et un injecteur de moteur à allumage par compression.

18. Moteur thermique, selon l'une quelconque des revendications précédentes, **caractérisé en ce que** comportant au moins un dispositif d'équilibrage dynamique, composé d'au moins deux balourds (81) disposés en répartition circulaire équilibrée autour de l'axe Z du moteur, pivotant selon des axes parallèles à l'axe Z du moteur, chacun entraîné en rotation par engrènement avec un arbre d'entrainement (39) ou vilebrequin (40), via une roue entrainant le balourd (80) solidaire du vilebrequin et via un pignon d'entrainement de balourd (82u ou 82v, selon l'harmonique) lié au balourd (81), à une vitesse moyenne, de même fréquence que l'harmonique du couple inertiel de basculement selon l'axe Z du moteur devant être atténué.

19. Moteur thermique, selon l'une quelconque des revendications précédentes, **caractérisé en ce qu'**il est muni d'un dispositif de suralimentation (95) comprenant un ou plusieurs éléments, combinés ou non ou identiques et redondés du groupe suivant :
• Un compresseur volumétrique à l'admission donc, entraîné mécaniquement avec un rapport fixe par l'arbre de sortie du moteur (11) ;
• Un compresseur volumétrique ou centrifuge entraîné électriquement ;
• Un carter de compression, lié à l'ensemble châssis et emprisonnant, pour chaque cylindre, le volume autour des ensembles pistons, dans lequel passent les gaz d'admission avant le collecteur d'admission (20s) et où s'opère une compression lorsque le volume de chambre (35) augmente ;
• Un turbocompresseur simple, le compresseur (97) comprimant les gaz du circuit d'admission, la turbine (96) détendant les gaz d'échappement ;
• Un turbocompresseur, dont l'arbre mécanique est directement lié à un moteur-générateur électrique ;
• Un turbocompresseur, dont l'arbre est lié mécaniquement par un réducteur à l'arbre de sortie du moteur ;
• Une turbine compound mécanique, c'est-à-dire liée mécaniquement à l'arbre de sortie du moteur ;
• Un échappement sans turbine, en particulier pour un moteur selon l'invention, monocylindre ;
• Un radiateur d'air de suralimentation, refroidissant les gaz admis dans le moteur après un étage de compression ;
• Une boucle de recirculation des gaz d'échappement, qui prélève une fraction des gaz d'échappement pour la réintroduire dans les gaz d'admission ;
• Un radiateur des gaz d'échappement en recirculation, refroidissant la fraction des gaz admis provenant des gaz d'échappement ;
• Des vannes (94) pour fermer au moins une branche d'échappement en amont d'une turbine d'un circuit d'échappement comportant plusieurs turbines en parallèle.

20. Moteur thermique, selon l'une quelconque des revendications précédentes, **caractérisé en ce que** chaque ensemble piston est refroidi par l'huile de lubrification, circulant sous pression, via au moins un canal aménagé dans le vilebrequin (40), arrivant au niveau du palier de maneton (42) et cheminant ensuite par plusieurs canaux, à l'intérieur du piston (50), jusqu'au voisinage des parois chaudes que sont les portions de combustion (48v) et portions de glissement (48u) de la face de cylindre (51) de l'ensemble piston ainsi que le transfert d'échappement (57i) puis ensuite, l'huile étant éjectée dans l'espace entourant les ensembles pistons et les vilebrequins (40), enfermé à l'intérieur d'un carter moteur lié à l'ensemble châssis.

21. Moteur thermique, selon l'une quelconque des revendications précédentes, **caractérisé en ce qu'**il équipe un dispositif du groupe :
• un véhicule terrestre ou marin ou aérien,
• groupe moto-propulsif comportant une hélice en prise directe ou un rotor,
• groupe moto-propulsif comportant deux hélices contrarotatives coaxiales en prise directe,
• une chaine de traction hybride, série ou parallèle, dont le moteur thermique est hybridé électrique ou pneumatique ou hydraulique,
• un dispositif de cogénération composé d'au moins un deuxième moteur thermodynamique à cycle de Rankine,
• un générateur de puissance électrique.

## Patentansprüche

1. Wärmekraftmotor mit innerer Verbrennung, Wechselstrom, mit einer festen Fahrgestellbaugruppe, **dadurch gekennzeichnet, dass** er mindestens eine elementare Baugruppe, als Zylinder bezeichnet, mit einem auf einer Achse Z des Motors bestimmten Mittelpunkt O umfasst, wobei sich der Zylinder wie folgt zusammensetzt:
• aus einer ganzen Zahl N von beweglichen Teilen, wobei N größer oder gleich 3 ist, die ebenfalls in regelmäßigen Drehintervallen um die Achse Z des Motors verteilt sind, wobei jede bewegliche Kupplung mindestens aus folgenden Komponenten besteht:
∘ Einer Kolbenbaugruppe, die mindestens besteht aus:
▪ einer Zylinderfläche (51), die im Allgemeinen regelmäßig und konkav um eine Gleitachse W liegt, die relativ zur Kolbenbaugruppe angeordnet ist, und um die sie gekrümmt ist, wobei diese Achse senkrecht zur Achse Z des Motors ist;
▪ einem Gleitabschnitt (52), deren Schnittpunkt mit einer Kante der Zylinderfläche (51) eine scharfe Kantenlinie bildet, die als Vorderkante (53) bezeichnet wird, und
▪ einer Dichtungsvorrichtung, die den Gleitabschnitt (52) umfasst.
∘ Einem zyklischen Antriebs- und Ausrichtungsmechanismus (30), der mindestens eine Antriebswelle (39) in zyklischer und gleichförmiger Drehung umfasst, und die Kolbenbaugruppe antreibt und sie in Bezug auf die Fahrgestellbaugruppe positioniert, gemäß einer Bewegung in einer Ebene P, die senkrecht zur Achse Z des Motors liegt;
• Aus einem Zylinder, bei dem der Gleitabschnitt (52) der Kolbenbaugruppe des Rangs M auf einem Gleitabschnitt (48u) der Zylinderfläche (51) der Kolbenbaugruppe des Rangs M-1, die als benachbarte und umgebene Kolbenbaugruppe bezeichnet wird, und der Kolbenbaugruppe des Rangs M, die als benachbarte und umgebene Kolbenbaugruppe bezeichnet wird, gleitet und aus dem Gleitabschnitt der ersten Kolbenbaugruppe (52a), die mit Kontakt über einem Gleitabschnitt der Zylinderfläche (51d) der Kolbenbaugruppe des Rangs N gleitet, wobei M eine ganze Zahl ist und die Werte von 1 bis N annimmt, wobei die N Zylinderflächen (51a, 51b, 51c, ...) der N Kolbenbaugruppen und jede von diesen an der nächsten Dichtungsvorrichtung zwischen ihnen, um die Mitte O des Zylinders, ein Betriebsvolumen begrenzen, das als Kammer (35) bezeichnet wird.
∘ Zu jedem Zeitpunkt in einem Zyklus schneiden sich alle der N Vorderkanten (53) der N Kolbenbaugruppen in einer oberen Kappe (36s) und einer unteren Kappe (36i), die sich auf der Achse Z des Motors auf beiden Seiten des Zentrums O des Zylinders befinden.
∘ Während eines Zyklus erreicht das Volumen der Kammer (35) mindestens einmal ein Minimum zum Zeitpunkt im Zyklus, der als oberer Totpunkt bezeichnet wird, und mindestens einmal ein Maximum zum Zeitpunkt im Zyklus, der als unterster Totpunkt bezeichnet wird.
∘ Im oberen Totpunkt wird das Volumen der Kammer (35) von den N Abschnitten, die als Verbrennungsabschnitte (48v) bezeichnet werden, der Zylinderflächen (51a, 51b, 51c, ...) der N Kolbenbaugruppen begrenzt, wobei diese Verbrennungsabschnitte (48v) an den Gleitabschnitten (48u) angrenzen.
• Zylinder, bestehend aus einer Verteilungsvorrichtung, die während eines Zyklus für den Abgasaustritt, die Ansaugung und den Einschluss der Gase in die Kammer (35) sorgt.
Der Motor besteht ebenfalls aus mindestens einer Synchronisierungsvorrichtung, die die N Antriebswellen (39) der N antreibenden und ausrichtenden zyklischen Mechanismen (30) in ihrer Frequenz und Phase synchronisiert, abhängig von ihrer Verteilung bei der Drehung um die Achse Z des Motors, auf denselben Zylinder und Synchronisierungsvorrichtung für jeden Zylinder des Motors wirkend.

2. Wärmekraftmotor gemäß Anspruch 1, **dadurch gekennzeichnet, dass** für den zyklischen Antriebs- und Ausrichtungsmechanismus:
• Die sich zyklisch drehende Antriebswelle (39) ein Abschnitt eines Kurbelarms einer einzelnen Kurbelwelle (40) ist, deren Propeller (41) sich im Kurbelwellen-Befestigungsrahmen (10) um eine parallel zur Achse Z des Motors liegende Achse drehen, und die eine kontinuierliche und gleichförmige Drehung mit einer Umdrehung pro Zyklus ausführt und deren Kurbelzapfen (42), mit paralleler Achse zu den Propellern (41), sich in der Kolbenbaugruppe dreht und somit einen Antriebsmechanismus für die Kolbenbaugruppe bildet;
• Er umfasst einen Ausrichtungsmechanismus (31) für die Kolbenbaugruppe, die ihn mit der Fahrgestellbaugruppe verbindet.

3. Wärmekraftmotor gemäß Anspruch 2, **dadurch gekennzeichnet, dass** der Ausrichtungsmechanismus (31) der Kolbenbaugruppe eine kinematische Verbindung, als Drehschieber bezeichnet, ist und durch eine Gleitverbindung zwischen einer Gleitschiene (60u) eines spezifischen Gleitwegs (60), fest und mit der Fahrgestellbaugruppe verbunden, und einer beweglichen Komponente (61), über die gesamte Länge der genannten Gleitschiene (60u), definiert ist und sich über eine Drehverbindung, die als Drehschieber (62) bezeichnet wird, an der Kolbenbaugruppe um eine Achse parallel zur Achse Z des Motors dreht, wobei der Gleitweg (60) in einer Ebene senkrecht zur Achse Z des Motors gekrümmt und eben ist.
Die bewegliche Komponente (61) gehört zu der Baugruppe, bestehend aus:
• einer Rolle (61u), die in der Gleitschiene (60u) physikalisch in der Form einer Nut rollt, gemäß der Kontaktrichtung an der einen oder anderen Gleitflanke (60v) in dieser Nut, deren Abstand die Rolle (61u) mit minimalem Spiel hält und wo diese Achse der Rolle der Drehschieber (62) ist.
• einem Gleitschuh (61v), der in der Gleitschiene (60u) physikalisch in Form einer Nut an den Gleitflanken (60v) dieser Nut gleitet, deren Abstand den besagten Schuh mit minimalem Spiel hält, und sich gemäß dem Drehschieber (62) auf der Kolbenbaugruppe dreht.
• einem Rollschuh (61w), falls mit Rollen (61x) ausgestattet, der in der Gleitschiene (60u) physikalisch in Form einer Nut an den Schieberflanken (60v) in dieser Nut rollt, wobei deren Abstand den beweglichen Schuh (61w) mit minimalem Spiel hält, und sich gemäß dem Drehschieber (62) auf der Kolbenbaugruppe dreht.
• einem Gleit- und Rollschuh, eine Kombination der beiden vorherigen Punkte, die mit Rollen (61x) versehen sind, die so positioniert sind, dass sie den Rollkontakt nur auf einer Seite gegen eine einzige Gleitflanke (60v) sicherstellen und auf der anderen Seite das Gleiten der anderen Seite gegen die andere Gleitflanke vorsehen.

4. Wärmekraftmotor gemäß irgendeinem der vorherigen Ansprüche, **dadurch gekennzeichnet, dass** für jeden Zylinder die Verteilungsvorrichtung aus einer separaten Ansaugvorrichtung und Abgasvorrichtung besteht, sodass:
• Jede Ansaug- oder Abgasvorrichtung mindestens Folgendes ein schließt:
∘ einen Ansaugkrümmer (20s) oder einen Abgaskrümmer (20i), der starr mit der Fahrgestellbaugruppe verbunden ist und eine ebene Fläche hat, die sich senkrecht zur Achse Z des Motors auf der Seite der Mitte O des Zylinders befindet;
∘ eine Drehscheibe (22), flach, dünn, senkrecht zu der Achse Z des Motors, in einem nahezu festen Abstand vom Zentrum O, die entlang der Achse Z des Motors in der einen oder anderen Richtung bei einer mittleren Drehzahl von Nₜₑₙ einer Umdrehung pro Zyklus mithilfe eines Antriebsmechanismus für die Drehscheibe (22) angetrieben wird, und die an ihren zwei flachen Flächen, die senkrecht zur Achse Z des Motors liegen, eine erste flache Fläche hat, die gegen die ebene Fläche des Ansaugkrümmers (20) gleitet;
• Für jede Ansaug- oder Abgasvorrichtung umfasst der Ansaugkrümmer (20) und die Drehscheibe (22) jeweils N Öffnungen (21, 23) mit einer spezifischen Form, die in regelmäßigen Drehintervallen um die Achse Z des Motors verteilt werden, und die es ermöglichen, den Durchlass von der Drehscheibe (22) zum Ansaugkrümmer (20) über ihre Öffnungen (21, 23), abhängig vom Zeitpunkt des Zyklus, zu öffnen und zu schließen.
• Jede Ansaug- oder Abgasvorrichtung umfasst in jeder Kolbenbaugruppe zwei Übertragungsleitungen (57): eine Abgasleitung (57i) und eine Ansaugleitung (57s), deren am weitesten vom Zentrum O des Zylinders entferntes Ende eine flache Kante aufweist, die als Übertragungsscheibe (64) bezeichnet wird, die senkrecht zur Achse Z des Motors ist und auf der zweiten flachen Fläche der Drehscheibe (22) gleitet, wobei die Übertragungsleitungen (57) während eines bestimmten Zeitraums im Laufe des Zyklus nahe dem unteren Totpunkt miteinander verbunden sind:
∘ Auf der gleichen Seite wie die Übertragungsleitung (57), wurde eine Verbindungsleitung an dieser angebracht und somit auch eine Verbindung mit einer der N Öffnungen in der Drehscheibe (22) hergestellt;
∘ Auf der andere Seite der Übertragungsleitung (57) wird, während eines zweiten spezifischen Zeitraums im Laufe des Zyklus, eine Übertragungsleitung (57) über eine Ansaugöffnung (56s) oder eine Abgasöffnung (56i) mit der Kammer (35) verbunden, sinnvoll bemessen und auf dem Gleitabschnitt (48u) der Zylinderfläche (51) der Kolbenbaugruppe durch den Durchlass eingesetzt und vor dieser Öffnung des Gleitabschnitts (52) der benachbarten Kolbenbaugruppe, die auf diesem Gleitabschnitt (48u) der Zylinderfläche (51) gleitet, positioniert.

5. Wärmekraftmotor gemäß Anspruch 4, **dadurch gekennzeichnet, dass** der Drehscheiben-Antriebsmechanismus (22) ein Getriebe ist, dessen Zahnrad die Achse Z des Motors als Drehachse hat und das ein fester Bestandteil der Drehscheibe (22) ist, als Drehscheibenzahnrad (18) bezeichnet und mit diesem Zahnrad, entweder direkt oder über ein Zwischenritzel mit einer Phaseneinstellung, eingreift, wobei diese Phaseneinstellung mittels eines am genannten Drehscheiben-Antriebsmechanismus (22) angeordneten Phasenschiebers einstellbar ist; das Ritzel ist ein fester Bestandteil der Kurbelwelle (40) und ist koaxial mit ihr; es wird als Drehscheiben-Antriebsritzel (17) bezeichnet.

6. Wärmekraftmotor gemäß irgendeinem der Ansprüche 4 oder 5, **gekennzeichnet dadurch, dass** mindestens eine Ansaug- oder Abgasvorrichtung eine zweite dünne, flache Scheibe umfasst, die als zusätzliche Scheibe (24) bezeichnet wird, und die befestigt, aber anpassbar, eingesetzt und doppelt gleitend ist, gemäß zwei Ebenen, die senkrecht zur Achse Z des Motors zwischen der Drehscheibe (22) und dem Ansaugkrümmer (20) so liegen, dass durch Veränderung ihrer Winkelposition um die Achse Z des Motors und durch die besondere Form ihrer N Öffnungen (25), die in regelmäßigen Drehintervallen um die Achse Z des Motors verteilt sind, und in denen das Öffnen und Schließen der Durchlässe der Übertragungsleitungen (57) zum Ansaugkrümmer (20) früher oder später im Zyklus des Motors stattfinden kann, wodurch eine variable Verteilung entsteht.

7. Wärmekraftmotor gemäß irgendeinem der Ansprüche 4 bis 6, **dadurch gekennzeichnet, dass** die Verteilungsvorrichtung wegen der bestimmten Form der Öffnungen der Ansaug- und Abgasvorrichtungen den Miller-Atkinson-Zyklus ausführt, oder, in anderen Worten, ein Verteilungsschema, in dem das effektive Ausdehnungsvolumen (88v) größer ist als das effektive Kompressionsvolumen (88u).

8. Wärmekraftmotor gemäß irgendeinem der vorherigen Ansprüche, **dadurch gekennzeichnet, dass** die Synchronisierungsvorrichtung für die N zyklischen Antriebs- und Ausrichtungsmechanismen eine Abtriebswelle (11) mit der Achse Z des Motors als ihre Achse umfasst und aus mindestens einem Zahnrad (12) (Ritzel) besteht, mit der Achse Z des Motors als Achse und mit N Zahnrädern (Getrieben), als Satelliten (15) bezeichnet, eingreift, wobei diese jeweils starr verbunden oder aus Material der Antriebswelle (39) oder Kurbelwelle (40) hergestellt und koaxial sind.

9. Wärmekraftmotor gemäß Anspruch 8, **dadurch gekennzeichnet, dass** eine zur Abtriebswelle (11) koaxiale zweite Abtriebswelle (11v) vorhanden ist, die als gegenläufige Welle bezeichnet wird, d. h. eine Welle, die in entgegengesetzter Richtung zur Abtriebswelle (11) dreht, sie umgibt und somit sich entlang der Achse Z des Motors dreht. Diese Abtriebswelle umfasst einen Zahnkranz (13), der innen mit N anderen Satellitenritzeln, als zusätzliche Satelliten (16) bezeichnet, eingreift, und die jeweils starr verbunden oder aus Material der Antriebswelle (39) oder Kurbelwelle (40) hergestellt und koaxial sind.

10. Wärmekraftmotor gemäß irgendeinem der vorherigen Ansprüche, **dadurch gekennzeichnet, dass** die Zylinderfläche (51) von mindestens einer der N Kolbenbaugruppen einen Gleitabschnitt (48u) hat, mit einer Form, die ein Teil der durch die Abtastung erzeugten Oberfläche ist, gemäß einer geradlinigen Verschiebung der Gleitachse W eines Kolbenflächenprofils (54), das in einer im Allgemeinen konkav um die Mitte O des Zylinders verlaufenden Ebene enthalten ist.

11. Wärmekraftmotor gemäß Anspruch 10, **dadurch gekennzeichnet, dass** das Kolbenflächenprofil (54) eine "V"- Form mit einer abgerundeten Spitze hat, wodurch eine Gleitfläche (48u) der Zylinderfläche (51) erzeugt wird, die Teil einer Regelfläche ist, bestehend aus zwei ebenen Flächen, die ein Zylinderabschnitt mit einer zur Gleitachse W parallelen Achse tangential verbindet.

12. Wärmekraftmotor gemäß irgendeinem der vorherigen Ansprüche, **gekennzeichnet dadurch, dass** die Zylinderfläche (51) von mindestens einer der N Kolbenbaugruppen einen Verbrennungsabschnitt (48v) aufweist. Dieser Verbrennungsabschnitt umfasst, in seinem zentralen Bereich und bis nahe seinem Rand, einen Abschnitt einer im Wesentlichen kugelförmigen oder eiförmigen Kappe, als Kugelkalotte (55) bezeichnet, die um das Zentrum O des Zylinders herum konkav ist und dann, wenn sie N-mal an den N Kolbenbaugruppen angewendet wird, am oberen Totpunkt eine Kammer (35) mit im Allgemeinen kugelförmiger oder eiförmiger Form bildet, deren Hauptdrehachse die Achse Z des Motors ist und als ihre Mitte die Mitte O des Zylinders hat.

13. Wärmekraftmotor gemäß irgendeinem der vorherigen Ansprüche, **gekennzeichnet dadurch, dass** die Kolbenbaugruppe umfasst:
• Einen Kolben (50), bestehend aus:
∘ den äußeren Zapfenhälften des Kurbelzapfens (42) der Kurbelwelle (40) und dem Drehschieber (62) der beweglichen Komponente (61), wobei diese Zapfen Achsen haben, die parallel zur Achse Z des Motors liegen;
∘ fast der gesamten Oberfläche der Zylinderfläche (51) der Kolbenbaugruppe;
∘ jeder Übertragungsleitung (57), jedem Einlass (57s) und Auslass (57i), der am Kolben (50) angebracht ist oder fester Bestandteil von diesem ist;
• Der Dichtungsvorrichtung, bestehend aus dem Gleitabschnitt (52) der Kolbenbaugruppe, der Vorderkante (53) der Kolbenbaugruppe und dem äußersten Ende der Zylinderfläche (51) des Kolbens, und somit angrenzend an der Vorderkante (53), zumindest an den Abschnitten der oberen und unteren Kanten (53s und 53i), an denen sich die oberen und unteren Kammerkappen (36s und 36i), verbunden mit dem Kolben durch eine Art gleitende kinematische Verbindung, verschieben, wodurch der Gleitabschnitt (52), die Vorderkante (53) und der Abschnitt der Zylinderfläche (51), der nicht mit dem Kolben verbunden ist, entlang der Gleitachse W verschoben werden können.

14. Wärmekraftmotor gemäß Anspruch 13, **gekennzeichnet dadurch, dass** sich die Dichtungsvorrichtung zusammensetzt aus:
• Einem Kantenabschnitt (75), bestehend aus:
∘ der gesamten Vorderkante (53) der Kolbenbaugruppe,
∘ einem Abschnitt des Gleitabschnitts (52), der über die gesamte Länge an der Vorderkante (53) angrenzt,
∘ der Grenze der Zylinderfläche (51) der Kolbenbaugruppe, benachbart zu den oberen (53s) und unteren (53i) Abschnitten der Vorderkante (53),
Der genannte Kantenabschnitt (75) ist kinematisch mit dem Kolben (50) verbunden, indem er in einer Kolbennut (50) gehalten wird, wodurch eine Art gleitende kinematische Verbindung erzeugt wird, die nur eine geradlinige Verschiebung der Gleitachse W relativ zum Kolben (50) ermöglicht und die den Kolben auf die Zylinderfläche (51) des gegenüberliegenden Kolbens mithilfe einer Federvorrichtung drückt, d. h. auf die Zylinderfläche des Kolbens (50) der benachbarten und umgebenden Kolbenbaugruppe;
• Aus zwei Labyrinthdichtungen (76), einer oberen (76s) und einer unteren (76i), die jeweils entlang oder im Wesentlichen parallel zu den oberen Kantenabschnitten (53s) und zum unteren Kantenabschnitt (53i) der Vorderkante (53) angeordnet sind, sodass jeder Abschnitt den Gleitweg von einer der Kammerkappen, der oberen (36s) oder unteren (36i), unterstützt wird, wobei jede Labyrinthdichtung (76):
∘ auf einem langgestreckten Bereich festgelegt ist und in die Zylinderfläche (51) übergeht;
∘ in Kontakt mit der Ecke des Kantenabschnitts (75) ist, um sie geradlinig entsprechend einer Richtung zu verschieben, die parallel zu einem Abschnitt der oberen Kante (53s) oder unteren Kante (53i) ist;
∘ gegen diesen Kantenabschnitt (75) mithilfe einer Federvorrichtung gedrückt wird;
∘ über ihre gesamte Länge Entlastungsnuten (77) hat, die mit minimalen Spiel mit den im Kolben (50) erstellten Nuten entsprechen und zusammenpassen, wodurch eine Verschiebungsbewegung in Richtung der Armatur ermöglicht wird.

15. Wärmekraftmotor gemäß Anspruch 14, **gekennzeichnet dadurch, dass** die Dichtungsvorrichtung auch einen oder mehrere Nebenabschnitte (78) umfasst, sodass:
∘ ihre Form im Wesentlichen der Verschiebung des Kantenabschnitts (75) an dem Gleitabschnitt (52) entspricht;
∘ sie einen Teil des Gleitabschnitts (52), nicht benachbart zu der Vorderkante (53), aber sehr nah zu ihr, über die gesamte Länge der Vorderkante (53) umfasst,
∘ sie in Kontakt (in Blockkontakt) mit dem Kantenabschnitt (75), zumindest an den Abschnitten der oberen Kante (53s) und der unteren Kante (53i) ist bzw. sind, und mit diesem Kantenabschnitt (75) den Gleitabschnitt (52) bilden;
∘ sie kinematisch mit dem Kolben (50) verbunden ist, indem sie in einer Kolbennut gehalten wird, wodurch eine Art gleitende kinematische Verbindung erzeugt wird, die nur die Verschiebung der Gleitachse W in Bezug zum Kolben (50) ermöglicht und die den genannten Nebenabschnitt (78) auf die Zylinderfläche (51)des gegenüberliegenden Kolbens mithilfe einer Federvorrichtung drückt, d. h. auf die Zylinderfläche des Kolbens (50) der benachbarten und umgebenden Kolbenbaugruppe.

16. Wärmekraftmotor gemäß irgendeinem der vorherigen Ansprüche, **gekennzeichnet dadurch, dass** er aus einer Anzahl K von Zylindern, mit K größer oder gleich 2 besteht, wobei K mal N die Abschnitte der Antriebswellen (39) oder der Kurbelwellen (40) von jedem der N beweglichen Teile der K Zylinder parallel zur Achse Z des Motors ausgerichtet sind, sodass sie N mal koaxial sind und synchron angetrieben werden und außerhalb der Phase mit der Anzahl K von Zylindern sind und sie somit eine Anzahl N von identischen Antriebswellen oder Kurbelwellen (40), für jede einzelne um eine Achse, die Kurbelwellenlinie (99) heißt, bilden, mit Kurbelwellen, die aus K um 360°/K phasenverschobenen Kurbelzapfen (42) bestehen, wenn es ein 2-Takt-Motor ist oder aus um 720°/K phasenverschobenen Kurbelzapfen bestehen, wenn es ein 4-Takt-Motor ist.

17. Wärmekraftmotor gemäß irgendeinem der vorherigen Ansprüche, **dadurch gekennzeichnet, dass** er mindestens über eine Direkteinspritzdüse oder Zündkerze (58) verfügt, die an einem Kolben (50) oder einer Kolbenbaugruppe angebracht und abgedichtet ist, wobei der Einspritzdüsenkopf oder die Zündkerze durch eine Öffnung (58w) in die Zylinderfläche (51) der Kolbenbaugruppe in die Kammer (35) mündet und auf den Verbrennungsabschnitt der Zylinderfläche (51) für eine Zündkerze und eine Einspritzdüse eines Kompressionszündungsmotor systematisch ausstößt.

18. Wärmekraftmotor gemäß irgendeinem der vorherigen Ansprüche, **dadurch gekennzeichnet, dass** er mindestens eine dynamische Auswuchtvorrichtung umfasst, bestehend aus mindestens zwei Unwuchtmassen (81), die in regelmäßigen Drehintervallen um die Achse Z des Motors ausgewogen angeordnet sind und sich entsprechend den zur Achse Z des Motors parallelen Achsen drehen, wobei jede durch eine Antriebswelle (39) oder Kurbelwelle (40) über ein Zahnrad, das die mit der Kurbelwelle fest verbundene Unwuchtmasse (80) antreibt, und über ein Antriebsritzel der Unwuchtmasse (82u oder 82v, abhängig von den Oberschwingungen), das mit der Unwuchtmasse (81) verbunden ist, mit einer mittleren Drehzahl derselben Frequenz wie die Oberschwingung des Trägheitsschwingmoments entlang der Achse Z des Motors, der gedrosselt werden muss, angetrieben werden.

19. Wärmekraftmotor gemäß einem der vorherigen Ansprüche, **dadurch gekennzeichnet, dass** er mit einer Aufladungsvorrichtung (95) ausgestattet ist, die eine oder mehrere Komponenten umfasst, die kombiniert sein können oder nicht, oder identisch und redundant von der folgenden Gruppe sein können:
• Ein volumetrischer Kompressor am Einlass, der mechanisch mit einem festen Verhältnis von der Abtriebswelle des Motors (11) angetrieben wird,
• Ein elektrisch angetriebener volumetrischer Kompressor oder Zentrifugalkompressor;
• Ein Kompressionsgehäuse, das mit der Fahrgestellbaugruppe verbunden ist und das Volumen um die Kolbenbaugruppen für jeden Zylinder einschließt, und in dem das Ansauggas vor dem Ansaugkrümmer (20s) durchströmt und eine Kompression stattfindet, wenn das Volumen der Kammer (35) zunimmt;
• Ein einzelner Turbolader, wobei der Kompressor (97) die Gase des Ansaugkreislaufs komprimiert und die Turbine (96) die Abgase ausdehnt;
• Ein Turbolader, dessen mechanische Welle direkt an einem Elektromotor-Generator angeschlossen ist;
• Ein Turbolader, dessen Welle mechanisch über ein Reduziergetriebe mit der Abtriebswelle des Motors verbunden ist;
• Eine mechanische Verbundturbine, d. h. mechanisch mit der Abtriebswelle des Motors verbunden.
• Ein turbinenloser Auspuff, insbesondere für einen Einzylindermotor gemäß der Erfindung.
• Ein Ladeluftkühler, der die Gase kühlt, die nach einer Kompressionsstufe in den Motor eingelassen werden.
• Eine Abgasrückführungsschleife, die einen Teil der Abgase abführt, um sie wieder in die Ansauggase einzubinnden;
• Ein Abgasrückführungskühler, der den Teil der eingelassenen Gase aus den Abgasen kühlt.
• Ventile (94) zum Schließen von mindestens einem vorgelagerten Abgasstrang einer Abgaskreislaufturbine, die aus mehreren parallel geschalteten Turbinen besteht.

20. Wärmekraftmotor gemäß irgendeinem der vorherigen Ansprüche, charakterisiert dadurch, dass jede Kolbenbaugruppe durch das Schmieröl gekühlt wird, das unter Druck über mindestens einen in der Kurbelwelle (40) angeordneten Kanal zirkuliert und nach dem Erreichen des Ölstands im Kurbelzapfenlager (42) dann durch mehrere Kanäle innerhalb des Kolbens (50) bis in die Nähe der heißen Wände fließt, die die Verbrennungsabschnitte (48v) und Gleitabschnitte (48u) der Zylinderfläche (51) der Kolbenbaugruppe sowie die Abgasleitung (57i) sind, und dann, nachdem das Öl in den die Kolbenbaugruppen und Kurbelwellen (40) umgebenden Raum ausgestoßen wurde, wird es innerhalb eines mit der Fahrgestellbaugruppe verbunden Motorgehäuses eingeschlossen.

21. Wärmekraftmotor gemäß irgendeinem der vorherigen Ansprüche, charakterisiert dadurch, dass er für eine Vorrichtung aus der folgenden Gruppe verwendet wird:
• ein Land-, See- oder Luftfahrzeug,
• eine Motorantriebseinheit, bestehend aus einem Propeller in direktem Kontakt oder einem Rotor,
• eine Motorantriebseinheit, bestehend aus zwei koaxialen gegenläufigen Propellern in direktem Kontakt,
• einen seriellen oder parallelen Hybrid-Antriebsstrang, dessen Wärmekraftmotor ein elektrischer, pneumatisch oder hydraulischer Hybridmotor ist,
• eine Kraft-Wärme-Kopplungsvorrichtung, die aus mindestens einem zweiten thermodynamischen Motor mit Clausius-Rankine-Kreisprozess besteht,
• einen elektrischen Stromgenerator.

## Claims

1. Heat engine, internal combustion, alternating, having a fixed chassis assembly, distinguished by the fact that it comprises at least one elementary assembly called a cylinder, with center O specified on an axis Z of the motor, with the cylinder consisting of:
• A whole number N, where N is greater than or equal to 3, of moving parts that are likewise distributed at regular rotating intervals about axis Z of the motor, with each moving coupling consisting of at least the following components:
∘ A piston assembly, consisting of at least:
▪ one cylinder face (51), with its surface ruled all over and generally concave according to a sliding axis W referenced relative to the piston assembly, and around which it is curved, with this axis being perpendicular to axis Z of the motor.
▪ one sliding surface (52) whose intersection with one edge of the cylinder face (51) is a sharp edge line, known as front edge (53) and
▪ one sealing device comprising the sliding surface (52) .
∘ a cyclic drive and orientation mechanism (30), consisting of at least one drive shaft (39), in cyclic and monotone rotation, which drives and positions the piston assembly relative to the chassis assembly, according to a movement in a plane P that is perpendicular to axis Z of the motor,
• Cylinder in which the sliding surface (52) of the piston assembly of rank M, slides with contact on a sliding surface (48u) of the cylinder face (51) of the piston assembly of rank M-1, known as the adjacent and surrounding piston assembly, of the piston assembly of rank M known as the adjacent and surrounding piston assembly, and the sliding surface of the first piston assembly (52a) slides with contact on a sliding surface of the cylinder face (51d) of the piston assembly of rank N, M being a whole number taking the values of 1 through N, where the N cylinder faces (51a, 51b, 51c,...) of the N piston assemblies, and each of which alone defines, at the closest sealing device among them, about the center O of the cylinder, a working volume known as chamber (35),
∘ At all times in a cycle, all of the front edges N (53) of the N piston assemblies, cross in an upper cap (36s) and a lower cap (36i) located on axis Z of the motor, on either side of center O of the cylinder,
∘ During one cycle, the volume of chamber (35) reaches at least one minimum at the instant in the cycle known as the Top Dead Center and at least one maximum at the instant in the cycle known as the Bottom Dead Center,
∘ At the Top Dead Center, the volume of chamber (35) is outlined by the N portions, called the combustion sections (48v), cylinder faces (51a, 51b, 51c,...) of the N piston assemblies, with these combustion sections (48v) being adjacent to the sliding sections (48u),
• Cylinder consisting of a distribution device, that handles, during one cycle, exhaust, intake and confinement of gases in chamber (35),
The engine, consisting likewise of at least one synchronization device, that synchronizes, in frequency and phase, the N drive shafts (39) of the N cyclic drive and orientation mechanisms (30), depending on their rotational distribution about axis Z of the motor, for the same cylinder and synchronization device acting for each cylinder of the motor.

2. Heat engine, according to claim 1, distinguished by the fact that for the cyclic drive and orientation mechanism:
• The drive shaft (39) in cyclical rotation is a section of a crank arm of one single crankshaft (40), whose propellers (41) pivot inside crankshaft mounting frame (10), about an axis parallel to axis Z of the motor and produces a continuous, monotone rotation, of one revolution per cycle and whose crank pin (42), with axis parallel to the propellers (41), pivots inside the piston assembly, constituting a piston assembly drive mechanism;
• It comprises a piston assembly orientation mechanism (31) that connects it to the chassis assembly.

3. Heat engine, according to claim 2, distinguished by the fact that the orientation mechanism (31) of the piston assembly is a kinematic liaison known as a pivot slider, defined by a liaison slider between a slider (60u) of a specific slider trajectory (60), fixed and physically connected to the chassis assembly and between a moving component (61), moveable all along the length of the said slider (60u) and pivoting via a pivot connection known as a pivot slider (62) on the piston assembly about an axis parallel to axis Z of the motor, with the said slider trajectory (60) being curved and flat, in a plane that is perpendicular to axis Z of the motor.
The moving component (61) is part of the unit consisting of:
• a roller (61u), which rolls in the slider (60u) physically in the shape of a groove, according to the direction of contact on one or the other of the slider flanks (60v) in this groove, whose spacing holds the roller (61u) with minimum play, and where this roller's axis is the pivot slider (62),
• a sliding shoe (61v), which slides in the slider (60u) physically in the shape of a groove, against the slider flanks (60v) of this groove, whose spacing holds the said shoe with minimum play, and pivoting according to the pivot slider (62) on the piston assembly.
• a rolling shoe (61w), if equipped with rollers (61x), rolling in the slider (60u) physically in the shape of a groove, against the slider flanks (60v) in this groove, and whose spacing holds the said rolling shoe (61w) with minimum play, and pivoting according to the pivot slider (62) on the piston assembly.
• a sliding and rolling shoe, combination of the two preceding points, equipped with rollers (61x) positioned so that they ensure rolling contact with only one side against only one slider flank (60v), and ensure sliding of the other side against the other slider flank.

4. Heat engine, according to any one of the preceding claims, distinguished by the fact that for each cylinder, le distribution device consists of one intake and one exhaust device, which are distinct from each other, such as:
• Each intake or exhaust device consists of at least the following:
∘ one intake manifold (20s) or exhaust manifold (20i), that is rigidly connected to the chassis assembly, and having a flat face that is perpendicular to axis Z of the motor, on the side of center O of the cylinder;
∘ one rotary plate (22), flat, thin and perpendicular to axis Z of the motor, at a quasi-fixed distance from center O, driven in rotation about axis Z of the motor, in one direction or the other, at a mean rotational speed of one Nth of a rotation per cycle using a rotary plate drive mechanism (22), and having, of its two flat faces perpendicular to axis Z of the motor, a first flat face that slides against the flat face of intake manifold (20);
• For each intake or exhaust device, the intake manifold (20) and rotary plate (22) each comprise N apertures (21, 23) of a specified shape, that are distributed at regular rotating intervals about axis Z of the motor, making it possible to open and close the passage from the rotary plate (22) to the intake manifold (20), via their apertures (21, 23), depending on the instant in the cycle,
• Each intake or exhaust device consisting, in each piston assembly, of two transfer conduits (57): an exhaust transfer unit (57i) and an intake transfer unit (57s), whose end furthest away from the center O of the cylinder comprises a flat edge, called the transfer plate (64), that is perpendicular to axis Z of the motor, and which slides on the second flat face of the rotary plate (22), with the transfer units (57) being connected during a specified period during the cycle, at an instant that is close to Bottom Dead Center:
∘ From the same side as transfer unit (57), a transfer that was connected to, and therefore with the opening of one of the N apertures in rotary plate (22);
∘ On the other side from transfer unit (57), during a second specific period during the course of the cycle, transfer unit (57) is therefore connected with chamber (35), via an intake aperture (56s) or an exhaust aperture (56i), judiciously designed and placed on the sliding surface (48u) of the cylinder face (51) of the piston assembly, through the passage and positioning in front of this aperture of the sliding surface (52) of the adjacent piston assembly that slides on this sliding surface (48u) of the cylinder face (51).

5. Heat engine, according to claim 4, distinguished by the fact that the rotary plate drive mechanism (22) is a gearing whose toothed gear has a rotational axis Z of the motor and is integral to rotary plate (22), known as the rotary plate toothed gear (18) and meshing with this gear; either directly or via an intermediate pinion with a phasing that may be adjustable using a phase shifter arranged in the said rotary plate drive mechanism (22); the toothed pinion is integral to, and coaxial with, crankshaft (40), known as the rotary plate drive pinion (17).

6. Heat engine, according to any one of claims 4 or 5, distinguished by the fact that at least one intake or exhaust device that comprises a second thin, flat plate, known as the additional plate (24), which is fastened but adjustable, inserted doubly sliding according to two planes perpendicular to axis Z of the motor, between the rotary plate (22) and the intake manifold (20), such that, by the variation of its angular position about axis Z of the motor, and of the specific shape of its N apertures (25), distributed in regular rotational intervals about axis Z of the motor, in which the instants of opening and/or closing of the passages of transfer units (57) to intake manifold (20) may be sooner or later in the cycle of the motor, thus creating a variable distribution.

7. Heat engine, according to any one of claims 4 through 6, distinguished by the fact that the distribution device, due to the specific shape of the apertures of the intake and exhaust devices, implements the Miller-Atkinson cycle, in other words, a distribution diagram where the effective expansion volume (88v) is greater than the effective compression volume (88u).

8. Heat engine, according to any one of the preceding claims, distinguished by the fact that the synchronization device for the N cyclical drive and orientation mechanisms consists of an output shaft (11) with axis at axis Z of the motor, consisting of at least one toothed wheel (12) (pinion) with axis at axis Z of the motor, and which meshes with N toothed pinions (gears) known as satellites (15), each of which is rigidly connected or made of drive shaft (39) or crankshaft (40) material and coaxial.

9. Heat engine, according to claim 8, distinguished by the fact that, coaxial to output shaft (11), a second output shaft known as the contra-rotational shaft (11v), i.e. rotating in the direction opposite that of the output shaft (11) and surrounding it, and therefore pivoting along axis Z of the motor, comprises a crown gear (13), which is toothed and meshes internally, with N other satellite pinions known as additional satellites (16), each of which is rigidly connected or made of the same material as drive shafts (39) or crankshaft (40) and coaxial with them.

10. Heat engine, according to any one of the preceding claims, distinguished by the fact that the cylinder face (51) of at least one of the N piston assemblies has a sliding surface (48u) that is of a shape that is a part of the surface generated by the scan according to a straight translation of sliding axis W of a profile of piston face (54), contained in a plane, generally concave about center O of the cylinder.

11. Heat engine, according to claim 10, distinguished by the fact that the profile of piston face (54) is in the shape of a "V" with a rounded point, and which generates a sliding surface (48u) of the cylinder face (51) which is a part of a ruled surface consisting of two flat surfaces, which connects, in tangential continuity, a cylinder section with axis parallel to sliding axis W.

12. Heat engine, according to any one of the preceding claims, distinguished by the fact that the cylinder face (51) of at least one of the N piston assemblies has a combustion section (48v) that comprises, in its central zone and up to right next to its periphery, a portion of a cap that is substantially spherical or ovoid, known as a spherical cap (55), which is concave about the center O of the cylinder, and which when applied N times to the N piston assemblies forms, at the Top Dead Center, a chamber (35) that is largely spherical or ovoid in shape and which has, for its principal axis of revolution, axis Z of the motor and, as a center, the center O of the cylinder.

13. Heat engine, according to any one of the preceding claims, distinguished by the fact that the piston assembly consists of:
• a piston (50), consisting of:
∘ the external half-pivots of the pivot of the crank pin (42) of crankshaft (40) and of the pivot slider (62) of mobile component (61), pivots with axes that are parallel to axis Z of the motor,
∘ almost the entire surface of the cylinder face (51) of the piston assembly,
∘ Each transfer unit (57), intake (57s) and exhaust (57i), that is attached to the piston (50) or integral to it,
• The sealing device consisting therefore of the sliding surface (52) of the piston assembly, the front edge (53) of the piston assembly and the far end of the cylinder face (51) of the piston therefore, adjacent to the front edge (53) at least on the upper and lower edge portions (53s and 53i) where the upper and lower caps of the chamber (36s and 36i), connected to the piston by a slider-type kinematic connection, shift, enabling the translation of the sliding surface (52), the front edge (53) and the section of cylinder face (51) that is not connected to the piston, with translation along sliding axis W.

14. Heat engine, according to claim 13, distinguished by the fact that the sealing device is comprised:
• Of an edge segment (75) consisting of:
∘ The entire front edge (53) of the piston assembly,
∘ A section of the sliding surface (52) that is adjacent over the entire length of the front edge (53),
∘ The border of the cylinder face (51) of the piston assembly, adjacent to the upper (53s) and lower (53i) segments of front edge (53),
the said edge segment (75) is kinematically connected to piston (50), by being held in a piston groove (50), creating a slider-type kinematic connection that permits only straight translation of sliding axis W relative to piston (50) and which presses this latter onto the cylinder face (51) of the other piston facing it, i.e. the piston (50) of the adjacent and surrounding piston assembly, using a spring device,
• two labyrinth seals (76), one upper (76s) and one lower (76i), each one of which is arranged along or substantially parallel to the upper edge portions (53s) and lower edge portion (53i) of the front edge (53), with each portion supporting the trajectory of one of the chamber caps, upper (36s) or lower (36i), where each labyrinth seal (76):
∘ is defined over an elongated area and merges with cylinder face (51),
∘ is in contact with a corner of the edge segment (75), by enabling it to translate linearly according to a direction that is parallel to a portion of upper edge (53s) or lower edge (53i),
∘ is pressed against this edge segment (75), using a spring device,
∘ has relief grooves (77) over its entire length, which correspond and fit together with minimum play with grooves made in piston (50), permitting translational motion, in the direction of the fitting.

15. Heat engine, according to claim 14, distinguished by the fact that the sealing device also comprises one or more secondary section (s) (78), such that:
∘ its shape corresponds substantially to the shift of the edge segment (75) on the sliding surface (52),
∘ it comprises a section of the sliding surface (52), not adjacent to the front edge (53), but close to it over the entire length of the front edge (53),
∘ it/they is/are in contact (in contact by block), with edge segment (75), at least in the upper edge (53s) and lower edge (53i) sections, and establishing, with this edge segment (75) the sliding surface (52),
∘ it is kinematically connected to piston (50), by being held in a piston groove, creating a slider-type kinematic connection that permits only the translation of sliding axis W relative to piston (50) and which presses this said secondary segment (78) onto cylinder face (51) of the other piston facing it, i.e. of piston (50) of the adjacent and surrounding piston assembly, using a spring device.

16. Heat engine, according to any one of the preceding claims, distinguished by the fact that consisting of a number K of cylinders, with K being greater than or equal to 2, where the K times N drive shafts (39) or crankshaft sections (40) of each of the N moving parts of the K cylinders, are oriented parallels to axis Z of the motor in order to be N times coaxial, and are driven synchronous and out of phase of the number K of cylinders and therefore form a number N of identical drive shafts or identical crankshafts (40), for each one about an axis called the crankshaft line (99), with crankshafts then consisting of K crank pins (42) out of phase by 360°/K if it is a 2-stroke engine or 720°/K if it is a 4-stroke engine.

17. Heat engine, according to any one of the preceding claims, distinguished by the fact that it comprises at least one direct injector or ignition spark plug (58), mounted on a piston (50) or a piston assembly and mounted leak-proof, with the injector head or the ignition spark plug expelling into chamber (35) by an orifice (58w) in the cylinder face (51) of the piston assembly, expelling systematically onto the combustion section of cylinder face (51) for one spark plug and a compression ignition motor injector.

18. Heat engine, according to any one of the preceding claims, distinguished by the fact that they consist of at least one dynamic balancing device, consisting of at least two imbalancing masses (81) arranged at regular rotating intervals balanced about axis Z of the motor, and pivoting along axes that are parallel to axis Z of the motor, with each being driven in rotation by gearing with a drive shaft (39) or crankshaft (40), via a gear driving the imbalancing mass (80) that is integral to the crankshaft and via an imbalancing mass drive pinion (82u or 82v, depending on the harmonic) connected to imbalancing mass (81), at an average speed, of the same frequency as the harmonic of the inertial swinging moment along axis Z of the motor that needs to be attenuated.

19. Heat engine, according to any one of the preceding claims, distinguished by the fact that it is equipped with a booster device (95) consisting of one or more components, which may or may not be combined or identical and redundant, from the following group:
• A volumetric compressor at intake, driven mechanically with a fixed ratio by the motor's output shaft (11);
• A volumetric compressor or centrifuge, driven electrically;
• A compression housing, connected to the chassis assembly and entrapping, for each cylinder, the volume around the piston assemblies, in which the intake gas passes before the intake manifold (20s) and where compression occurs when the volume of chamber (35) increases;
• A single turbocompressor, where compressor (97) compresses the intake cycle gas, and turbine (96) expands the exhaust gases;
• A turbocompressor, whose mechanical shaft is connected directly to an electric motor-generator;
• A turbocompressor, whose shaft is connected mechanically to a reducer at the motor's output shaft;
• A compound mechanical turbine, i.e. mechanically connected to the motor's output shaft.
• A turbineless exhaust, in particular for a single-cylinder motor according to the invention.
• A booster air radiator, for cooling the gases admitted into the motor after a compression stage.
• An exhaust gas recirculation loop, which removes a fraction of exhaust gases to reintroduce it into the intake gases,
• An exhaust gas recirculation radiator, for cooling the fraction of gases admitted coming from exhaust gases.
• Valves (94) for closing at least one exhaust branch upstream from an exhaust circuit turbine, consisting of multiple turbines in parallel.

20. Heat engine, according to any one of the preceding claims, distinguished by the fact that each piston assembly is cooled by lubrication oil, circulating under pressure, via at least one canal arranged in crankshaft (40), and reaching the level of crank pin bearing (42) and then traveling through several channels, inside piston (50), up to the vicinity of the hot walls that are the combustion sections (48v) and sliding sections (48u) of cylinder face (51) of the piston assembly as well as the exhaust transfer unit (57i) and then, after the oil has been ejected into the space surrounding the piston assemblies and crankshafts (40), enclosed inside a motor housing connected to the chassis assembly.

21. Heat engine, according to any one of the preceding claims, distinguished by the fact that it is used for a device from the following group:
• A land-based, marine or air vehicle,
• moto-propulsion unit consisting of a propeller in direct contact or a rotor,
• moto-propulsion unit consisting of two coaxial contra-rotational propellers in direct contact,
• A hybrid traction chain, in series or in parallel, whose heat engine is a hybrid electrical, pneumatic or hydraulic,
• A cogeneration device consisting of at least one second Rankin Cycle thermodynamic motor,
• an electric power generator.
